# EUROPEAN PATENT APPLICATION

(11) **EP 4 851 756 A1**
(43) Date of publication of application: **09.12.2026**
(21) Application number: 26182697.8
(22) Date of filing: 02.06.2026
(51) Int. Cl.: G06F 3/01, G06F 3/04815

(54) **COLLABORATIVE MOVEMENT OF VIRTUAL OBJECTS WITHIN MULTI-USER COMMUNICATION SESSIONS**

(30) Priority: 06.06.2025 US 202563819130 P; 29.05.2026 US 202619692240
(71) Applicant: Apple Inc., Cupertino, CA 95014 (US)
(72) Inventor: KANNAN, Anish, Cupertino, 95014 (US); PICCOLO, Jacob A., Cupertino, 95014 (US); RODRIGUEZ, Alexander Burling, Woodside, 94062 (US); LEE, Kevin, Cupertino, 95014 (US); SMITH, Connor A., Cupertino, 95014 (US)
(74) Representative: Zacco Denmark A/S

(57) **Abstract**

Some examples of the disclosure are directed to systems and methods for moving a virtual object in a three-dimensional environment that is shared between collocated users within a multi-user communication session. Some examples of the disclosure are directed to systems and methods for moving virtual objects in a three-dimensional environment that is shared between collocated and non-collocated users within a multi-user communication session.

## Description

### Field of the Disclosure

This relates generally to systems and methods of collaboratively moving virtual objects in three-dimensional environments that are shared within multi-user communication sessions that include collocated and/or non-collocated users.

### Background of the Disclosure

Some computer graphical environments provide two-dimensional (2D) and/or three-dimensional (3D) environments where at least some objects displayed for a user's viewing are virtual and generated by a computer. In some examples, the three-dimensional environments are presented by multiple devices communicating in a multi-user communication session. In some examples, an avatar (e.g., a representation) of each non-collocated user participating in the multi-user communication session (e.g., via the computing devices) is displayed in the three-dimensional environment of the multi-user communication session. In some examples, content can be shared in the three-dimensional environment for viewing and interaction by multiple users participating in the multi-user communication session. In some examples, interacting with the shared content includes collaboratively moving the shared content in the three-dimensional environment.

### Summary of the Disclosure

Some examples of the disclosure are directed to systems and methods for moving a virtual object in a three-dimensional environment that is shared between collocated users within a multi-user communication session. In some examples, a method is performed at a first electronic device in communication with one or more displays and one or more input devices, wherein the first electronic device is collocated with a second electronic device in a physical environment. In some examples, while in a multi-user communication session with the second electronic device and while presenting, via the one or more displays, a shared object in a three-dimensional environment, wherein the shared object has a first orientation relative to a coordinate system of the three-dimensional environment, the first electronic device detects an indication of a request to move the shared object in the three-dimensional environment. In some examples, in response to detecting the indication, the first electronic device moves the shared object in the three-dimensional environment in accordance with the request. In some examples, in accordance with a determination that a movement of the shared object in the three-dimensional environment would cause a viewing angle associated with the shared object to exceed a threshold angle in the three-dimensional environment, wherein the viewing angle is determined based on a viewpoint of the first electronic device, a location of the shared object, and a reference associated with the shared object, the first electronic device presents the shared object with a second orientation, different from the first orientation, relative to the coordinate system of the three-dimensional environment. In some examples, in accordance with a determination that the movement of the shared object in the three-dimensional environment would cause the viewing angle associated with the shared object to remain within the threshold angle in the three-dimensional environment, the first electronic device maintains presentation of the shared object having the first orientation relative to the coordinate system of the three-dimensional environment.

Some examples of the disclosure are directed to systems and methods for moving virtual objects in a three-dimensional environment that is shared between collocated and non-collocated users within a multi-user communication session. In some examples, a method is performed at a first electronic device in communication with one or more displays and one or more input devices, wherein the first electronic device is collocated with a second electronic device in a physical environment. In some examples, while in a multi-user communication session with the second electronic device and a third electronic device, wherein the third electronic device is non-collocated with the first electronic device and the second electronic device in the physical environment, the first electronic device presents, via the one or more displays, a shared object and a visual representation of a user of the third electronic device in a three-dimensional environment, wherein the shared object and the visual representation of the user of the third electronic device are presented relative to a shared origin in the three-dimensional environment. In some examples, while presenting the shared object and the visual representation of the user of the third electronic device relative to the shared origin in the three-dimensional environment, the first electronic device detects an indication of a request to move the shared object in the three-dimensional environment. In some examples, in response to detecting the indication, the first electronic device moves the shared object in the three-dimensional environment in accordance with the request. In some examples, in accordance with a determination that the request to move the shared object includes user input provided by a user of the first electronic device, the first electronic device associates the shared origin in the three-dimensional environment with a first local origin that is associated with the first electronic device in the physical environment, such that the shared object is presented relative to the first local origin in the three-dimensional environment. In some examples, in accordance with a determination that the request to move the shared object includes user input provided by a user of the second electronic device, the first electronic device associates the shared origin in the three-dimensional environment with a second local origin, different from the first local origin, that is associated with the second electronic device in the physical environment, such that the shared object is presented relative to the second local origin in the three-dimensional environment.

The full descriptions of these examples are provided in the Drawings and the Detailed Description, and it is understood that this Summary does not limit the scope of the disclosure in any way.

### Brief Description of the Drawings

For improved understanding of the various examples described herein, reference should be made to the Detailed Description below along with the following drawings. Like reference numerals often refer to corresponding parts throughout the drawings.
FIG. 1 illustrates an electronic device presenting a three-dimensional environment according to some examples of the disclosure.
FIGs. 2A-2C illustrate block diagrams of example architectures for electronic devices or systems according to some examples of the disclosure.
FIG. 3 illustrates an example of a spatial group in a multi-user communication session that includes a plurality of electronic devices according to some examples of the disclosure.
FIGs. 4A-4M illustrate examples of moving a virtual object in a three-dimensional environment that is shared between collocated users within a multi-user communication session according to some examples of the disclosure.
FIGs. 5A-5H illustrate examples of moving virtual objects in a three-dimensional environment that is shared between collocated and non-collocated users within a multi-user communication session according to some examples of the disclosure.
FIGs. 6A-6C illustrate examples of moving a visual representation of a non-collocated user in a three-dimensional environment that is shared between collocated users and the non-collocated user within a multi-user communication session according to some examples of the disclosure.
FIG. 7 illustrates a flow diagram illustrating an example process for moving a virtual object in a three-dimensional environment that is shared between collocated users within a multi-user communication session according to some examples of the disclosure.
FIG. 8 illustrates a flow diagram illustrating an example process for moving virtual objects in a three-dimensional environment that is shared between collocated and non-collocated users within a multi-user communication session according to some examples of the disclosure.

### Detailed Description

Some examples of the disclosure are directed to systems and methods for moving a virtual object in a three-dimensional environment that is shared between collocated users within a multi-user communication session. In some examples, a method is performed at a first electronic device in communication with one or more displays and one or more input devices, wherein the first electronic device is collocated with a second electronic device in a physical environment. In some examples, while in a multi-user communication session with the second electronic device and while presenting, via the one or more displays, a shared object in a three-dimensional environment, wherein the shared object has a first orientation relative to a coordinate system of the three-dimensional environment, the first electronic device detects an indication of a request to move the shared object in the three-dimensional environment. In some examples, in response to detecting the indication, the first electronic device moves the shared object in the three-dimensional environment in accordance with the request. In some examples, in accordance with a determination that a movement of the shared object in the three-dimensional environment would cause a viewing angle associated with the shared object to exceed a threshold angle in the three-dimensional environment, wherein the viewing angle is determined based on a viewpoint of the first electronic device, a location of the shared object, and a reference associated with the shared object, the first electronic device presents the shared object with a second orientation, different from the first orientation, relative to the coordinate system of the three-dimensional environment. In some examples, in accordance with a determination that the movement of the shared object in the three-dimensional environment would cause the viewing angle associated with the shared object to remain within the threshold angle in the three-dimensional environment, the first electronic device maintains presentation of the shared object having the first orientation relative to the coordinate system of the three-dimensional environment.

Some examples of the disclosure are directed to systems and methods for moving virtual objects in a three-dimensional environment that is shared between collocated and non-collocated users within a multi-user communication session. In some examples, a method is performed at a first electronic device in communication with one or more displays and one or more input devices, wherein the first electronic device is collocated with a second electronic device in a physical environment. In some examples, while in a multi-user communication session with the second electronic device and a third electronic device, wherein the third electronic device is non-collocated with the first electronic device and the second electronic device in the physical environment, the first electronic device presents, via the one or more displays, a shared object and a visual representation of a user of the third electronic device in a three-dimensional environment, wherein the shared object and the visual representation of the user of the third electronic device are presented relative to a shared origin in the three-dimensional environment. In some examples, while presenting the shared object and the visual representation of the user of the third electronic device relative to the shared origin in the three-dimensional environment, the first electronic device detects an indication of a request to move the shared object in the three-dimensional environment. In some examples, in response to detecting the indication, the first electronic device moves the shared object in the three-dimensional environment in accordance with the request. In some examples, in accordance with a determination that the request to move the shared object includes user input provided by a user of the first electronic device, the first electronic device associates the shared origin in the three-dimensional environment with a first local origin that is associated with the first electronic device in the physical environment, such that the shared object is presented relative to the first local origin in the three-dimensional environment. In some examples, in accordance with a determination that the request to move the shared object includes user input provided by a user of the second electronic device, the first electronic device associates the shared origin in the three-dimensional environment with a second local origin, different from the first local origin, that is associated with the second electronic device in the physical environment, such that the shared object is presented relative to the second local origin in the three-dimensional environment.

In some examples, a spatial group or state in the multi-user communication session denotes a spatial arrangement or template that dictates locations of users and content that are located in or otherwise associated with the spatial group. In some examples, users in the same spatial group within the multi-user communication session experience spatial truth according to the spatial arrangement of the spatial group. In some examples, when the user of the first electronic device is in a first spatial group and the user of the second electronic device is in a second spatial group in the multi-user communication session, the users experience spatial truth that is localized to their respective spatial groups. In some examples, while the user of the first electronic device and the user of the second electronic device are grouped into separate spatial groups or states within the multi-user communication session, if the first electronic device and the second electronic device return to the same operating state, the user of the first electronic device and the user of the second electronic device are regrouped into the same spatial group within the multi-user communication session.

As used herein, a hybrid spatial group corresponds to a group or number of participants (e.g., users) in a multi-user communication session in which at least a subset of the participants is non-collocated in a physical environment. For example, as described via one or more examples in this disclosure, a hybrid spatial group includes at least two participants who are collocated in a first physical environment and at least one participant who is non-collocated with the at least two participants in the first physical environment (e.g., the at least one participant is located in a second physical environment, different from the first physical environment). In some examples, a hybrid spatial group in the multi-user communication session has a spatial arrangement that dictates locations of users and content that are located in the spatial group. In some examples, users in the same hybrid spatial group within the multi-user communication session experience spatial truth according to the spatial arrangement of the spatial group, as similarly discussed above.

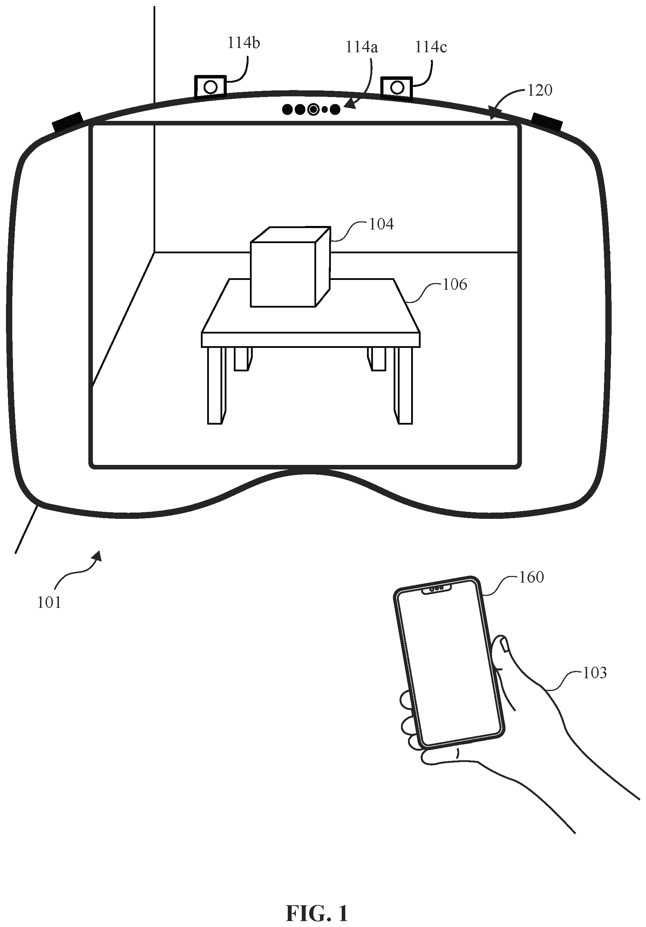

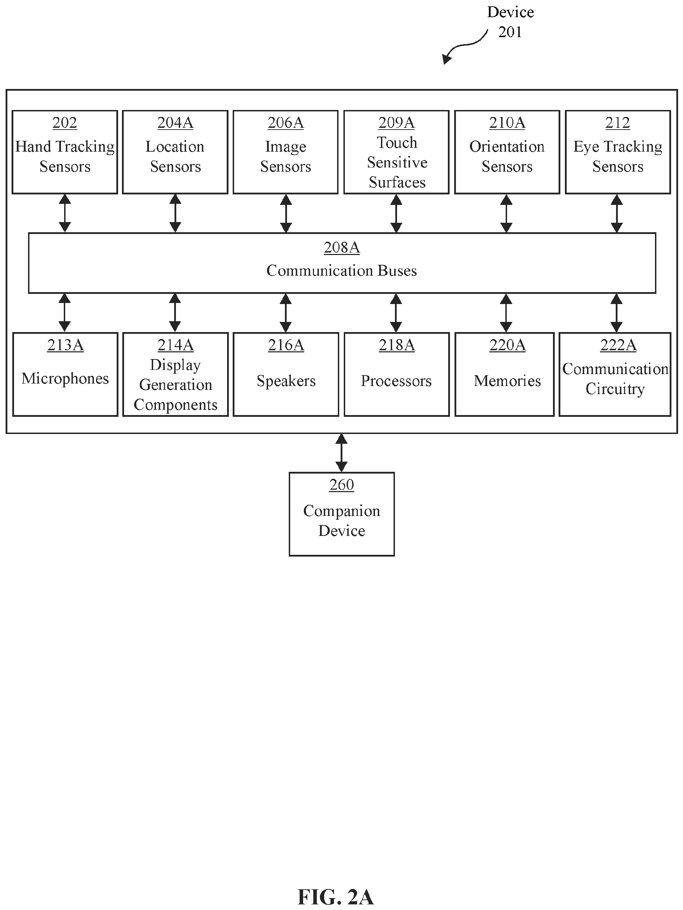

FIG. 1 illustrates an electronic device 101 presenting three-dimensional environment (e.g., an extended reality (XR) environment or a computer-generated reality (CGR) environment, optionally including representations of physical and/or virtual objects), according to some examples of the disclosure. In some examples, as shown in FIG. 1, electronic device 101 is a head-mounted display or other head-mountable device configured to be worn on a head of a user of the electronic device 101. Examples of electronic device 101 are described below with reference to the architecture block diagram of FIG. 2A. As shown in FIG. 1, electronic device 101 and table 106 are located in a physical environment. The physical environment may include physical features such as a physical surface (e.g., floor, walls) or a physical object (e.g., table, lamp, etc.). In some examples, electronic device 101 may be configured to detect and/or capture images of the physical environment including table 106 (illustrated in the field of view of electronic device 101).

In some examples, as shown in FIG. 1, electronic device 101 includes one or more internal image sensors 114a oriented towards a face of the user (e.g., eye tracking cameras as described below with reference to FIGs. 2A-2B). In some examples, internal image sensors 114a are used for eye tracking (e.g., detecting a gaze of the user). Internal image sensors 114a are optionally arranged on the left and right portions of display 120 to enable eye tracking of the user's left and right eyes. In some examples, electronic device 101 also includes external image sensors 114b and 114c facing outwards from the user to detect and/or capture the physical environment of the electronic device 101 and/or movements of the user's hands or other body parts.

In some examples, display 120 has a field of view visible to the user. In some examples, the field of view visible to the user is the same as a field of view of external image sensors 114b and 114c. For example, when display 120 is optionally part of a head-mounted device, the field of view of display 120 is optionally the same as or similar to the field of view of the user's eyes. In some examples, the field of view visible to the user is different from a field of view of external image sensors 114b and 114c (e.g., narrower than the field of view of external image sensors 114b and 114c). In other examples, the field of view of display 120 may be smaller than the field of view of the user's eyes. A viewpoint of a user determines what content is visible in the field of view, a viewpoint generally specfies a location and a direction relative to the three-dimensional environment. As the viewpoint of a user shifts, the field of view of the three-dimensional environment will also shift accordingly. In some examples, electronic device 101 may be an optical see-through device in which display 120 is a transparent or translucent display through which portions of the physical environment may be directly viewed. In some examples, display 120 may be included within a transparent lens and may overlap all or a portion of the transparent lens. In other examples, electronic device may be a video-passthrough device in which display 120 is an opaque display configured to display images of the physical environment using images captured by external image sensors 114b and 114c. While a single display is shown in FIG. 1, it is understood that display 120 optionally includes more than one display. For example, display 120 optionally includes a stereo pair of displays (e.g., left and right display panels for the left and right eyes of the user, respectively) having displayed outputs that are merged (e.g., by the user's brain) to create the view of the content shown in FIG. 1. In some examples, as discussed in more detail below with reference to FIGs. 2A-2B, the display 120 includes or corresponds to a transparent or translucent surface (e.g., a lens) that is not equipped with display capability (e.g., and is therefore unable to generate and display the virtual object 104) and alternatively presents a direct view of the physical environment in the user's field of view (e.g., the field of view of the user's eyes).

In some examples, the electronic device 101 is configured to display (e.g., in response to a trigger) a virtual object 104 in the three-dimensional environment. Virtual object 104 is represented by a cube illustrated in FIG. 1, which is not present in the physical environment, but is displayed in the three-dimensional environment positioned on the top of table 106 (e.g., real-world table or a representation thereof). Optionally, virtual object 104 is displayed on the surface of the table 106 in the three-dimensional environment displayed via the display 120 of the electronic device 101 in response to detecting the planar surface of table 106 in the physical environment 100.

It is understood that virtual object 104 is a representative virtual object and one or more different virtual objects (e.g., of various dimensionality such as two-dimensional or other three-dimensional virtual objects) can be included and rendered in a three-dimensional environment. For example, the virtual object can represent an application or a user interface displayed in the three-dimensional environment. In some examples, the virtual object can represent content corresponding to the application and/or displayed via the user interface in the three-dimensional environment. In some examples, the virtual object 104 is optionally configured to be interactive and responsive to user input (e.g., air gestures, such as air pinch gestures, air tap gestures, and/or air touch gestures), such that a user may virtually touch, tap, move, rotate, or otherwise interact with, the virtual object 104.

As discussed herein, one or more air pinch gestures performed by a user (e.g., with hand 103 in FIG. 1) are detected by one or more input devices of electronic device 101 and interpreted as one or more user inputs directed to content displayed by electronic device 101. Additionally or alternatively, in some examples, the one or more user inputs interpreted by the electronic device 101 as being directed to content displayed by electronic device 101 (e.g., the virtual object 104) are detected via one or more hardware input devices (e.g., controllers, touch pads, proximity sensors, buttons, sliders, knobs, etc.) rather than via the one or more input devices that are configured to detect air gestures, such as the one or more air pinch gestures, performed by the user. Such depiction is intended to be exemplary rather than limiting; the user optionally provides user inputs using different air gestures and/or using other forms of input.

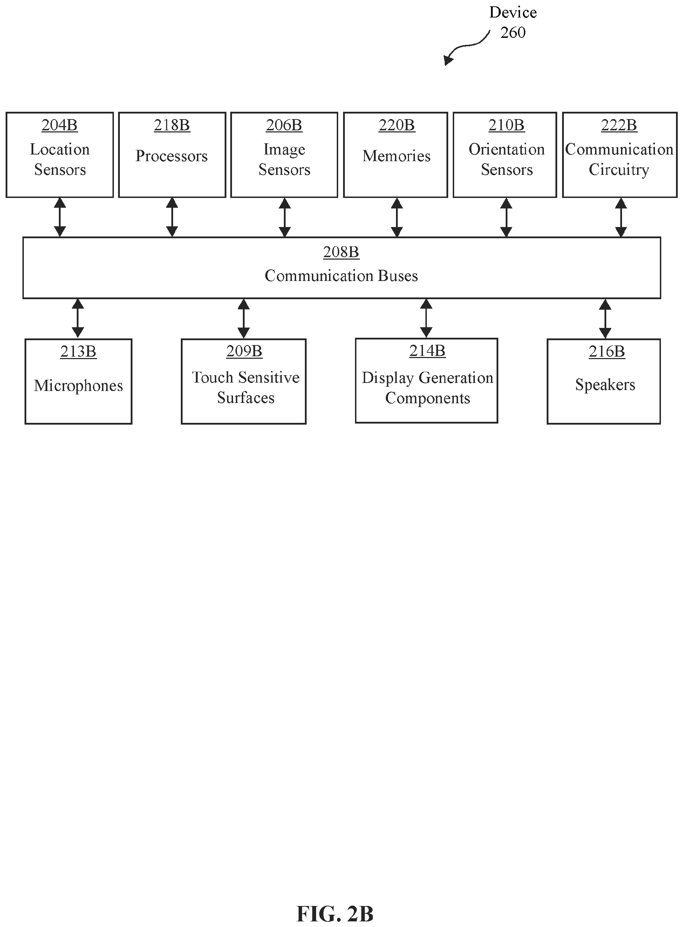

In some examples, the electronic device 101 may be configured to communicate with a second electronic device, such as a companion device. For example, as illustrated in FIG. 1, the electronic device 101 is optionally in communication with electronic device 160. In some examples, electronic device 160 corresponds to a mobile electronic device, such as a smartphone, a tablet computer, a smart watch, a laptop computer, or other electronic device. In some examples, electronic device 160 corresponds to a non-mobile electronic device, which is generally stationary and not easily moved within the physical environment (e.g., desktop computer, server, etc.). Additional examples of electronic device 160 are described below with reference to the architecture block diagram of FIG. 2B. In some examples, the electronic device 101 and the electronic device 160 are associated with a same user. For example, in FIG. 1, the electronic device 101 may be positioned on (e.g., mounted to) a head of a user and the electronic device 160 may be positioned near electronic device 101, such as in a hand 103 of the user (e.g., the hand 103 is holding the electronic device 160), a pocket or bag of the user, or a surface near the user. The electronic device 101 and the electronic device 160 are optionally associated with a same user account of the user (e.g., the user is logged into the user account on the electronic device 101 and the electronic device 160). Additional details regarding the communication between the electronic device 101 and the electronic device 160 are provided below with reference to FIGs. 2A-2C.

In some examples, displaying an object in a three-dimensional environment is caused by or enables interaction with one or more user interface objects in the three-dimensional environment. For example, initiation of display of the object in the three-dimensional environment can include interaction with one or more virtual options/affordances displayed in the three-dimensional environment. In some examples, a user's gaze may be tracked by the electronic device as an input for identifying one or more virtual options/affordances targeted for selection when initiating display of an object in the three-dimensional environment. For example, gaze can be used to identify one or more virtual options/affordances targeted for selection using another selection input. In some examples, a virtual option/affordance may be selected using hand-tracking input detected via an input device in communication with the electronic device. In some examples, objects displayed in the three-dimensional environment may be moved and/or reoriented in the three-dimensional environment in accordance with movement input detected via the input device.

In the descriptions that follows, an electronic device that is in communication with one or more displays and one or more input devices is described. It is understood that the electronic device optionally is in communication with one or more other physical user-interface devices, such as a touch-sensitive surface, a physical keyboard, a mouse, a joystick, a hand tracking device, an eye tracking device, a stylus, etc. Further, as described above, it is understood that the described electronic device, display and touch-sensitive surface are optionally distributed between two or more devices. Therefore, as used in this disclosure, information displayed on the electronic device or by the electronic device is optionally used to describe information outputted by the electronic device for display on a separate display device (touch-sensitive or not). Similarly, as used in this disclosure, input received on the electronic device (e.g., touch input received on a touch-sensitive surface of the electronic device, or touch input received on the surface of a stylus) is optionally used to describe input received on a separate input device, from which the electronic device receives input information.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, a television channel browsing application, and/or a digital video player application.

FIGs. 2A-2C illustrate block diagrams of example architectures for electronic devices or systems according to some examples of the disclosure. In some examples, electronic device 201 and/or electronic device 260 include one or more electronic devices. For example, the electronic device 201 may be a portable device, an auxiliary device in communication with another device, a head-mounted display, a head-worn speaker, etc., respectively. In some examples, electronic device 201 corresponds to electronic device 101 described above with reference to FIG. 1. In some examples, electronic device 260 corresponds to electronic device 160 described above with reference to FIG. 1.

As illustrated in FIG. 2A, the electronic device 201 optionally includes one or more sensors, such as one or more hand tracking sensors 202, one or more location sensors 204A, one or more image sensors 206A (optionally corresponding to internal image sensors 114a and/or external image sensors 114b and 114c in FIG. 1), one or more touch-sensitive surfaces 209A, one or more motion and/or orientation sensors 210A, one or more eye tracking sensors 212, one or more microphones 213A or other audio sensors, one or more body tracking sensors (e.g., torso and/or head tracking sensors), etc. The electronic device 201 optionally includes one or more output devices, such as one or more display generation components 214A, optionally corresponding to display 120 in FIG. 1, one or more speakers 216A, one or more haptic output devices (not shown), etc. The electronic device 201 optionally includes one or more processors 218A, one or more memories 220A, and/or communication circuitry 222A. One or more communication buses 208A are optionally used for communication between the above-mentioned components of electronic device 201.

Additionally, the electronic device 260 optionally includes the same or similar components as the electronic device 201. For example, as shown in FIG. 2B, the electronic device 260 optionally includes one or more location sensors 204B, one or more image sensors 206B, one or more touch-sensitive surfaces 209B, one or more orientation sensors 210B, one or more microphones 213B, one or more display generation components 214B, one or more speakers 216B, one or more processors 218B, one or more memories 220B, and/or communication circuitry 222B. One or more communication buses 208B are optionally used for communication between the above-mentioned components of electronic device 260.

The electronic devices 201 and 260 are optionally configured to communicate via a wired or wireless connection (e.g., via communication circuitry 222A, 222B) between the two electronic devices. For example, as indicated in FIG. 2A, the electronic device 260 may function as a companion device to the electronic device 201. For example, in some examples, the electronic device 260 processes sensor inputs from electronic devices 201 and 260 and/or generates content for display using display generation components 214A of electronic device 201.

Communication circuitry 222A, 222B optionally includes circuitry for communicating with electronic devices, networks, such as the Internet, intranets, a wired network and/or a wireless network, cellular networks, and wireless local area networks (LANs). Communication circuitry 222A, 222B optionally includes circuitry for communicating using near-field communication (NFC) and/or short-range communication, such as Bluetooth^{®}, etc. In some examples, communication circuitry 222A, 222B includes or supports Wi-Fi (e.g., an 802.11 protocol), Ethernet, ultra-wideband ("UWB"), high frequency systems (e.g., 900 MHz, 2.4 GHz, and 5.6 GHz communication systems), or any other communications protocol, or any combination thereof.

One or more processors 218A, 218B include one or more general processors, one or more graphics processors, and/or one or more digital signal processors. In some examples, one or more processors 218A, 218B include one or more microprocessors, one or more central processing units, one or more application-specific integrated circuits, one or more field-programmable gate arrays, one or more programmable logic devices, or a combination of such devices. In some examples, memories 220A and/or 220B are a non-transitory computer-readable storage medium (e.g., flash memory, random access memory, or other volatile or nonvolatile memory or storage) that stores computer-readable instructions configured to be executed by the one or more processors 218A, 218B to perform the techniques, processes, and/or methods described herein. In some examples, memories 220A and/or 220B can include more than one non-transitory computer-readable storage medium. A non-transitory computer-readable storage medium can be any medium (e.g., excluding a signal) that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on compact disc (CD), digital versatile disc (DVD), or Blu-ray technologies, as well as persistent solid-state memory such as flash, solid-state drives, and the like.

In some examples, one or more display generation components 214A, 214B include a single display (e.g., a liquid-crystal display (LCD), organic light-emitting diode (OLED), or other types of display). In some examples, the one or more display generation components 214A, 214B include multiple displays. In some examples, the one or more display generation components 214A, 214B can include a display with touch capability (e.g., a touch screen), a projector, a holographic projector, a retinal projector, a transparent or translucent display, etc. In some examples, the electronic device does not include one or more display generation components 214A or 214B. For example, instead of the one or more display generation components 214A or 214B, some electronic devices include transparent or translucent lenses or other surfaces that are not configured to display or present virtual content. However, it should be understood that, in such instances, the electronic device 201 and/or the electronic device 260 are optionally equipped with one or more of the other components illustrated in FIGs. 2A and 2B and described herein, such as the one or more hand tracking sensors 202, one or more eye tracking sensors 212, one or more image sensors 206A, and/or the one or more motion and/or orientations sensors 210A. Alternatively, in some examples, the one or more display generation components 214A or 214B are provided separately from the electronic devices 201 and/or 260. For example, the one or more display generation components 214A, 214B are in communication with the electronic device 201 (and/or electronic device 260), but are not integrated with the electronic device 201 and/or electronic device 260 (e.g., within a housing of the electronic devices 201, 260). In some examples, electronic devices 201 and 260 include one or more touch-sensitive surfaces 209A and 209B, respectively, for receiving user inputs, such as tap inputs and swipe inputs or other gestures (e.g., hand-based or finger-based gestures). In some examples, the one or more display generation components 214A, 214B and the one or more touch-sensitive surfaces 209A, 209B form one or more touch-sensitive displays (e.g., a touch screen integrated with each of electronic devices 201 and 260 or external to each of electronic devices 201 and 260 that is in communication with each of electronic devices 201 and 260).

Electronic devices 201 and 260 optionally include one or more image sensors 206A and 206B, respectively. The one or more image sensors 206A, 206B optionally include one or more visible light image sensors, such as charged coupled device (CCD) sensors, and/or complementary metal-oxide-semiconductor (CMOS) sensors operable to obtain images of physical objects from the real-world environment. The one or more image sensors 206A, 206B also optionally include one or more infrared (IR) sensors, such as a passive or an active IR sensor, for detecting infrared light from the real-world environment. For example, an active IR sensor includes an IR emitter for emitting infrared light into the real-world environment. The one or more image sensors 206A, 206B also optionally include one or more cameras configured to capture movement of physical objects in the real-world environment. The one or more image sensors 206A, 206B also optionally include one or more depth sensors configured to detect the distance of physical objects from electronic device 201, 260. In some examples, information from one or more depth sensors can allow the device to identify and differentiate objects in the real-world environment from other objects in the real-world environment. In some examples, one or more depth sensors can allow the device to determine the texture and/or topography of objects in the real-world environment. In some examples, the one or more image sensors 206A or 206B are included in an electronic device different from the electronic devices 201 and/or 260. For example, the one or more image sensors 206A, 206B are in communication with the electronic device 201, 260, but are not integrated with the electronic device 201, 260 (e.g., within a housing of the electronic device 201, 260). Particularly, in some examples, the one or more cameras of the one or more image sensors 206A, 206B are integrated with and/or coupled to one or more separate devices from the electronic devices 201 and/or 260 (e.g., but are in communication with the electronic devices 201 and/or 260), such as one or more input and/or output devices (e.g., one or more speakers and/or one or more microphones, such as earphones or headphones) that include the one or more image sensors 206A, 206B. In some examples, electronic device 201 or electronic device 260 corresponds to a head-worn speaker (e.g., headphones or earbuds). In such instances, the electronic device 201 or the electronic device 260 is equipped with a subset of the other components illustrated in FIGs. 2A and 2B and described herein. In some such examples, the electronic device 201 or the electronic device 260 is equipped with one or more image sensors 206A, 206B, the one or more motion and/or orientations sensors 210A, 210B, and/or speakers 216A, 216B.

In some examples, electronic device 201, 260 uses CCD sensors, event cameras, and depth sensors in combination to detect the physical environment around electronic device 201, 260. In some examples, the one or more image sensors 206A, 206B include a first image sensor and a second image sensor. The first image sensor and the second image sensor work in tandem and are optionally configured to capture different information of physical objects in the real-world environment. In some examples, the first image sensor is a visible light image sensor, and the second image sensor is a depth sensor. In some examples, electronic device 201, 260 uses the one or more image sensors 206A, 206B to detect the position and orientation of electronic device 201, 260 and/or the one or more display generation components 214A, 214B in the real-world environment. For example, electronic device 201, 260 uses the one or more image sensors 206A, 206B to track the position and orientation of the one or more display generation components 214A, 214B relative to one or more fixed objects in the real-world environment.

In some examples, electronic devices 201 and 260 include one or more microphones 213A and 213B, respectively, or other audio sensors. Electronic device 201, 260 optionally uses the one or more microphones 213A, 213B to detect sound from the user and/or the real-world environment of the user. In some examples, the one or more microphones 213A, 213B include an array of microphones (e.g., a plurality of microphones) that optionally operate in tandem, such as to identify ambient noise or to locate the source of sound in space of the real-world environment.

Electronic devices 201 and 260 include one or more location sensors 204A and 204B, respectively, for detecting a location of electronic device 201 and/or the one or more display generation components 214A and a location of electronic device 260 and/or the one or more display generation components 214B, respectively. For example, the one or more location sensors 204A, 204B can include a global positioning system (GPS) receiver that receives data from one or more satellites and allows electronic device 201, 260 to determine the absolute position of the electronic device in the physical world.

Electronic devices 201 and 260 include one or more orientation sensors 210A and 210B, respectively, for detecting orientation and/or movement of electronic device 201 and/or the one or more display generation components 214A and orientation and/or movement of electronic device 260 and/or the one or more display generation components 214B, respectively. For example, electronic device 201, 260 uses the one or more orientation sensors 210A, 210B to track changes in the position and/or orientation of electronic device 201, 260 and/or the one or more display generation components 214A, 214B, such as with respect to physical objects in the real-world environment. The one or more orientation sensors 210A, 210B optionally include one or more gyroscopes and/or one or more accelerometers.

Electronic device 201 includes one or more hand tracking sensors 202 and/or one or more eye tracking sensors 212, in some examples. It is understood, that although referred to as hand tracking or eye tracking sensors, that electronic device 201 additionally or alternatively optionally includes one or more other body tracking sensors, such as one or more leg, one or more torso and/or one or more head tracking sensors. The one or more hand tracking sensors 202 are configured to track the position and/or location of one or more portions of the user's hands, and/or motions of one or more portions of the user's hands with respect to the three-dimensional environment, relative to the one or more display generation components 214A, and/or relative to another defined coordinate system. The one or more eye tracking sensors 212 are configured to track the position and movement of a user's gaze (e.g., a user's attention, including eyes, face, or head, more generally) with respect to the real-world or three-dimensional environment and/or relative to the one or more display generation components 214A. In some examples, the one or more hand tracking sensors 202 and/or the one or more eye tracking sensors 212 are implemented together with the one or more display generation components 214A. In some examples, the one or more hand tracking sensors 202 and/or the one or more eye tracking sensors 212 are implemented separate from the one or more display generation components 214A. In some examples, electronic device 201 alternatively does not include the one or more hand tracking sensors 202 and/or the one or more eye tracking sensors 212. In some such examples, the one or more display generation components 214A may be utilized by the electronic device 260 to provide a three-dimensional environment and the electronic device 260 may utilize input and other data gathered via the other one or more sensors (e.g., the one or more location sensors 204A, the one or more image sensors 206A, the one or more touch-sensitive surfaces 209A, the one or more motion and/or orientation sensors 210A, and/or the one or more microphones 213A or other audio sensors) of the electronic device 201 as input and data that is processed by the one or more processors 218B of the electronic device 260. Additionally or alternatively, electronic device 260 optionally does not include other components shown in FIG. 2B, such as the one or more location sensors 204B, the one or more image sensors 206B, the one or more touch-sensitive surfaces 209B, etc. In some such examples, the one or more display generation components 214A may be utilized by the electronic device 260 to provide a three-dimensional environment and the electronic device 260 may utilize input and other data gathered via the one or more motion and/or orientation sensors 210A (and/or the one or more microphones 213A) of the electronic device 201 as input.

In some examples, the one or more hand tracking sensors 202 (and/or other body tracking sensors, such as leg, torso and/or head tracking sensors) can use the one or more image sensors 206 (e.g., one or more IR cameras, 3D cameras, depth cameras, etc.) that capture three-dimensional information from the real-world including one or more body parts (e.g., hands, legs, or torso of a human user). In some examples, the hands can be resolved with sufficient resolution to distinguish fingers and their respective positions. In some examples, the one or more image sensors 206A are positioned relative to the user to define a field of view of the one or more image sensors 206A and an interaction space in which finger/hand position, orientation and/or movement captured by the image sensors are used as inputs (e.g., to distinguish from a user's resting hand or other hands of other persons in the real-world environment). Tracking the fingers/hands for input (e.g., gestures, touch, tap, etc.) can be advantageous in that it does not require the user to touch, hold or wear any sort of beacon, sensor, or other marker.

In some examples, the one or more eye tracking sensors 212 include at least one eye tracking camera (e.g., IR cameras) and/or illumination sources (e.g., IR light sources, such as LEDs) that emit light towards a user's eyes. The eye tracking cameras may be pointed towards a user's eyes to receive reflected IR light from the light sources directly or indirectly from the eyes. In some examples, both eyes are tracked separately by respective eye tracking cameras and illumination sources, and a focus/gaze can be determined from tracking both eyes. In some examples, one eye (e.g., a dominant eye) is tracked by one or more respective eye tracking cameras/illumination sources.

Electronic devices 201 and 260 are not limited to the components and configuration of FIGs. 2A-2B, but can include fewer, other, or additional components in multiple configurations. In some examples, electronic device 201 and/or electronic device 260 can each be implemented between multiple electronic devices (e.g., as a system). In some such examples, each of (or more of) the electronic devices may include one or more of the same components discussed above, such as various sensors, one or more display generation components, one or more speakers, one or more processors, one or more memories, and/or communication circuitry. A person or persons using electronic device 201 and/or electronic device 260, is optionally referred to herein as a user or users of the device.

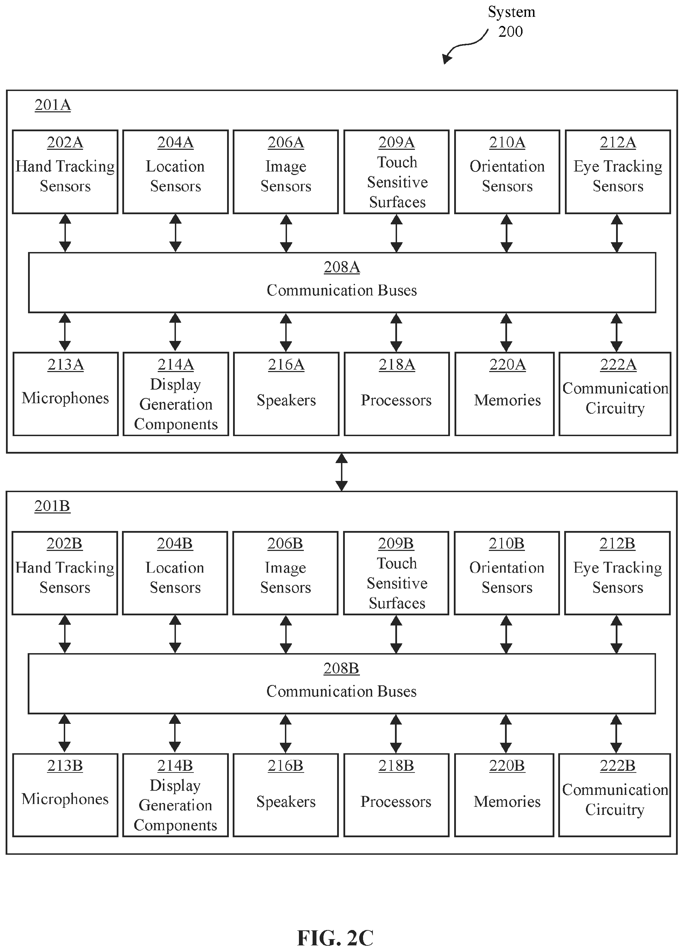

FIG. 2C illustrates a block diagram of an example architecture for a system 200 according to some examples of the disclosure. In some examples, system 200 includes multiple electronic devices. For example, in FIG. 2C, the system 200 includes a first electronic device 201A and a second electronic device 201B, wherein the first electronic device 201A and the second electronic device 201B are in communication with each other. In some examples, the first electronic device 201A and the second electronic device 201B correspond to and/or have one or more characteristics of the electronic device 201 described above with reference to FIG. 2A. In some examples, the first electronic device 201A and the second electronic device 201B correspond to electronic device 101 described above with reference to FIG. 1. For example, as shown in FIG. 2C, the first electronic device 201A optionally includes various sensors (e.g., the one or more hand tracking sensors 202A, the one or more location sensors 204A, the one or more image sensors 206A, the one or more touch-sensitive surfaces 209A, the one or more motion and/or orientation sensors 210A, the one or more eye tracking sensors 212A, the one or more microphones 213A or other audio sensors, the one or more body tracking sensors (e.g., torso and/or head tracking sensors), the one or more display generation components 214A, the one or more speakers 216A, the one or more processors 218A, the one or more memories 220A, and/or the communication circuitry 222A described above with reference to FIGs. 2A-2B. Similarly, in some examples, the second electronic device 201B optionally includes various sensors (e.g., one or more hand tracking sensors 202B, the one or more location sensors 204B, the one or more image sensors 206B, the one or more touch-sensitive surfaces 209B, the one or more motion and/or orientation sensors 210B, one or more eye tracking sensors 212B, the one or more microphones 213B or other audio sensors, one or more body tracking sensors (e.g., torso and/or head tracking sensors), the one or more display generation components 214B, one or more speakers 216B, the one or more processors 218B, the one or more memories 220B, and/or the communication circuitry 222B described above with reference to FIGs. 2A-2B. In some examples, the one or more hand tracking sensors 202B have one or more characteristics of the one or more hand tracking sensors 202A discussed above. In some examples, the one or more eye tracking sensors 212B have one or more characteristics of the one or more eye tracking sensors 212A. One or more communication buses 208A and 208B are optionally used for communication between the above-mentioned components of first electronic device 201A and second electronic device 201B, respectively. First electronic device 201A and second electronic device 201B optionally communicate via a wired or wireless connection (e.g., via the communication circuitry 222A, 222B) between the two electronic devices.

System 200 is not limited to the components and configuration of FIG. 2C, but can include fewer, other, or additional components and/or electronic devices in multiple configurations. In some examples, system 200 can be implemented in a single device. A person or persons using system 200, is optionally referred to herein as a user or users of the system and/or the devices or devices.

Attention is now directed towards exemplary concurrent displays of a three-dimensional environment on a first electronic device (e.g., corresponding to electronic device 201A) and a second electronic device (e.g., corresponding to electronic device 201B). As discussed below, the first electronic device may be in communication with the second electronic device in a multi-user communication session. In some examples, an avatar (e.g., a representation of) a user of the first electronic device may be displayed in the three-dimensional environment at the second electronic device, and an avatar of a user of the second electronic device may be displayed in the three-dimensional environment at the first electronic device. In some examples, the user of the first electronic device and the user of the second electronic device may be associated with a spatial group in the multi-user communication session. In some examples, interactions with content in the three-dimensional environment while the first electronic device and the second electronic device are in the multi-user communication session may cause the user of the first electronic device and the user of the second electronic device to become associated with different spatial groups in the multi-user communication session.

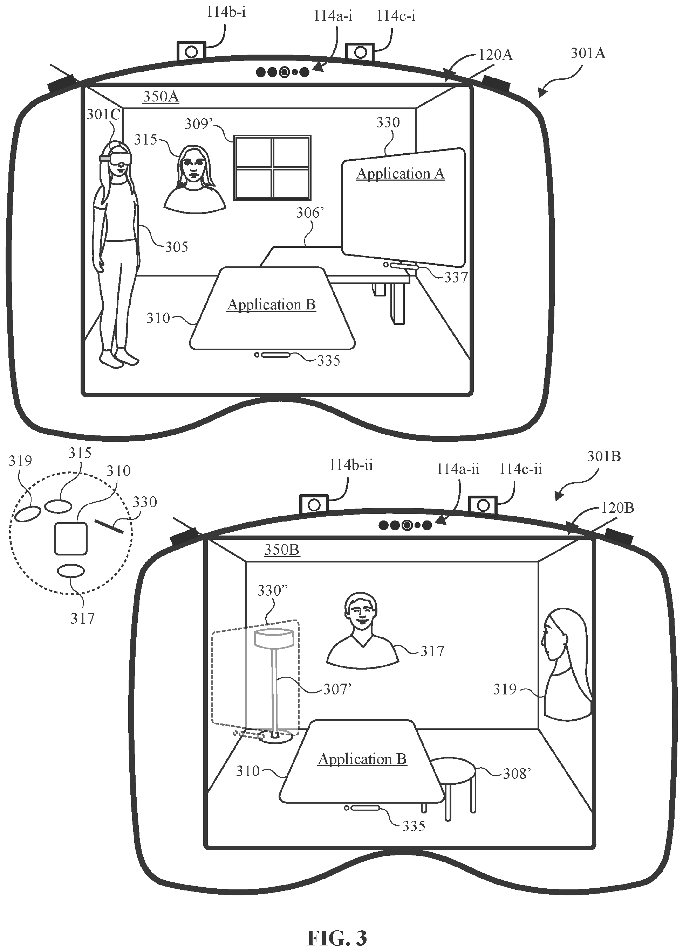

FIG. 3 illustrates an example of a spatial group in a multi-user communication session that includes a plurality of electronic devices according to some examples of the disclosure. In some examples, a first electronic device 301A may present a three-dimensional environment 350A, and a second electronic device 301B may present a three-dimensional environment 350B. The first electronic device 301A and the second electronic device 301B may be similar to electronic device 101 or 201A/201B, and/or may be a head mountable system/device and/or projection-based system/device (including a hologram-based system/device) configured to generate and/or present a three-dimensional environment, such as, for example, heads-up displays (HUDs), head mounted displays (HMDs), windows having integrated display capability, displays formed as lenses designed to be placed on a person's eyes (e.g., similar to contact lenses), respectively. In the example of FIG. 3, a first user is optionally wearing the first electronic device 301A and a second user is optionally wearing the second electronic device 301B, such that the three-dimensional environment 350A/350B can be defined by X, Y and Z axes (or in other three-dimensional coordinate space coordinates) as viewed from a perspective of the electronic devices (e.g., a viewpoint associated with the electronic device 301A/301B, which may be a head-mounted display, for example).

As shown in FIG. 3, the first electronic device 301A may be in a first physical environment that includes a table 306 and a window 309. Thus, the three-dimensional environment 350A presented using the first electronic device 301A optionally includes captured portions of the physical environment surrounding the first electronic device 301A, such as a representation of the table 306' and a representation of the window 309'. Similarly, the second electronic device 301B may be in a second physical environment, different from the first physical environment (e.g., separate in physical space from the first physical environment), that includes a floor lamp 307 and a coffee table 308. Thus, the three-dimensional environment 350B presented using the second electronic device 301B optionally includes captured portions of the physical environment surrounding the second electronic device 301B, such as a representation of the floor lamp 307' and a representation of the coffee table 308'. Additionally, the three-dimensional environments 350A and 350B may include representations of the floor, ceiling, and walls of the room in which the first electronic device 301A and the second electronic device 301B are located, respectively.

In some examples, the first electronic device 301A and the second electronic device 301B are optionally in a multi-user communication session with third electronic device 301C. In some examples, a third user 305 is wearing the third electronic device 301C, which is optionally a head-mounted display, similar to the HMDs discussed above. In some examples, while the first electronic device 301A, the second electronic device 301B and the third electronic device 301C are in a multi-user communication session, the first electronic device 301A, the second electronic device 301B and the third electronic device 301C are configured to collaboratively present (e.g., via communication circuitry, such as communication circuitry 222A/222B in FIG. 2C) a shared three-dimensional environment (e.g., via their respective three-dimensional environments, such as three-dimensional environment 350A/350B) that includes one or more shared virtual objects (e.g., content such as images, video, audio and the like, representations of user interfaces of applications, etc.). As used herein, the term "shared three-dimensional environment" refers to a three-dimensional environment that is independently presented, displayed, and/or visible at a plurality of electronic devices via which content, applications, data, and the like may be shared and/or presented to users of the plurality of electronic devices.

In some examples, while the first electronic device 301A and the second electronic device 301B are in the multi-user communication session with the third electronic device 301C, a visual representation of a user of each electronic device is presented in the three-dimensional environment that is presented via the other electronic devices. In some examples, a type of visual representation that is presented at a respective electronic device within the multi-user communication session is based on whether the respective electronic device is collocated or non-collocated with the other electronic devices in the multi-user communication session, as described in more detail below.

In FIG. 3, the first electronic device 301A and the third electronic device 301C are collocated in the first physical environment. For example, the first electronic device 301A and the third electronic device 301C are both located in a same physical room that includes the table 306 and window 309. In some examples, the determination that the first electronic device 301A and the third electronic device 301C are collocated in the first physical environment is based on a distance between the first electronic device 301A and the third electronic device 301C. For example, in FIG. 3, the first electronic device 301A and the third electronic device 301C are collocated in the first physical environment because the first electronic device 301A is within a threshold distance (e.g., 0.1, 0.5, 1, 2, 3, 5, 10, 15, 20, etc. meters) of the third electronic device 301C. In some examples, the determination that the first electronic device 301A and the third electronic device 301C are collocated in the first physical environment is based on communication between the first electronic device 301A and the third electronic device 301C. For example, in FIG. 3, the first electronic device 301A and the third electronic device 301C are configured to communicate (e.g., wirelessly, such as via Bluetooth or other peer-to-peer communication networks, Wi-Fi, or a server (e.g., wireless communications terminal)) with each other. In some examples, the first electronic device 301A and the third electronic device 301C are connected to and/or are configured to communicate using a same wireless network in the first physical environment. In some examples, the determination that the first electronic device 301A and the third electronic device 301C are collocated in the first physical environment is based on a strength of a wireless signal transmitted between the first electronic device 301A and third electronic device 301C. For example, in FIG. 3, the first electronic device 301A and the third electronic device 301C are collocated in the first physical environment because a strength of a Bluetooth signal (or other wireless signal) transmitted between the first electronic devices 301A and third electronic device 301C is greater than a threshold strength. In some examples, the determination that the first electronic device 301A and the third electronic device 301C are collocated in the first physical environment is based on visual detection of the first electronic device 301A and second electronic device 301B in the first physical environment. For example, as shown in FIG. 3, the third electronic device 301C is positioned in a field of view of the first electronic device 301A (e.g., because the third user 305 is standing in the field of view of the first electronic device 301A), which enables the first electronic device 301A to visually detect (e.g., identify or scan, such as via object detection or other image processing techniques) the third electronic device 301 C (e.g., in one or more images captured by the first electronic device 301A, such as via external image sensors 114b-i and 114c-i). Similarly, in the example of FIG. 3, the first electronic device 301A is optionally positioned in a field of view of the third electronic device 301C (e.g., because the first user is standing in the field of view of the third electronic device 301C from a viewpoint of the third electronic device 301C), which enables the third electronic device 301C to visually detect the first electronic device 301A (e.g., in one or more images captured by the third electronic device 301C).

On the other hand, in FIG. 3, the second electronic device 301B is non-collocated with the first electronic device 301A or the third electronic device 301C. For example, as shown in FIG. 3 and as mentioned above, the second electronic device 301B is located (e.g., with the second user) in the second physical environment (e.g., including the floor lamp 307 and coffee table 308), which is different from the first physical environment in which the first electronic device 301A and the third electronic device 301C are both located. In some examples, while the second electronic device 301B is in the second physical environment, the second electronic device 301B is more than the threshold distance (e.g., discussed above) of the first electronic device 301A and the third electronic device 301A. Additionally or alternatively, in some examples, as shown in FIG. 3, the second electronic device 301B is not in the field of view of the first electronic device 301A and/or the third electronic device 301C.

As mentioned above, while electronic devices are communicatively linked in a multi-user communication session, users of the electronic devices may be visually represented within the shared three-dimensional environment based at least in part on the determination of whether the electronic devices are collocated or non-collocated with each other. In FIG. 3, because the first electronic device 301A and the third electronic device 301C are collocated in the first physical environment as discussed above, the users of the first electronic device 301A and third electronic device 301C are represented in the multi-user communication session via their physical personas (e.g., bodies) that are visible directly or in passthrough of the first physical environment (e.g., rather than via virtual representations generated and displayed by the electronic devices). For example, as shown in FIG. 3, the third user 305 is visible in the field of view of the first electronic device 301A (e.g., and the first user is visible in the field of view of the third electronic device 301C in the first physical environment) while the first electronic device 301A and the third electronic device 301C are in the multi-user communication session. In some examples, because the second electronic device 301B is non-collocated with the first electronic device 301A and the third electronic device 301C in the first physical environment, the second user of the second electronic device 301B is visually represented via an avatar 315 in the three-dimensional environment 350A. Similarly, at the second electronic device 301B, an avatar 317 corresponding to the first user of the first electronic device 301A and an avatar 319 corresponding to the third user 305 of the third electronic device 301C are displayed in the three-dimensional environment 350B (e.g., because the first electronic device 301A and the third electronic device 301C are non-collocated with the second electronic device 301B in the second physical environment as discussed above).

In some examples, the presentation of avatars 315/317/319 as part of a shared three-dimensional environment is optionally accompanied by an audio effect corresponding to a voice of the users of the electronic devices 301A/301B/301C. For example, the avatar 315 displayed in the three-dimensional environment 350A using the first electronic device 301A is optionally accompanied by an audio effect corresponding to the voice of the user of the second electronic device 301B. In some such examples, when the user of the second electronic device 301B speaks, the voice of the user may be detected by the second electronic device 301B (e.g., via the one or more microphones 213B in FIG. 2C) and transmitted to the first electronic device 301A (e.g., via the communication circuitry 222B/222A), such that the detected voice of the user of the second electronic device 301B may be presented as audio (e.g., using one or more speakers 216A) to the user of the first electronic device 301A in three-dimensional environment 350A. In some examples, the audio effect corresponding to the voice of the user of the second electronic device 301B may be spatialized (e.g., may be outputted as spatial audio), such that it appears to the user of the first electronic device 301A to emanate from the location of avatar 315 in the shared three-dimensional environment 350A (e.g., despite being outputted from the speakers of the first electronic device 360). Similarly, the avatars 317/319 displayed in the three-dimensional environment 350B using the second electronic device 301B are optionally accompanied by an audio effect corresponding to the voices of the users of the first electronic device 301A and the third electronic device 301C, respectively. For example, when the user of the first electronic device 301A speaks, the voice of the user may be detected by the first electronic device 301A (e.g., via the one or more microphones 213A) and transmitted to the second electronic device 301B (e.g., via the communication circuitry 222A/222B), such that the detected voice of the user of the first electronic device 301A may be presented as audio (e.g., using one or more speakers 216B) to the user of the second electronic device 301B in three-dimensional environment 350B. In some examples, the audio effect corresponding to the voices of the user of the first electronic device 301A and the user of the third electronic device 301C may be spatialized, such that they appear to the user of the second electronic device 301B to emanate from the location of avatar 317 and/or the location of the avatar 319 in the three-dimensional environment 350B (e.g., despite being outputted from the speakers of the second electronic device 301B).

In some examples, while in the multi-user communication session, the avatars 315/317/319 are displayed in the shared three-dimensional environment with respective orientations that correspond to and/or are based on orientations of the electronic devices 301A/301B/301C (and/or the users of electronic devices 301A/301B/301C) in the physical environments surrounding the electronic devices 301A/301B/301C. For example, as shown in FIG. 3, in the three-dimensional environment 350A, the avatar 315 is optionally facing toward the viewpoint of the user of the first electronic device 301A, and in the three-dimensional environment 350B, the avatar 317 is optionally facing toward the viewpoint of the user of the second electronic device 301B. As a particular user moves the electronic device (and/or themself) in the physical environment, the viewpoint of the user changes in accordance with the movement, which may thus also change an orientation of the user's avatar in the three-dimensional environment. For example, with reference to FIG. 3, if the user of the first electronic device 301A were to look leftward in the three-dimensional environment 350A such that the first electronic device 301A is rotated (e.g., a corresponding amount) to the left (e.g., counterclockwise), the user of the second electronic device 301B would see the avatar 317 corresponding to the user of the first electronic device 301A rotate to the right (e.g., clockwise) relative to the viewpoint of the user of the second electronic device 301B in accordance with the movement of the first electronic device 301A.

Additionally, in some examples, while in the multi-user communication session, a field of view of the three-dimensional environments 350A/350B and/or a location of the viewpoint within the three-dimensional environments 350A/350B optionally changes in accordance with movement of the electronic devices 301A/301B/301C (e.g., by the users of the electronic devices 301A/301B/301C). For example, while in the communication session, when the first electronic device 301A is moved closer toward the representation of the table 306' and/or the avatar 315 (e.g., because the user of the first electronic device 301A moved forward in the physical environment surrounding the first electronic device 301A), the field of view of the three-dimensional environment 350A would change accordingly, such that the representation of the table 306', the representation of the window 309' and the avatar 315 appear larger in the field of view. In some examples, each user may independently interact with the three-dimensional environment 350A/350B, such that changes in viewpoints within the three-dimensional environment 350A and/or interactions with virtual objects in the three-dimensional environment 350A by the first electronic device 301A optionally do not affect what is shown in the three-dimensional environment 350B at the second electronic device 301B, and vice versa.

In some examples, the avatars 315/317/319 are virtual representations (e.g., a full-body rendering) of the users of the electronic devices 301A/301B/301C. In some examples, a respective avatar is a representation of a portion or portions (e.g., a rendering of a head, face, head and torso, etc.) of the users of the electronic devices. In some examples, the avatars are user-personalized, user-selected, and/or user-created representations displayed in the three-dimensional environments 350A/350B that are representative of the users of the electronic devices 301A/301B/301C. It is understood that, while the avatars 315/317/319 illustrated in FIG. 3 correspond to bodily representations of the users of the electronic devices 301A/301B/301C, alternative avatars may be provided, such as those described above and/or having various dimensionality (e.g., three-dimensional or two-dimensional).

As used herein, relative to a first electronic device, a collocated user corresponds to a local user and a non-collocated user corresponds to a remote user. As similarly discussed above, the shared three-dimensional environment optionally includes avatars (e.g., avatars 315/317/319) corresponding to the remote users of the electronic devices that are non-collocated in the multi-user communication session. In some examples, the avatars corresponding to the remote users are generated and presented in the shared three-dimensional environment based on (e.g., using) skeletal data associated with the remote users. For example, the skeletal data is used to, at least partially, define one or more visual characteristics of the avatars (e.g., a size (e.g., height) and/or relative thickness of portions of the avatar, such as hands and/or limbs) in the three-dimensional environment. Additionally, the skeletal data is optionally used to track movement of the remote users, which, as discussed below, causes their corresponding avatars to be shifted and/or moved in the three-dimensional environment relative to the viewpoint of a first electronic device. In some examples, as discussed below, the skeletal data associated with local users may also be tracked and shared among the collocated electronic devices in the multi-user communication session to help facilitate presentation of and interaction with virtual objects (e.g., avatars and shared virtual content) in the three-dimensional environment.

As mentioned above, while the first electronic device 301A, the second electronic device 301B and the third electronic device 301C are in the multi-user communication session, their respective three-dimensional environments form and/or correspond to a shared three-dimensional environment that is presented using the electronic devices 301A/301B/301C. In some examples, content that is viewed by one user at one electronic device may be shared with another user at another electronic device in the multi-user communication session. In some such examples, the content may be experienced (e.g., viewed and/or interacted with) by multiple users (e.g., via their respective electronic devices) in the shared three-dimensional environment. For example, as shown in FIG. 3, the three-dimensional environments 350A/350B include a shared virtual object 310 (e.g., which is optionally a horizontally oriented board game associated with Application B) that is viewable by and interactive to the users of the electronic devices 301A/301B/301C. As shown in FIG. 3, the shared virtual object 310 is optionally displayed with a movement element 335 (e.g., a grabber affordance or handlebar or other user interface element) that is selectable to initiate movement of the shared virtual object 310 within the shared three-dimensional environment.

In some examples, the three-dimensional environments presented by the electronic devices include unshared content that is private to one or more users in the multi-user communication session. For example, in FIG. 3, the first electronic device 301A is displaying a private application window 330, which is optionally a virtual object that is not shared among the first electronic device 301A, the second electronic device 301B and the third electronic device 301C in the multi-user communication session. In some examples, the private application window 330 may be associated with a respective application (e.g., Application A) that is operating on the first electronic device 301A (e.g., such as a media player application, a web browsing application, a messaging application, etc.). Because the private application window 330 is not shared with the second electronic device 301B (e.g., or the third electronic device 301C), the second electronic device 301B optionally displays a representation of the private application window 330" in three-dimensional environment 350B. As shown in FIG. 3, in some examples, the representation of the private application window 330" may be a faded, occluded, discolored, and/or translucent representation of the private application window 330 that prevents the user of the second electronic device 301B (e.g., and the user of the third electronic device 301C) from viewing contents of the private application window 330.

As mentioned previously above, in some examples, the user of the first electronic device 301A, the user of the second electronic device 301B and the user of the third electronic device 301C are in and/or form a spatial group within the multi-user communication session. In some examples, the spatial group may be a baseline (e.g., a first or default) spatial group within the multi-user communication session. For example, when the user of the first electronic device 301A, the user of the second electronic device 301B and/or the user of the third electronic device 301C initially join the multi-user communication session, the user of the first electronic device 301A, the user of the second electronic device 301B, and the user of the third electronic device 301C are automatically (and initially) associated with (e.g., grouped into) the spatial group within the multi-user communication session. In some examples, while the users are in the spatial group as shown in FIG. 3, the user of the first electronic device 301A, the user of the second electronic device 301B and the user of the third electronic device 301C have a first spatial arrangement (e.g., arranged according to and/or defining a first spatial template) within the shared three-dimensional environment. For example, the user of the first electronic device 301A, the user of the second electronic device 301B, and the user of the third electronic device 301C, including objects that are shared and displayed in the shared three-dimensional environment, have spatial truth within the spatial group. In some examples, spatial truth requires a consistent spatial arrangement between users (or representations thereof) and shared virtual objects. For example, a distance between the viewpoint of the user of the first electronic device 301A and the avatar 315 corresponding to the user of the second electronic device 301B may be the same as a distance between the viewpoint of the user of the second electronic device 301B and the avatar 317 corresponding to the user of the first electronic device 301A. Similarly, in FIG. 3, a distance between the avatar 315 corresponding to the user of the second electronic device 301B and the physical location of the third electronic device 301C (e.g., including the third user 305) in the three-dimensional environment 350A from the viewpoint of the first electronic device 301A may be the same as a distance between the viewpoint of the user of the second electronic device 301B and the avatar 319 corresponding to the user of the third electronic device 301C in the three-dimensional environment 350B. As described herein, if the location of the viewpoint of the user of the first electronic device 301A moves, the avatar 317 corresponding to the user of the first electronic device 301A moves in the three-dimensional environment 350B in accordance with the movement of the location of the viewpoint of the user relative to the viewpoint of the user of the second electronic device 301B. As another example, if the user of the first electronic device 301A performs an interaction on the shared virtual object 310 (e.g., moves the virtual object 310 in the three-dimensional environment 350A), the second electronic device 301B (e.g., and the third electronic device 301C) alters or updates display of the shared virtual object 310 in the three-dimensional environment 350B in accordance with the interaction (e.g., moves the virtual object 310 by a corresponding (e.g., same) amount in the three-dimensional environment 350B). In the example of FIG. 3, the spatial group that is established among the first electronic device 301A, the second electronic device 301B, and the third electronic device 301C is a hybrid spatial group. For example, as defined herein, the multi-user communication session includes collocated and non-collocated users and electronic devices. Maintaining spatial truth among the viewpoints of the users in the multi-user communication session advantageously improves user interaction and experience of shared virtual objects and content. For example, it may be desirable to enable users who are collocated in a first physical environment and who are participating in a multi-user communication session with one or more users who are non-collocated in the first physical environment to coordinatively move and/or reposition virtual content that is shared and presented in a three-dimensional environment that is optionally viewable by and/or interactive to the collocated and non-collocated users in the multi-user communication session.

It is understood that, in some examples, fewer than and/or more than three electronic devices may be communicatively linked in a multi-user communication session. For example, in a situation in which two electronic devices are communicatively linked in a multi-user communication session, a first electronic device would present a single visual representation (e.g., a passthrough representation if collocated or a virtual representation (e.g., avatar) if non-collocated), rather than the two visual representations shown in FIG. 3, corresponding to the users of the other single electronic device. It should therefore be understood that the various processes and exemplary interactions described herein with reference to the first electronic device 301A, the second electronic device 301B, and the third electronic device 301C in the multi-user communication session illustrated in FIG. 3 optionally apply to situations in which fewer than or more than three electronic devices are communicatively linked in a multi-user communication session. It is also understood that, though illustrated in FIG. 3 as being such, a multi-user communication session need not include both collocated and non-collocated electronic devices (e.g., forming a hybrid spatial group). For example, a multi-user communication session can alternatively be established between solely collocated electronic devices (e.g., forming a local spatial group) or solely non-collocated electronic devices (e.g., forming a remote spatial group).

In some examples, it may be advantageous to provide mechanisms for moving (e.g., repositioning) virtual objects that are shared in a multi-user communication session that includes collocated and/or non-collocated users (e.g., collocated and/or non-collocated electronic devices associated with the users). In some examples, as discussed below, the repositioning of virtual objects (e.g., avatars and/or shared virtual content) in the three-dimensional environment within a multi-user communication session is based on whether the multi-user communication session includes collocated users, non-collocated users (e.g., relative to a first electronic device), or both. In some examples, the repositioning of a virtual object in a three-dimensional environment within a multi-user communication session that is established between collocated users (e.g., and without being established with any non-collocated users) is performed with respect to a viewing angle associated with content of the virtual object in the three-dimensional environment relative to the collocated user providing the input for repositioning the virtual object in the three-dimensional environment. In some examples, the repositioning of one or more virtual objects in a three-dimensional environment within a multi-user communication session that is established between collocated and non-collocated users is performed relative to a local origin within a physical environment of the collocated users, where the local origin is associated with the collocated user providing the input for repositioning the one or more virtual objects in the three-dimensional environment. Attention is now directed towards interactions with one or more virtual objects that are displayed in a shared three-dimensional environment presented at a plurality of electronic devices (e.g., corresponding to or similar to electronic devices 201A and/or 201B of FIG. 2C) that is collocated within a physical environment while participating in a multi-user communication session.

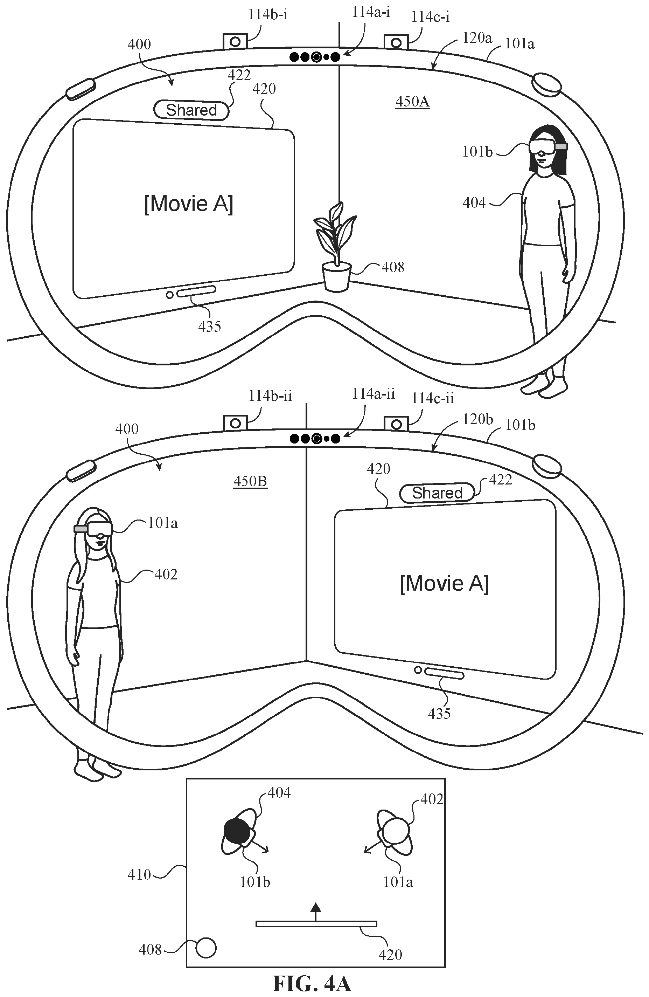

FIGs. 4A-4M illustrate examples of moving a virtual object in a three-dimensional environment that is shared between collocated users within a multi-user communication session according to some examples of the disclosure. In some examples, while a first electronic device 101a is in the multi-user communication session with a second electronic device 101b, three-dimensional environment 450A is presented using the first electronic device 101a (e.g., via display 120a) and three-dimensional environment 450B is presented using the second electronic device 101b (e.g., via display 120b). In some examples, the electronic devices 101a/101b optionally correspond to or are similar to electronic devices 301A/301B discussed above and/or electronic devices 201A/201B in FIG. 2C. In some examples, as shown in overhead view 410 in FIG. 4A, the first electronic device 101a is being used by (e.g., worn on a head of) a first user 402 and the second electronic device 101b is being used by (e.g., worn on a head of) a second user 404.

In FIG. 4A, as indicated in the overhead view 410, the first electronic device 101a and the second electronic device 101b are collocated in physical environment 400. For example, the first electronic device 101a and the second electronic device 101b are both located in a same room that includes houseplant 408. The determination that the first electronic device 101a and the second electronic device 101b are collocated in the physical environment 400 has one or more characteristics of the determination that first electronic device 301A is collocated with third electronic device 301C in the physical environment illustrated in FIG. 3.

In some examples, as shown in FIG. 4A, the three-dimensional environments 450A/450B include captured portions of the physical environment 400 in which the electronic devices 101a/101b are located. For example, because the first electronic device 101a and the second electronic device 101b are collocated in the physical environment 400, the three-dimensional environments 450A and 450B include the houseplant 408 (e.g., a representation of the houseplant), as well as the walls, floor, and/or ceiling of the room in which the electronic devices 101a/101b are both located, but from the unique viewpoints of the first electronic device 101a and the second electronic device 101b, as shown in FIG. 4A. In some examples, the representations can include portions of the physical environment 400 viewed through a transparent or translucent display of the electronic devices 101a and 101b. In some examples, the three-dimensional environments 450A/450B have one or more characteristics of the three-dimensional environments 350A/350B described above with reference to FIG. 3.

As described above with reference to FIG. 3, while electronic devices are communicatively linked in a multi-user communication session, users may be represented by visual representations of the users of the electronic devices. In FIG. 4A, because the first electronic device 101a and the second electronic device 101b are collocated in the physical environment 400, the users of the electronic devices 101a and 101b are represented in the multi-user communication session via their physical personas (e.g., bodies) that may be visible in passthrough of the physical environment 400 (e.g., rather than via virtual avatars). For example, as illustrated in FIG. 4A, the second user 404 (e.g., and the second electronic device 101b) is currently visible in the field of view of the first electronic device 101a and the first user 402 (e.g., and the first electronic device 101a) is currently visible in the field of view of the second electronic device 101b based on the physical locations of the users 404/402 in the physical environment 400. As discussed in more detail below, if a third user who is non-collocated in the physical environment 400 (e.g., a remote user) joins the multi-user communication session, the third user is represented via a visual representation (e.g., an avatar) in the three-dimensional environments 450A and 450B.

As similarly described above with reference to FIG. 3, while the first user 402 of the first electronic device 101a and the second user 404 of the second electronic device 101b are collocated in the physical environment 400 and while the first electronic device 101a is in the multi-user communication session with the second electronic device 101b, the first user 402 and the second user 404 may be in a first spatial group within the multi-user communication session. In some examples, the first spatial group has one or more characteristics of the spatial group discussed above with reference to FIG. 3. As similarly described above, while the first user 402 and the second user 404 are in the first spatial group within the multi-user communication session, the users have a first spatial arrangement in the shared three-dimensional environment (e.g., represented by the locations of and/or distance between the users 402 and 404 in the overhead view 410 in FIG. 4A) determined by the physical locations of the electronic devices 101a and 101b in the physical environment 400. Particularly, the first electronic device 101a and the second electronic device 101b experience spatial truth within the first spatial group as dictated by the physical locations of and/or orientations of the first user 402 and the second user 404, respectively.

In some examples, as similarly described above with reference to FIG. 3, while the first electronic device 101a is in the multi-user communication session with the second electronic device 101b, virtual content is able to be shared between and/or interacted with by the first electronic device 101a and the second electronic device 101b in the three-dimensional environments 450A/450B. For example, as shown in FIG. 4A, the first electronic device 101a and the second electronic device 101b are displaying virtual object 420 in the three-dimensional environment 450A/450B. In some examples, the virtual object 420 corresponds to an application window (e.g., a user interface), such as a media player (e.g., movie player) application running on the first electronic device 101a and/or the second electronic device 101b. In some examples, the virtual object 420 is shared between the first electronic device 101a and the second electronic device 101b in the multi-user communication session, such that the content of the virtual object 420 (e.g., the movie player user interface) is visible to and/or interactive to the first user 402 and the second user 404 via their respective electronic devices 101a/101b, as indicated by pill 422 displayed with the virtual object 420. In some examples, the pill 422 is selectable to initiate one or more sharing operations associated with the virtual object 420. For example, the pill 422 is selectable (e.g., via an air gesture, such as an air pinch or tap gesture) to share (e.g., and/or cease sharing) the content of the virtual object 420 in the multi-user communication session. Additionally, in some examples, as shown in FIG. 4A, the virtual object 420 is displayed with and/or includes grabber bar 435, which is optionally selectable to initiate movement of the virtual object 420 in the three-dimensional environment 450A/450B.

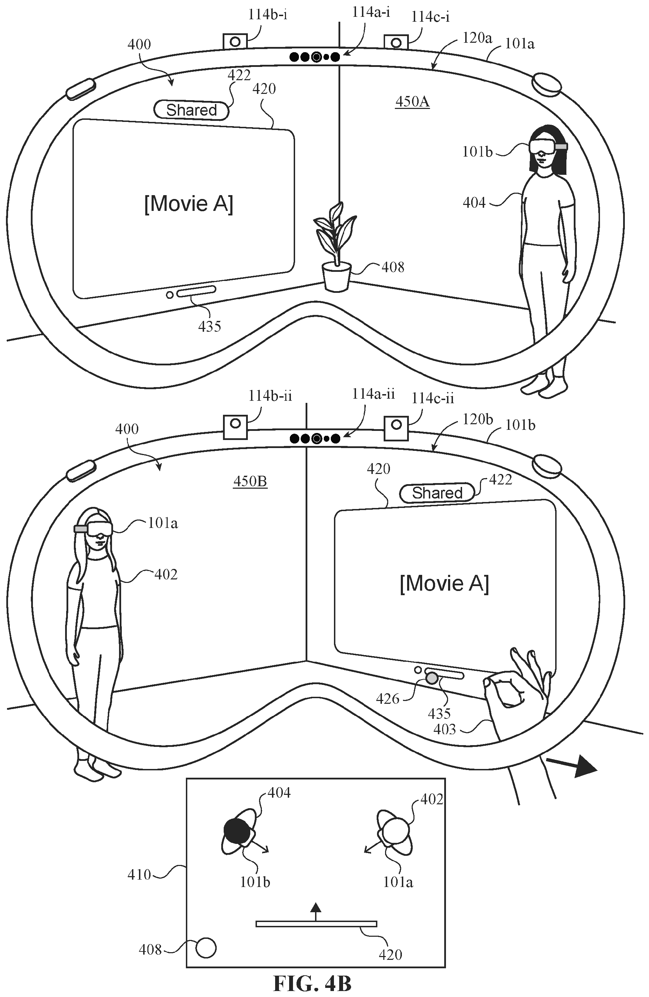

In FIG. 4B, while the first electronic device 101a is collocated with the second electronic device 101b in the physical environment 400 (e.g., and while the first electronic device 101a is in the multi-user communication session with the second electronic device 101b), the second electronic device 101b detects an input corresponding to a request to move the virtual object in the three-dimensional environment 450B. For example, as shown in FIG. 4B, while displaying the virtual object 420 in the three-dimensional environment 450B, the second electronic device 101b detects an air pinch and drag gesture performed by hand 403 of the second user 404, optionally while gaze 426 of the second user 404 is directed to the grabber bar 435 associated with the virtual object 420 in the three-dimensional environment 450B. In some examples, as indicated in FIG. 4A, the input detected by the second electronic device 101b includes movement of the hand 403 of the second user 404 (e.g., while maintaining the air pinch gesture) in space relative to the viewpoint of the second electronic device 101b (e.g., in a respective direction and/or with a respective magnitude (of speed, distance, and/or duration)). It should be understood that additional or alternative inputs are possible, such as air tap gestures, gaze and dwell inputs, verbal commands, etc.

In some examples, in response to detecting the input provided by the hand 403 of the second user 404, the second electronic device 101b initiates a process to move the virtual object 420 in the three-dimensional environment 450B in accordance with and/or based on the movement of the hand 403. In some examples, because the first electronic device 101a is collocated with the second electronic device 101b in the physical environment 400 while the electronic devices 101a/101b are participating in the multi-user communication session, and because the content of the virtual object 420 is shared between the first electronic device 101a and the second electronic device 101b within the multi-user communication session, the initiation of movement of the virtual object 420 by the second electronic device 101b correspondingly triggers initiation of movement of the virtual object 420 by the first electronic device 101a. For example, as discussed below, when the second electronic device 101b moves the virtual object 420 in the three-dimensional environment 450B, the second electronic device 101b transmits an indication of the movement (e.g., including data and/or instructions associated with the movement) to the first electronic device 101a (e.g., directly or indirectly via a server) that causes the first electronic device 101a to move (e.g., reposition and/or update display of) the virtual object 420 in the three-dimensional environment 450A in a same or similar manner.

When moving a virtual object (e.g., the virtual object 420) in a three-dimensional environment that is shared between the first electronic device 101a and the second electronic device 101b, it may be desirable to update an orientation of the virtual object relative to a coordinate system of (e.g., the shared or synchronized spatial mapping of, as similarly described above with reference to FIG. 3) the three-dimensional environment to enable the user providing the input for moving the virtual object (e.g., the first user 402 as discussed above) to maintain visibility of content of (e.g., content included in, associated with, and/or displayed on) the virtual object relative to a viewpoint of the user in the three-dimensional environment, while also maintaining visibility of the content of the virtual object relative to viewpoints of other users collocated with the user and participating in the multi-user communication session. Maintaining the visibility of the content of the virtual object relative to the viewpoint of the user providing the input to move the virtual object in the three-dimensional environment enables the user to continue to easily interact with and/or facilitates continued interaction with the content of the virtual object in the three-dimensional environment, without adversely affecting or detracting from the viewing experiences of the other users collocated with the user and participating in the multi-user communication session, as one benefit.

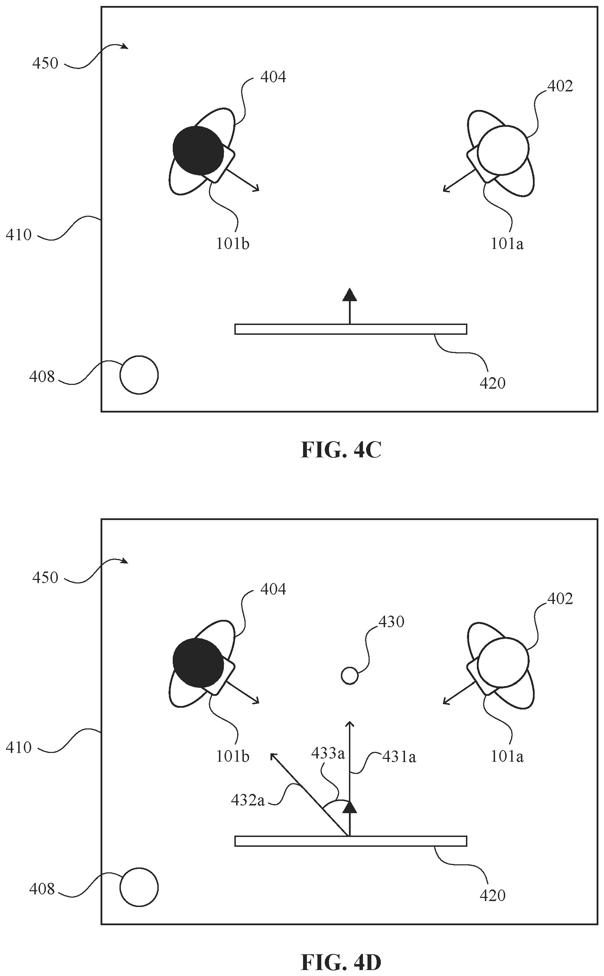

In some examples, as discussed herein, updating the orientation of the virtual object relative to the coordinate system of the three-dimensional environment to maintain visibility of the content of the virtual object for the user providing the input to move the virtual object is performed relative to and/or based on a viewing angle associated with the virtual object in the shared three-dimensional environment. In some examples, the viewing angle is defined and/or determined based on a location of the user providing the input for moving the virtual object in the three-dimensional environment, a location of the virtual object in the three-dimensional environment (e.g., prior to and/or when the movement input is detected), and an average location of the participants of the multi-user communication session (e.g., an average of the spatial distribution of the users of the electronic devices in the multi-user communication session). For example, in the overhead view 410 in FIG. 4C, the first user 402 of the first electronic device 101a and the second user 404 of the second electronic device 101b have a first spatial distribution relative to the virtual object 420 in shared three-dimensional environment 450 (e.g., the three-dimensional environment that is shared between the first electronic device 101a and the second electronic device 101b within the multi-user communication session). Particularly, as illustrated in the overhead view 410 in FIG. 4C, the first user 402 and the second user 404 are located at different locations relative to the coordinate system of the shared three-dimensional environment 450 when the input for moving the virtual object 420 (e.g., provided by the second user 404, as discussed above) is detected by the first electronic device 101a. Additionally, as illustrated in the overhead view 410 in FIG. 4C, the virtual object 420 has a first orientation (e.g., an initial orientation) in the shared three-dimensional environment 450 relative to the coordinate system of the shared three-dimensional environment 450, as indicated by the arrow extending from the virtual object 420 (e.g., normal to the front-facing surface of the virtual object 420), when the input for moving the virtual object 420 is detected by the first electronic device 101a.

In some examples, as alluded to above, in response to detecting the input provided by the first user 402 in FIG. 4B for moving the virtual object 420, the second electronic device 101b determines whether the movement of the virtual object 420 in the shared three-dimensional environment 450 will cause a viewing angle associated with the content of the virtual object 420 (e.g., discussed in more detail below) to exceed a threshold viewing angle relative to the viewpoint of the second electronic device 101b (e.g., because the second electronic device 101b is triggering the movement of the virtual object 420 in the shared three-dimensional environment 450). For example, in FIG. 4D, when initiating movement of the virtual object 420 in the shared three-dimensional environment 450, the second electronic device 101b defines and/or determines a threshold viewing angle 433a (e.g., 20, 25, 30, 35, 40, 45, 50, etc. degrees) associated with the virtual object 420 according to which and/or relative to which the orientation of the virtual object 420 will be selectively changed or updated when moving the virtual object 420 in the shared three-dimensional environment 450. In some examples, as illustrated in the overhead view 410 in FIG. 4D, the threshold viewing angle 433a associated with the content of the virtual object 420 is defined between a first line or vector 431a that extends from (e.g., a center point) of the virtual object 420 outward away from the surface of the virtual object 420 (e.g., and thus orthogonal to the surface of the virtual object 420) and second line or vector 432a that extends from (e.g., a center point) of the virtual object 420 to or towards the location of the second user 404 (e.g., and/or the second electronic device 101b) in the shared three-dimensional environment 450 (e.g., because the second user 404 is the user providing the input to move the virtual object 420 in the shared three-dimensional environment 450) at the location of the virtual object 420 at the time that the input is detected.

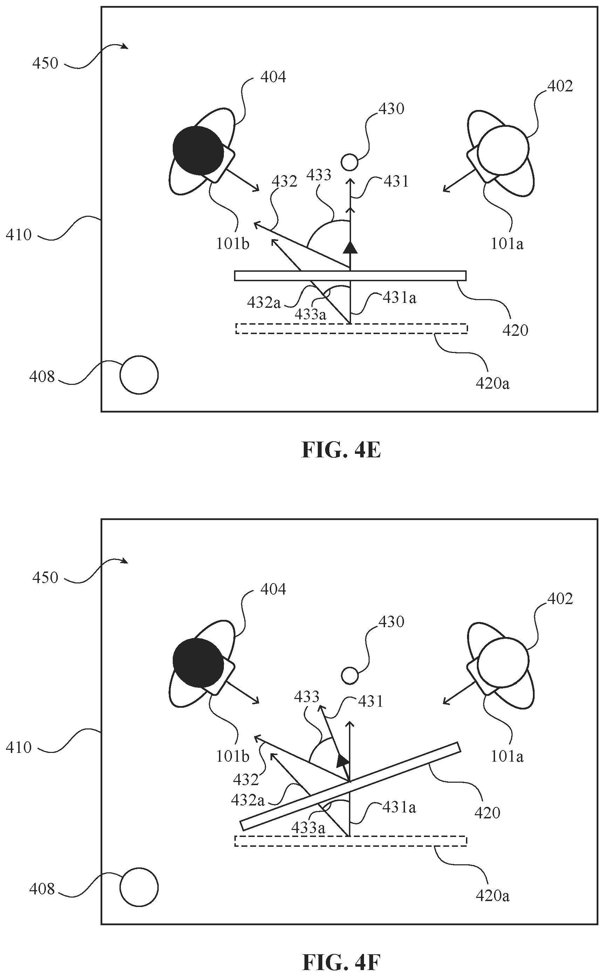

From FIG. 4D to FIG. 4E, the second electronic device 101b detects the hand 403 of the second user 404 move toward the viewpoint of the second electronic device 101b in the shared three-dimensional environment 450, which corresponds to movement of the virtual object 420 toward and/or closer to the viewpoint of the second electronic device 101b in the shared three-dimensional environment 450. Accordingly, as illustrated in the overhead view 410 in FIG. 4E, the second electronic device 101b (e.g., and the first electronic device 101a) moves the virtual object 420 in accordance with the movement of the hand 403 of the second user 404 (e.g., moves the virtual object 420 toward the viewpoint of the second electronic device 101b) in the shared three-dimensional environment 450.

FIG. 4E illustrates an example of moving the virtual object 420 in the shared three-dimensional environment 450 in accordance with the input provided by the second user 404 in FIG. 4D, without updating the orientation of the virtual object 420 in the shared three-dimensional environment 450. For example, as illustrated in the overhead view 410 in FIG. 4E, the second electronic device 101b (e.g., and the first electronic device 101a) moves the virtual object 420 from previous (e.g., initial) location 420a in the shared three-dimensional environment 450 to an updated location in accordance with the input. In some examples, as illustrated in FIG. 4E, the movement of the virtual object 420 without updating the orientation of the virtual object 420 relative to the coordinate system of the shared three-dimensional environment 450 would cause the viewing angle described above that is associated with the content of the virtual object 420 to exceed the threshold viewing angle 433a. Particularly, in the overhead view 410 in FIG. 4E, the movement of the virtual object 420 without updating the orientation of the virtual object 420 in the shared three-dimensional environment 450 causes current viewing angle 433 associated with the content of the virtual object 420 to exceed the threshold viewing angle 433a. In some examples, as illustrated in the overhead view 410 in FIG. 4E, the current viewing angle 433 is defined by the second electronic device 101b as an angle between a first line or vector 431 that is parallel to a current orientation of the virtual object 420 (e.g., is parallel to the arrow that is normal to the virtual object 420, as discussed above) and a second line or vector 432 that extends between (e.g., a center point of) the virtual object 420 and the location of the second user 404 (e.g., and the second electronic device 101b) in the shared three-dimensional environment 450. In the example of FIG. 4E, because the current viewing angle 433 exceeds the threshold viewing angle 433a, visibility of the content of the virtual object 420 relative to the viewpoint of the second electronic device 101b in the shared three-dimensional environment 450 may be reduced, diminished, or otherwise inhibited due to the extreme (e.g., large or steep) angular relationship between the front-facing surface of the virtual object 420 and the viewpoint of the second electronic device 101b.

Accordingly, as alluded to above, in accordance with a determination that the movement of the virtual object 420 in the shared three-dimensional environment 450 causes (e.g., would cause) the current viewing angle 433 to exceed the threshold viewing angle 433a (e.g., at the updated display location of the virtual object 420) in the shared three-dimensional environment 450, the second electronic device 101b (e.g., and the first electronic device 101a) updates the orientation of the virtual object 420 in the shared three-dimensional environment 450. Particularly, the second electronic device 101b updates the orientation of (e.g., by rotating and/or moving) the virtual object 420 in the shared three-dimensional environment 450, such that the current viewing angle 433 remains within (e.g., no longer exceeds) the threshold viewing angle 433a. For example, as illustrated in the overhead view 410 in FIG. 4F, the second electronic device 101b (e.g., and the first electronic device 101a) rotates the virtual object 420 (e.g., about a vertical axis through the virtual object 420), as indicated by the updated orientation of the virtual object 420 relative to the initial (e.g., original) orientation of the virtual object at the initial location 420a, in the shared three-dimensional environment 450 to enable the current viewing angle 433 to remain within (e.g., be less than or equal to) the threshold viewing angle 433a in the shared three-dimensional environment 450, thereby allowing visibility of the content of the virtual object 420 to be maintained relative to the viewpoint of the second electronic device 101b as similarly discussed above.

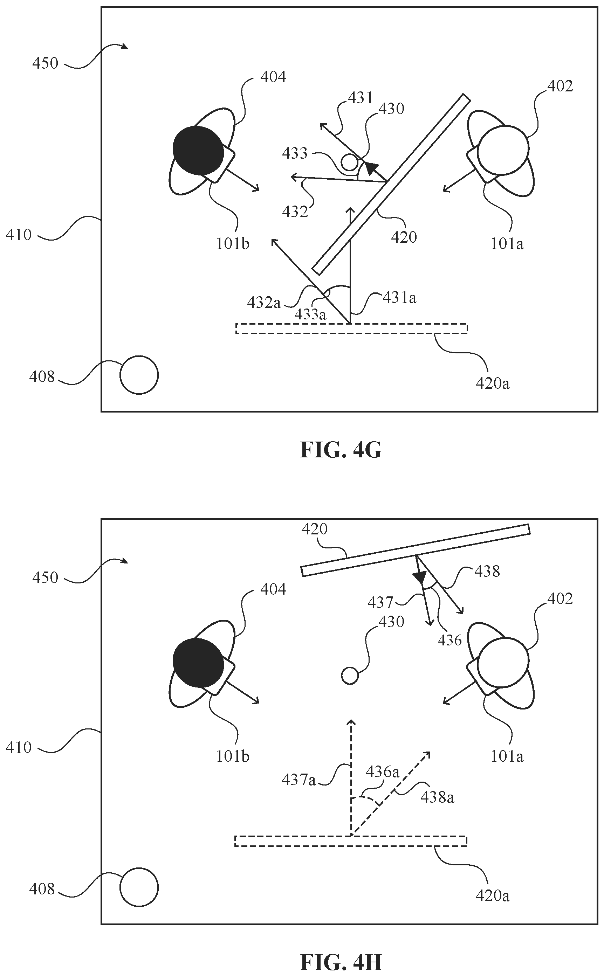

In some examples, the second electronic device 101b (e.g., and the first electronic device 101a) continues to update the orientation of the virtual object 420 in the shared three-dimensional environment 450 in response to and/or in accordance with further movement of the virtual object 420 in the shared three-dimensional environment 450 (e.g., movement of the virtual object 420 to different locations in the shared three-dimensional environment 450 relative to the viewpoint of the second electronic device 101b). For example, as illustrated in the overhead view 410 in FIG. 4G, the second electronic device 101b detects further movement input directed to the virtual object 420 (e.g., similar to the input provided by the second user 404 in FIG. 4B above), which causes the second electronic device 101b (e.g., and the first electronic device 101a) to move the virtual object 420 further in the shared three-dimensional environment 450. In some examples, as similarly discussed above, the second electronic device 101b (e.g., and the first electronic device 101a) updates the orientation of the virtual object 420 in the shared three-dimensional environment 450 when moving the virtual object 420, as illustrated in the overhead view 410 from FIG. 4F to FIG. 4G. Particularly, as discussed above, the second electronic device 101b (e.g., and the first electronic device 101a) optionally rotates the virtual object 420 in the shared three-dimensional environment 450 to maintain the current viewing angle 433 associated with the content of the virtual object 420 within the threshold viewing angle 433a, thereby maintaining visibility of the content of the virtual object 420 relative to the viewpoint of the second electronic device 101b, as illustrated in FIG. 4G.

As outlined above, in some examples, the orientation of the virtual object 420 is updated in the shared three-dimensional environment 450 when the virtual object 420 is moved to maintain visibility of the content of the virtual object 420 for the user providing the input to move the virtual object 420 in the shared three-dimensional environment 450. Accordingly, if the input to move the virtual object 420 in the shared three-dimensional environment 450 were additionally or alternatively provided by the first user 402 of the first electronic device 101a, the orientation of the virtual object 420 would be updated to alternatively be biased toward the viewpoint of the first electronic device 101a (e.g., instead of the viewpoint of the second electronic device 101b as discussed above). As an alternative example, from FIG. 4B to FIG. 4H, the first electronic device 101a detects an input (e.g., provided by the first user 402) corresponding to a request to move the virtual object 420 in the shared three-dimensional environment 450, such as an air pinch and drag gesture directed to the virtual object 420 as similarly described above with reference to FIG. 4B. In some examples, as shown in the overhead view 410 in FIG. 4H, in response to detecting the input directed to the virtual object 420, the first electronic device 101a (e.g., and the second electronic device 101b) moves the virtual object 420 in the shared three-dimensional environment 450 (e.g., to a different location in the shared three-dimensional environment 450 in FIG. 4H). In some examples, as similarly discussed above, when the first electronic device 101a (e.g., and the second electronic device 101b) moves the virtual object 420 in the shared three-dimensional environment 450, the first electronic device 101a updates the orientation of the virtual object 420 with respect to a threshold viewing angle in the shared three-dimensional environment 450 to maintain visibility of the content of the virtual object 420 relative to the viewpoint of the first electronic device 101a. Particularly, as illustrated in the overhead view 410 in FIG. 4H, because the input for moving the virtual object 420 is provided by the first user 402 in the multi-user communication session, the threshold viewing angle 436a is defined (e.g., redefined) to be specific to the first user 402 in the shared three-dimensional environment. For example, in FIG. 4H, the threshold viewing angle 436a is defined between a first line or vector 437a that extends from (e.g., a center point) of the virtual object 420 outwards or away from the surface of the virtual object 420 (e.g., and thus orthogonal to the surface of the virtual object 420) and a second line or vector 438a that extends from (e.g., a center point) of the virtual object 420 to or towards the location of the first user 402 (e.g., and/or the first electronic device 101a) in the shared three-dimensional environment 450 (e.g., because the first user 402 is the user providing the input to move the virtual object 420 in the shared three-dimensional environment 450).

Additionally, in the overhead view 410 in FIG. 4H, the first electronic device 101a defines current viewing angle 436 associated with the content of the virtual object 420 in the shared three-dimensional environment 450. In some examples, as illustrated in the overhead view 410 in FIG. 4H, the current viewing angle 436 is defined by the first electronic device 101a as an angle between a first line or vector 437 that is parallel to a current orientation of the virtual object 420 (e.g., is parallel to the arrow that is normal to the virtual object 420, as discussed above) and a second line or vector 438 that extends between (e.g., a center point of) the virtual object 420 and the location of the first user 402 (e.g., and the first electronic device 101a) in the shared three-dimensional environment 450. Further, in some examples, as similarly discussed above, in accordance with a determination that the movement of the virtual object 420 in the shared three-dimensional environment 450 causes (e.g., would cause) the current viewing angle 436 to exceed the threshold viewing angle 436a (e.g., at the updated display location of the virtual object 420) in the shared three-dimensional environment 450, the first electronic device 101a (e.g., and the second electronic device 101b) updates the orientation of the virtual object 420 in the shared three-dimensional environment 450. Particularly, the first electronic device 101a updates the orientation of (e.g., by rotating and/or moving) the virtual object 420 in the shared three-dimensional environment 450, such that the current viewing angle 436 remains within (e.g., no longer exceeds) the threshold viewing angle 436a, as illustrated in the overhead view 410 in FIG. 4H.

It is understood that, in one or more of the above examples, updating the orientation of the virtual object 420 in the shared three-dimensional environment 450 includes rotating the virtual object 420 relative to the coordinate system of the three-dimensional environment 450, such that the current viewing angle (e.g., current viewing angle 436 in FIG. 4H) is equal to (e.g., is the same as) the threshold viewing angle (e.g., threshold viewing angle 436a). Additionally or alternatively, in some examples, the orientation of the virtual object 420 is updated in the shared three-dimensional environment 450 to reduce the angle between a vector that is orthogonal to the surface of the virtual object 420 and a vector that extends from the geometric center of the virtual object 420 to the center 430 in the shared three-dimensional environment 450, which helps improve visibility of the content of the virtual object 420 for the other users in the group as well.

It is noted that, in the examples above, the threshold viewing angle (e.g., threshold viewing angle 433a/436a) according to which the orientation of the virtual object 420 is updated/changed in response to movement of the virtual object 420 in the shared three-dimensional environment 450 is (at least partially) dependent on the (e.g., current) spatial distribution of the local users (e.g., the first user 402 and the second user 404) in the shared three-dimensional environment 450. Particularly, as previously discussed above, because the threshold viewing angle is measured at least partially relative to the first line or vector (e.g., first line or vector 431a/437a) that extends to a geometric center (e.g., center 430/432) of the spatial distribution of the first user 402 and the second user 404, alternative spatial distributions of the first user 402 and the second user 404 affect/influence the geometric center of the spatial distribution of the first user 402 and the second user 404, and therefore the first line or vector according to which the threshold viewing angle is at least partially measured. Similarly, it is therefore further noted that if a different (e.g., greater) number of local users are participating in the multi-user communication session in the above examples, the spatial distribution of the local users would also change/be different in the shared three-dimensional environment 450, which would similarly affect/influence the geometric center of the spatial distribution of the local users and therefore the first line or vector according to which the threshold viewing angle is at least partially measured.

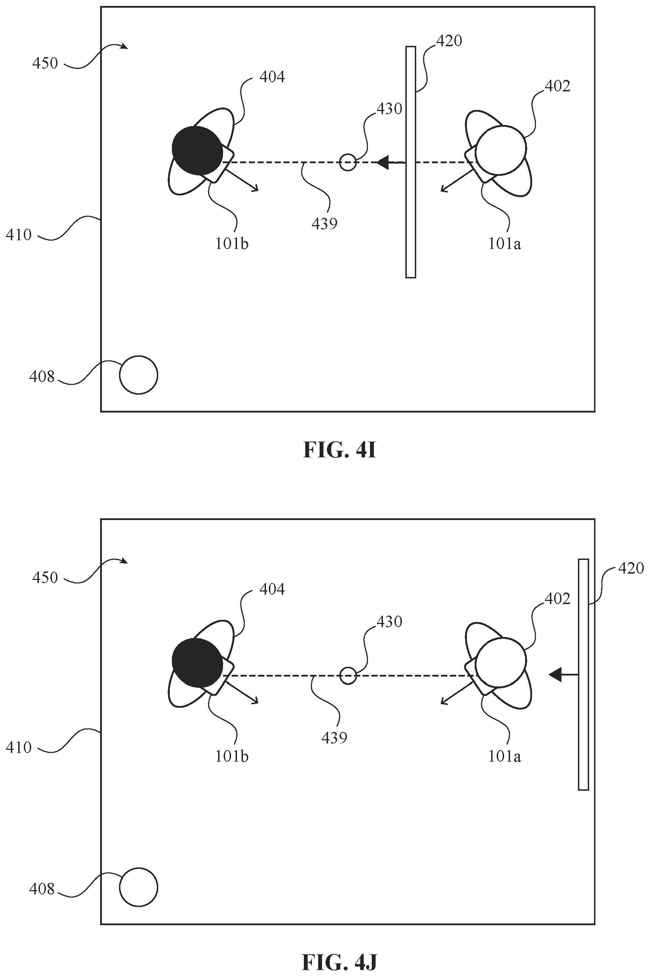

FIGs. 4I-4J illustrate examples of moving a virtual object through one or more singularities associated with the local users in a multi-user communication session within a shared three-dimensional environment. In FIG. 4I, the first electronic device 101a and the second electronic device 101b are displaying the virtual object 420 in the shared three-dimensional environment 450. In some examples, the virtual object 420 corresponds to the virtual object 420 discussed above.

In some examples, movement of the virtual object 420 through a singularity in the shared three-dimensional environment 450 causes the first electronic device 101a and the second electronic device 101b to forgo updating the orientation of the virtual object 420 in the shared three-dimensional environment 450. In some examples, the first electronic device 101a and/or the second electronic device 101b define and/or establish one or more singularities in the shared three-dimensional environment 450 based on the locations of the local users in the multi-user communication session (e.g., locations at which the viewing angle of the virtual object 420 is zero (or nearly zero) degrees in the shared three-dimensional environment 450). For example, in FIG. 4I, the first electronic device 101a and/or the second electronic device 101b define a first singularity at the location of the first user 402 (e.g., and the first electronic device 101a), a second singularity at the location of the second user 404 (e.g., and the second electronic device 101b), and a third singularity at a center 430 (e.g., geometric center) of the locations of the first user 402 and the second user 404 in the shared three-dimensional environment 450, because the viewing angle of the virtual object 420 at each of the location of the first user 402, the location of the second user 404, and the center 430 is zero degrees.

In some examples, as the virtual object 420 is moved through one of the singularities in the shared three-dimensional environment 450, the first electronic device 101a and the second electronic device 101b forgo updating the orientation of (e.g., forgo rotating) the virtual object 420 in the shared three-dimensional environment 450. For example, as illustrated in the overhead view 410 in FIG. 4I, the first, second, and third singularities discussed above create or form a line 439 (e.g., a line passing through the locations of the first user 402, the second user 404, and the center 430) in the shared three-dimensional environment 450. As illustrated in the overhead view 410 in FIG. 4I, movement of the virtual object 420 (e.g., provided by the second user 404 and detected by the second electronic device 101b) along the line 439 in the shared three-dimensional environment 450, which corresponds to movement of the virtual object 420 through one or more of the first, second, and third singularities discussed above, causes the second electronic device 101b (e.g., and the first electronic device 101a) to display the virtual object 420 as remaining oriented directly toward (e.g., as indicated by the arrow extending from the virtual object 420) the viewpoint of the second electronic device 101b (e.g., and optionally forgo updating the orientation of the virtual object 420) in the shared three-dimensional environment 450. For example, as illustrated in the overhead view 410 in FIG. 4I, the virtual object 420 is oriented toward the viewpoint of the second electronic device 101b in the shared three-dimensional environment 450 because the second user 404 is providing and/or has provided the input to move the virtual object 420 in the shared three-dimensional environment 450, despite the content of the virtual object 420 not (e.g., currently) being visible to the first user 402 from the viewpoint of the first electronic device 101a in the shared three-dimensional environment 450.

From FIG. 4I to FIG. 4J, the second electronic device 101b detects (further) movement input directed to the virtual object 420 provided by the second user 404 (e.g., an air pinch and drag gesture as similarly discussed above with reference to FIG. 4B). Particularly, as illustrated from FIG. 4I to FIG. 4J, the movement input corresponds to a request to move the virtual object 420 through the first singularity at the location of the first user 402 (e.g., along the line 439) in the shared three-dimensional environment 450. In some examples, as illustrated in the overhead view 410 in FIG. 4J, the second electronic device 101b (e.g., and the first electronic device 101a) moves the virtual object 420 in the shared three-dimensional environment 450 in accordance with the movement input. For example, as shown in the overhead view 410 in FIG. 4J, the virtual object 420 is moved along the line 439 in the shared three-dimensional environment 450 away from the viewpoint of the second electronic device 101b (e.g., farther from the center 430 of the group of local users). Additionally, as shown in the overhead view 410 in FIG. 4J, because the virtual object 420 is moved specifically through a singularity (e.g., the first singularity at the location of the first user 402) in the shared three-dimensional environment 450, the second electronic device 101b (e.g., and the first electronic device 101a) forgoes updating the orientation of the virtual object 420 in the shared three-dimensional environment 450 (e.g., because the current viewing angle is zero (or nearly zero) degrees in the shared three-dimensional environment 450). Specifically, as illustrated in FIG. 4J, the virtual object 420 remains oriented toward the viewpoint of the second electronic device 101b in the shared three-dimensional environment 450, as indicated by the arrow extending from the center of the virtual object 420 in the overhead view 410.

Additionally or alternatively, in some examples, a distance which the virtual object 420 is moved in the shared three-dimensional environment 450 affects/influences the manner and/or magnitude (e.g., of angular rotation) in which the virtual object 420 is rotated in the shared three-dimensional environment 450. For example, the rotation of the virtual object 420 by the first electronic device 101a and/or the second electronic device 101b is inversely proportional to the distance the virtual object 420 is moved farther from the group of local users (e.g., farther from the center or other singularity described above) in the shared three-dimensional environment 450, such that the farther the virtual object 420 is moved away from the group of local users (e.g., including the user providing the input to move the virtual object 420) in the shared three-dimensional environment 450, the less the virtual object 420 is rotated (e.g., angularly, such as in degrees, about a vertical axis through the virtual object 420) in the shared three-dimensional environment 450 to help maintain visibility of the content of the virtual object 420 for all users in the multi-user communication session (e.g., and not solely the user providing the input to move the virtual object 420). Accordingly, in some examples, the orientation of the virtual object 420 is biased toward specifically the user providing the input to move the virtual object 420 in the shared three-dimensional environment 450 for distances of movement that are relatively close to (e.g., within a threshold distance of) a singularity of the group of local users, such as the orientation of the virtual object 420 in FIGs. 4F-4G, and the orientation of the virtual object 420 is biased more toward the group of local users (e.g., not solely the user providing the input to move the virtual object 420) in the shared three-dimensional environment 450 for distances of movement that are farther from (e.g., outside of a threshold distance of) a singularity of the group of local users, such as the orientation of the virtual object 420 in FIG. 4H.

In some examples, certain interactions with virtual content are limited and/or are restricted in a multi-user communication session between local users based on the manner in which the virtual content is being shared within the multi-user communication session. For example, movement of virtual object 420 within the shared three-dimensional environment of the multi-user communication session (e.g., such as the movement of the virtual object 420 illustrated in FIGs. 4B-4J above) are not limited and/or are not restricted in the multi-user communication session between the first user 402 and the second user 404 based on the manner in which the virtual object 420 is being shared within the multi-user communication session. However, operations related to and/or including resizing of the virtual object 420 within the shared three-dimensional environment of the multi-user communication session are limited and/or restricted in the multi-user communication session between the first user 402 and the second user 404 based on the manner in which the virtual object 420 is being shared within the multi-user communication session, as discussed below.

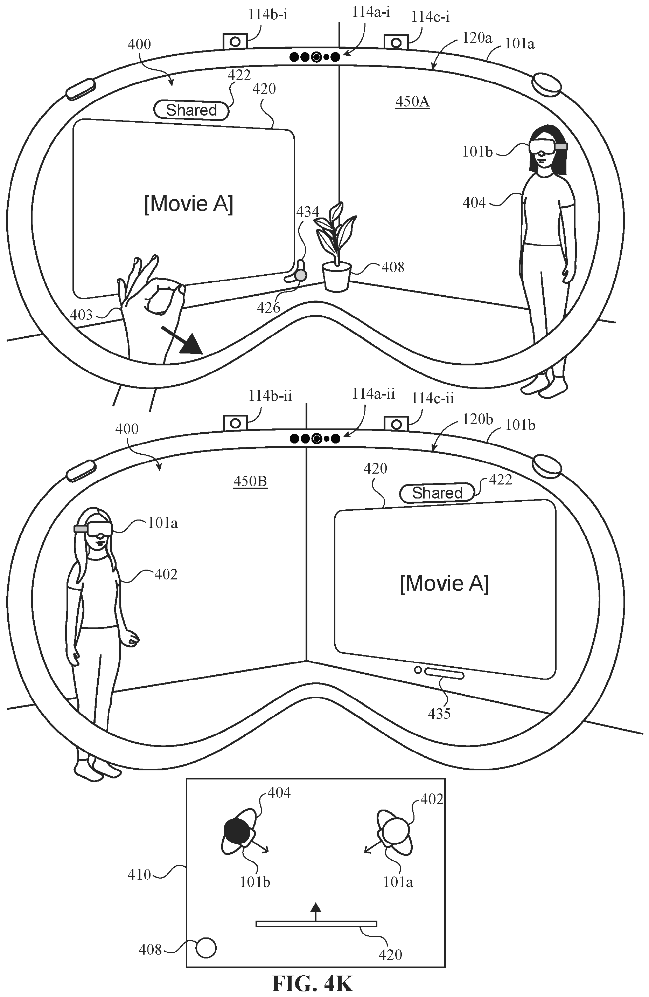

FIGs. 4K-4M illustrate examples of resizing a virtual object in a shared three-dimensional environment within a multi-user communication session between local users. In FIG. 4K, the first user 402 of the first electronic device 101a is collocated with the second user 404 of the second electronic device 101b in physical environment 400 while participating in a multi-user communication session. Additionally, in some examples, as shown in FIG. 4K, the first electronic device 101a is presenting, via the display 120a, three-dimensional environment 450A and the second electronic device 101b is presenting, via the display 120b, three-dimensional environment 450B (e.g., corresponding to unique views of a shared three-dimensional environment of the multi-user communication session). In some examples, as shown in FIG. 4K, the three-dimensional environments 450A/450B include virtual object 420, which is shared between the first user 402 and the second user 404 in the multi-user communication session, as indicated by pill 422 displayed with the virtual object 420. In some examples, the three-dimensional environments 450A/450B correspond to three-dimensional environments 450A/450B of FIG. 4A. In some examples, the virtual object 420 corresponds to the virtual object 420 of FIG. 4A.

In FIG. 4K, the first electronic device 101a is sharing the content of the virtual object 420 with the second electronic device 101b in the multi-user communication session. For example, the first user 402 provided input to the first electronic device 101a (e.g., such as via interaction with one or more sharing options that are accessible via the pill 422) corresponding to a request to share the movie (e.g., Movie A) that is being played back in the virtual object 420 with the second user 404 of the second electronic device 101b. In some examples, the content of the virtual object 420 is shareable between the first electronic device 101a and the second electronic device 101b in one of two manners. In a first manner of sharing of the content of the virtual object 420, the first electronic device 101a shares the content of the virtual object 420 with the second electronic device 101b via single window sharing (e.g., direct mirroring). For example, the first electronic device 101a transmits image and/or display data to the second electronic device 101b corresponding to a screen share or mirroring of the virtual object 420 (e.g., the virtual window that includes the playback of Movie A) that is currently displayed in the three-dimensional environment 450A at the first electronic device 101a. In a second manner, different from the first manner, of sharing of the content of the virtual object 420, the first electronic device 101a shares the content of the virtual object 420 with the second electronic device 101b via data streaming through a respective application running on both the first electronic device 101a and the second electronic device 101b. For example, the first electronic device 101a transmits an indication (e.g., data or other invitation) to the second electronic device 101b to launch an application associated with the virtual object 420 (e.g., a media playback or media browsing application via which to display or play back Movie A), which is the same application that the first electronic device 101a is running and utilizing to display the virtual object 420 in three-dimensional environment 450A at the first electronic device 101a. In some examples, the manner of the sharing of the content of the virtual object 420 is selected or designated by the first user 402 when providing the input for sharing the content of the virtual object 420 with the second electronic device 101b. In some examples, the manner of the sharing of the content of the virtual object 420 is a default manner of sharing (e.g., is automatically determined by the first electronic device 101a or by the second electronic device 101b based on device capability, account restrictions, entitlement to display or access the content, application availability, etc.).

In some examples, in accordance with a determination that the content of the virtual object 420 is being shared between the first electronic device 101a and the second electronic device 101b via the first manner of sharing discussed above (e.g., direct screen share or mirroring), operations corresponding to and/or including resizing of the virtual object 420 while in the multi-user communication session are limited to and/or restricted to being performable by the electronic device sharing the content of the virtual object 420. In some examples, in accordance with a determination that the content of the virtual object 420 is being shared between the first electronic device 101a and the second electronic device 101b via the second manner of sharing discussed above (e.g., common application data streaming), operations corresponding to and/or including resizing of the virtual object 420 while in the multi-user communication session are not limited to and/or restricted to being performable by the electronic device sharing the content of the virtual object 420. In other words, either user can provide input to resize the virtual object 420 in the shared three-dimensional environment when the content of the virtual object 420 is being shared via the second manner of sharing.

In the example of FIG. 4K, the first electronic device 101a is sharing the content of the virtual object 420 with the second electronic device 101b via the first manner of sharing discussed above (that is, the first electronic device 101a is transmitting, to the second electronic device 101b, image and/or display data corresponding to a screen share or mirroring of the content of the virtual object 420) within the multi-user communication session. Accordingly, in the examples of FIGs. 4K-4L, resizing of the virtual object 420 is limited to and/or is restricted to being performable by the first user 402 via the first electronic device 101a (e.g., because the first electronic device 101a is the sharer of the content of the virtual object 420 in the multi-user communication session). In FIG. 4K, while displaying the virtual object 420 in the three-dimensional environment 450A, the first electronic device 101a detects gaze 426 of the first user 402 directed toward and/or near a corner of the virtual object 420 in the three-dimensional environment 450A. In some examples, as shown in FIG. 4K, in response to detecting the gaze 426 of the first user 402 directed toward the corner of the virtual object 420, the first electronic device 101a displays resize element 434 with the virtual object 420 in the three-dimensional environment 450A (e.g., adjacent to and/or at the corner of the virtual object 420 to which the gaze 426 is directed). In some examples, as discussed in more detail below, the resize element 434 is selectable to initiate a process to resize (e.g., and/or scale) the virtual object 420 in the three-dimensional environment 450A. In some examples, as alluded to above, the first electronic device 101a displays the resize element 434 with the virtual object 420 in the three-dimensional environment 450A in response to detecting the gaze 426 directed to the corner of the virtual object 420 because the first electronic device 101a is the sharer of the content of the virtual object 420, which enables the first user 402 to provide interactions resizing the virtual object 420 within the multi-user communication session.

As shown in FIG. 4K, after displaying the resize element 434 with the virtual object 420 in the three-dimensional environment 450A, the first electronic device 101a detects an input directed to the resize element 434 provided by the first user 402. For example, as shown in FIG. 4K, the first electronic device 101a detects hand 403 of the first user 402 perform an air pinch and drag gesture, optionally while the gaze 426 of the first user 402 is directed to the resize element 434 in the three-dimensional environment 450A. In some examples, the movement of the hand 403 in space (e.g., relative to the viewpoint of the first electronic device 101a) corresponds to movement of the resize element 434 outward (e.g., away from the corner of the virtual object 420 with which the resize element 434 is displayed).

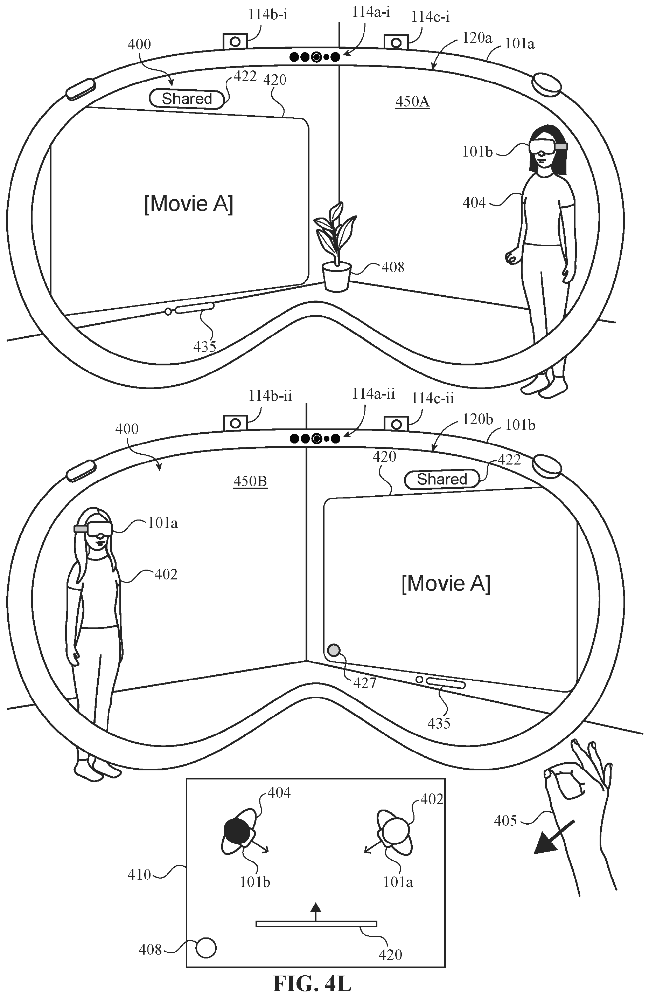

In some examples, as shown in FIG. 4L, in response to detecting the input directed to the resize element 434 in the three-dimensional environment 450A, the first electronic device 101a resizes the virtual object 420 in the three-dimensional environment 450A in accordance with the input. For example, as shown in FIG. 4L, the first electronic device 101a increases a size of the virtual object 420 in the three-dimensional environment 450A in accordance with the movement of the hand 403 (e.g., in accordance with a direction and/or magnitude (e.g., of speed, distance, and/or duration) of the movement of the hand 403). In some examples, when the first electronic device 101a resizes the virtual object 420 in the three-dimensional environment 450A, the first electronic device 101a changes/adjusts an aspect ratio of the content displayed in the virtual object 420. For example, in FIG. 4L, the first electronic device 101a increases the aspect ratio (e.g., the simulated resolution) of the movie being played back in the virtual object 420 in the three-dimensional environment 450A. Additionally, in FIG. 4L, the first electronic device 101a is no longer detecting the gaze 426 of the first user 402 directed toward or near the corner of the virtual object 420, which causes the first electronic device 101a to cease display of the resize element 434 in the three-dimensional environment 450A.

In some examples, when the first electronic device 101a resizes the virtual object 420 in the three-dimensional environment 450A, the first electronic device 101a updates the image or display data that is being transmitted to the second electronic device 101b for the display of the virtual object 420 in the three-dimensional environment 450B at the second electronic device 101b. For example, the first electronic device 101a updates the data corresponding to the screen share or mirror of the content of the virtual object 420 that is being transmitted to the second electronic device 101b. In some examples, as shown in FIG. 4L, in response to receiving the updated image or display data from the first electronic device 101a, the second electronic device 101b updates a size of the virtual object 420 in the three-dimensional environment 450B. For example, as shown in FIG. 4L, the second electronic device 101b increases the size of the virtual object 420 in the three-dimensional environment 450B in accordance with (e.g., proportionally to) to increase in the size of the virtual object 420 in the three-dimensional environment 450A at the first electronic device 101a. In some examples, the second electronic device 101b gradually adjusts the size of the virtual object 420 in the three-dimensional environment 450B until the size of the virtual object 420 reaches a target size defined by the updated image or display data transmitted by the first electronic device 101a (e.g., the increased size of the virtual object 420 in the three-dimensional environment 450A at the first electronic device 101a).

In FIG. 4L, the second electronic device 101b detects gaze 427 of the second user 404 directed to a corner of the virtual object 420 in the three-dimensional environment 450B. In some examples, as shown in FIG. 4L, the second electronic device 101b forgoes displaying a resize element (e.g., the resize element 437 above) with the virtual object 420 in the three-dimensional environment 450B in response to detecting the gaze 427 directed to the corner of the virtual object 420. In some examples, as discussed above, because the content of the virtual object 420 is being shared via the first manner of sharing and because the second electronic device 101b is not the sharer of the content of the virtual object 420 in the multi-user communication session, the second user 404 of the second electronic device 101b is precluded from providing input for resizing the virtual object 420 in the three-dimensional environment 450B. Accordingly, the second electronic device 101b optionally forgoes displaying a resize element with the virtual object 420 in the three-dimensional environment 450B.

Additionally, in FIG. 4L, the second electronic device 101b detects an input corresponding to a request to resize the virtual object 420 in the three-dimensional environment 450B. For example, as shown in FIG. 4L, the second electronic device 101b detects hand 405 of the second user 404 provide an air pinch and drag gesture, optionally while the gaze 427 of the second user 404 is directed to the corner of the virtual object 420 in the three-dimensional environment 450B. Particularly, as illustrated in FIG. 4L, the second electronic device 101b detects the input provided by the hand 405 of the second user 404 while a resize element is not displayed with the virtual object 420 in the three-dimensional environment 450B.

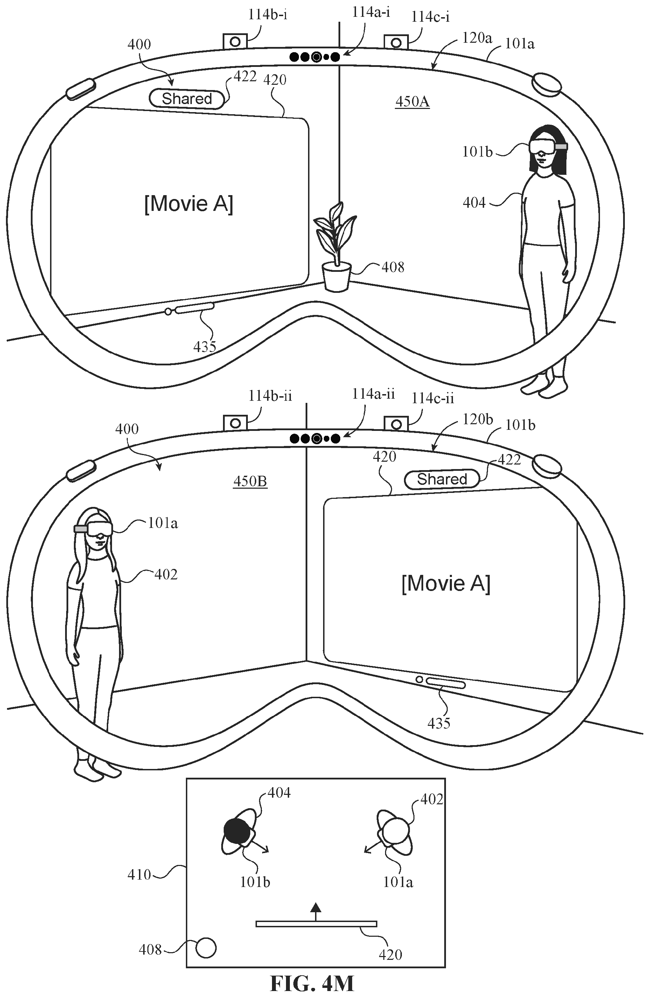

In some examples, as shown in FIG. 4M, in response to detecting the input corresponding to the request to resize the virtual object 420 in the three-dimensional environment 450B, the second electronic device 101b forgoes resizing the virtual object 420 in the three-dimensional environment 450B. For example, as illustrated from FIG. 4L to FIG. 4M, the second electronic device 101b maintains the size of the virtual object 420 in the three-dimensional environment 450B in response to detecting the input provided by the second user 404. As discussed above, because the content of the virtual object 420 is being shared via the first manner of sharing and because the second electronic device 101b is not the sharer of the content of the virtual object 420 in the multi-user communication session, the second electronic device 101b is precluded from resizing the virtual object 420 in the three-dimensional environment 450B in response to detecting the input provided by the second user 404 for resizing the virtual object 420. Additionally, as shown in FIG. 4M, because the size of the virtual object 420 remains unchanged in the three-dimensional environment 450B, the size of the virtual object 420 also remains unchanged in the three-dimensional environment 450A at the first electronic device 101a.

It is understood that, as previously mentioned above, if the content of the virtual object 420 were alternatively being shared between the first electronic device 101a and the second electronic device 101b via the second manner of sharing, the input in FIG. 4L provided by the second user 404 for resizing the virtual object 420 would cause the size of the virtual object 420 to change accordingly in the three-dimensional environment 450B, and thus in the three-dimensional environment 450A at the first electronic device 101a. It is also understood that the above moving and resizing behavior for the virtual object 420 similarly applies for other types and/or forms of virtual content that can be shared within the multi-user communication session. For example, updating the orientations of virtual objects to be biased toward the user providing the input for moving the virtual objects in a shared three-dimensional environment and/or resizing the virtual objects based on the manner in which the content of the virtual objects are being shared within a multi-user communication session between local users similarly applies for other vertically oriented virtual objects and/or user interface and/or for horizontally oriented virtual objects and/or volumetric virtual objects.

Accordingly, as outlined above, updating an orientation of a shared virtual object to be biased toward a viewpoint of a local user who is providing the input to move the shared virtual object in a three-dimensional environment within a multi-user communication session between local users enables the content of the shared virtual object to remain visible to and easily interactive for the local user who is providing the input, thereby improving user-device interaction and facilitating ease of continued interaction with the shared virtual object, as a benefit. Additionally, selectively resizing a shared virtual object in a three-dimensional environment within a multi-user communication session between local users based on a manner in which the content of the shared virtual object is being shared in the multi-user communication session helps preserve and/or maintain control of a visual appearance of the content of the shared virtual object for the local user who is sharing the virtual object, which helps reduce unintended interaction with the shared virtual object and improves privacy, as another benefit.

Attention is now directed towards example interactions with one or more virtual objects that are displayed in a shared three-dimensional environment presented at a plurality of electronic devices associated with users that are collocated and non-collocated within a physical environment while participating in a multi-user communication session.

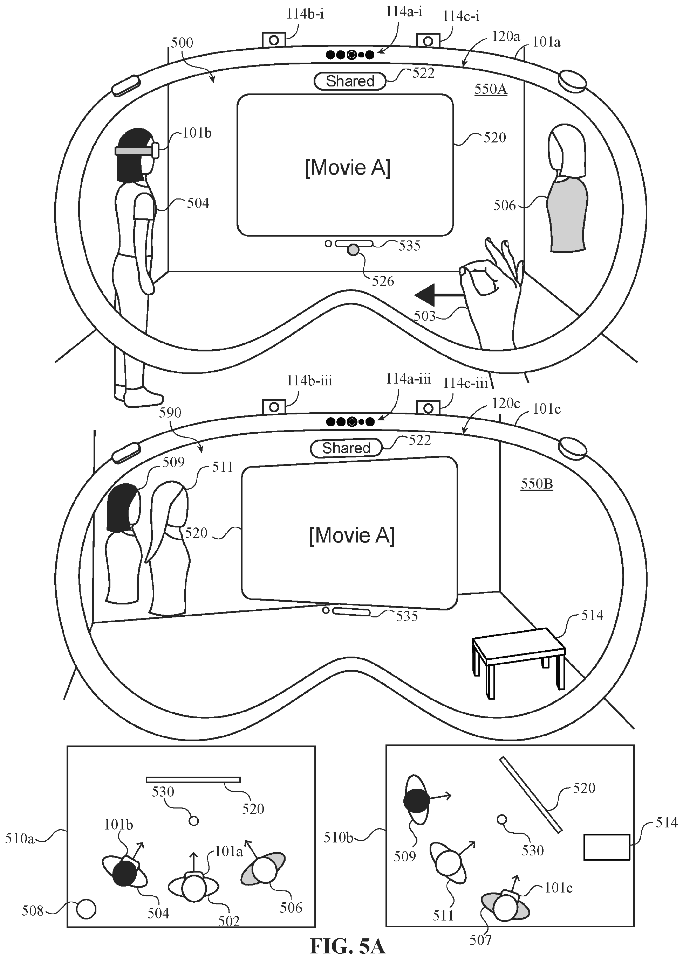

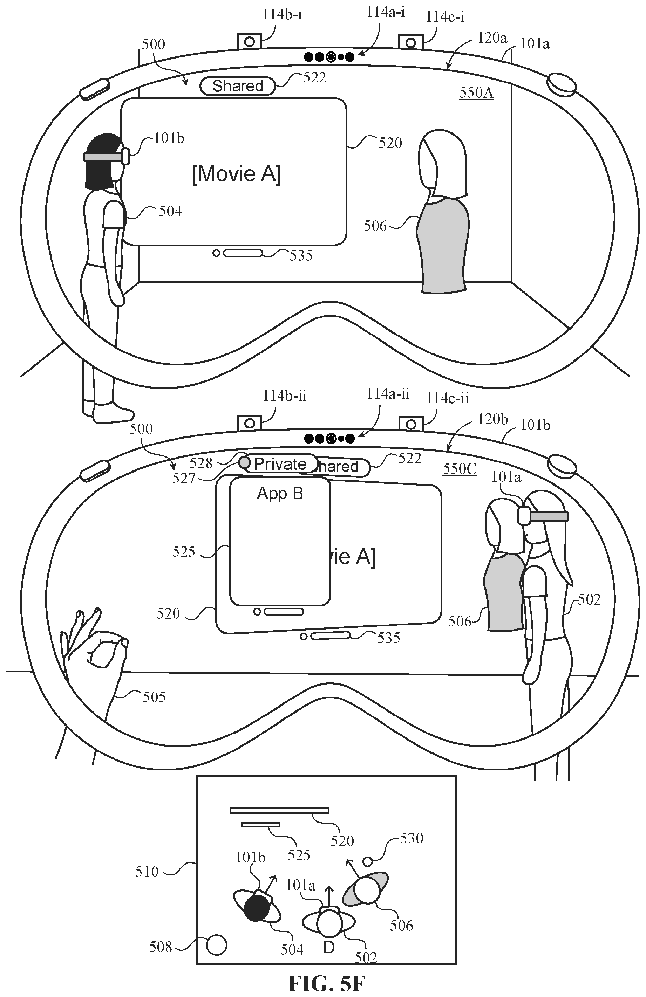

FIGs. 5A-5H illustrate examples of moving virtual objects in a three-dimensional environment that is shared between collocated and non-collocated users within a multi-user communication session according to some examples of the disclosure. In some examples, while a first electronic device 101a is in the multi-user communication session with a second electronic device 101b and a third electronic device 101c, three-dimensional environment 550A is presented using the first electronic device 101a (e.g., via display 120a) and three-dimensional environment 550B is presented using the third electronic device 101c (e.g., via display 120c). In some examples, the second electronic device 101b is presenting a similar three-dimensional environment, such as three-dimensional environment 550C in FIG. 5F (e.g., which is presented via display 120b). In some examples, the electronic devices 101a/101b/101c optionally correspond to or are similar to electronic devices 101a/101b discussed above, electronic devices 301A/301B in FIG. 3, and/or electronic devices 201A/201B in FIG. 2C. In some examples, as shown in overhead view 510a in FIG. 5A, the first electronic device 101a is being used by (e.g., worn on a head of) a first user 502 and the second electronic device 101b is being used by (e.g., worn on a head of) a second user 504. Similarly, as shown in overhead view 510b in FIG. 5A, the third electronic device 101c is optionally being used by (e.g., worn on a head of) a third user 507.

In FIG. 5A, as indicated in the overhead view 510a, the first electronic device 101a and the second electronic device 101b are collocated in physical environment 500. For example, the first electronic device 101a and the second electronic device 101b are both located in a same room that includes houseplant 508. The determination that the first electronic device 101a and the second electronic device 101b are collocated in the physical environment 500 has one or more characteristics of the determination that first electronic device 301A is collocated with third electronic device 301C in the physical environment illustrated in FIG. 3. Additionally, as shown in FIG. 5A and as indicated in the overhead view 510b, the third electronic device 101c is non-collocated with the first electronic device 101a and the second electronic device 101b in the physical environment 500. For example, as shown in FIG. 5A, the third electronic device 101c is located in physical environment 590, which is different (e.g., separate) from the physical environment 500 (e.g., the physical environment 590 corresponds to a separate room, building, location, etc.). In some examples, the determination that the third electronic device 101c is non-collocated with the first electronic device 101a and the second electronic device 101b in the physical environment 500 has one or more characteristics of the determination that second electronic device 301B is non-collocated with the first electronic device 301A and the third electronic device 301C in the physical environment of FIG. 3.

In some examples, as shown in FIG. 5A, the three-dimensional environments 550A/550B include captured portions of the physical environments 500/590 in which the electronic devices 101a/101c are located, respectively. For example, as shown in FIG. 5A, the three-dimensional environment 550A includes representations of the walls, floor, and/or ceiling of the room in which the first electronic device 101a (e.g., and the second electronic device 101b) is located. Similarly, in some examples, as shown in FIG. 5A, the three-dimensional environment 550B includes table 514 (e.g., a representation of the table 514), as well as the walls, floor, and/or ceiling of the room in which the third electronic device 101c is located. In some examples, the representations can include portions of the physical environments 500/590 viewed through a transparent or translucent display of the electronic devices 101a and 101c. In some examples, the three-dimensional environments 550A/550B have one or more characteristics of the three-dimensional environments 450A/450B described above and/or three-dimensional environments 350A/350B described above with reference to FIG. 3.

As described above with reference to FIG. 3, while electronic devices are communicatively linked in a multi-user communication session, users may be represented by visual representations of the users of the electronic devices. In FIG. 5A, because the first electronic device 101a and the second electronic device 101b are collocated in the physical environment 500, the users of the electronic devices 101a and 101b are represented in the multi-user communication session via their physical personas (e.g., bodies) that may be visible in passthrough of the physical environment 500 (e.g., rather than via virtual avatars). For example, as illustrated in FIG. 5A, the second user 504 (e.g., and the second electronic device 101b) is currently visible in the field of view of the first electronic device 101a based on the physical location of the second user 404 in the physical environment 500. In some examples, as shown in FIG. 5A, because the third user 507 of the third electronic device 101c is non-collocated with the first user 502 and the second user 504 in the physical environment 500 while in the multi-user communication session, the third user 507 is represented via a virtual representation (e.g., an avatar 506) in the three-dimensional environment 550A. Similarly, as shown in FIG. 5A, in the three-dimensional environment 550B presented at the third electronic device 101c, the first user 502 of the first electronic device 101a and the second user 504 of the second electronic device 101b are represented via virtual representations (e.g., avatars 509/511) corresponding to the first user 502 and the second user 504 (e.g., because the first electronic device 101a and the second electronic device 101c are non-collocated with the third user 101c in the physical environment 590).

As similarly described above with reference to FIG. 3, while the first user 502 of the first electronic device 101a, the second user 504 of the second electronic device 101b, and the third user 507 of the third electronic device 101c are in the multi-user communication session, the first user 502, the second user 504, and the third user 507 may be in a first spatial group within the multi-user communication session. In some examples, the first spatial group has one or more characteristics of the spatial group discussed above with reference to FIG. 3. As similarly described above, while the first user 502, the second user 504, and the third user 507 are in the first spatial group within the multi-user communication session, the users have a first spatial arrangement in the shared three-dimensional environment (e.g., represented by the locations of and/or distance between the users 502/504/507 in the overhead views 510a/510b in FIG. 5A) determined by the physical locations of the electronic devices 101a/101b/101c in their respective physical environments 500/590. Particularly, the first electronic device 101a, the second electronic device 101b, and the third electronic device 101c experience spatial truth within the first spatial group as dictated by the physical locations of and/or orientations of the first user 502, the second user 504, and the third user 507, respectively.

In some examples, as similarly described above with reference to FIG. 3, while the first electronic device 101a is in the multi-user communication session with the second electronic device 101b and the third electronic device 101c, virtual content is able to be shared between and/or interacted with by the first electronic device 101a, the second electronic device 101b, and the third electronic device 101c in the three-dimensional environments 550A/550B. For example, as shown in FIG. 5A, the first electronic device 101a and the third electronic device 101c (e.g., and the second electronic device 101b) are displaying virtual object 520 in the three-dimensional environment 550A/550B. In some examples, the virtual object 520 corresponds to an application window (e.g., a user interface), such as a media player (e.g., movie player) application running on the first electronic device 101a and/or the second electronic device 101b. In some examples, the virtual object 520 is shared between the first electronic device 101a and the second electronic device 101b in the multi-user communication session, such that the content of the virtual object 520 (e.g., the movie player user interface displaying Movie A) is visible to and/or interactive to the first user 502, the second user 504, and the third user 507 via their respective electronic devices 101a/101b/101c, as indicated by pill 522 displayed with the virtual object 520. In some examples, the pill 522 is selectable to initiate one or more sharing operations associated with the virtual object 520. For example, the pill 522 is selectable (e.g., via an air gesture, such as an air pinch or tap gesture) to share (e.g., and/or cease sharing) the content of the virtual object 520 in the multi-user communication session. Additionally, in some examples, as shown in FIG. 5A, the virtual object 520 is displayed with and/or includes grabber bar 535, which is optionally selectable to initiate movement of the virtual object 520 in the three-dimensional environment 550A/550B. In some examples, the virtual object 520 has one or more characteristics of virtual object 420 described above.

In some examples, as indicated in the overhead views 510a/510b, the virtual object 520 is displayed relative to shared origin 530 of a shared (e.g., synchronized) coordinate space/system defining the three-dimensional environment 550A/550B. Particularly, the shared origin 530 optionally functions and/or serves as a shared reference point or location in the respective three-dimensional environments (e.g., three-dimensional environments 550A/550B) presented at the electronic devices 101a/101b/101c according to which spatial truth is defined and maintained within the first spatial group that includes the first user 502, the second user 504, and the third user 507. For example, the shared origin 530 enables virtual content (e.g., including the virtual object 520) that is presented in the shared three-dimensional environment to be positioned at a same corresponding location for each user 502/504/507 at their respective electronic devices 101a/101b/101c (e.g., by positioning the virtual content relative to the shared origin 530). In some examples, the shared origin 530 (e.g., and thus the shared coordinate system) discussed above is defined based on the physical environment 500 of the local users in the multi-user communication session (e.g., the physical room in which the first electronic device 101a and the second electronic device 101b are located). In some examples, the first electronic device 101a and the second electronic device 101b are each configured to analyze the physical environment 500 to determine the shared origin 530 (e.g., and the shared coordinate system) based on Simultaneous Localization and Mapping (SLAM) data exchanged between the first electronic device 101a and the second electronic device 101b (e.g., SLAM data individually stored on the electronic devices 101a and 101b or SLAM data stored on one of the electronic devices 101a and 101b). For example, the first electronic device 101a and the second electronic device 101b utilize the SLAM data to facilitate shared understanding of one or more physical properties of the physical environment 500, such as dimensions of the physical environment, physical objects within the physical environment, a visual appearance (e.g., color and lighting characteristics) of the physical environment, etc., according to which the shared origin 530 may be defined for the first spatial group. In some examples, the first electronic device 101a and the second electronic device 101b are each configured to analyze the physical environment 500 to determine the shared origin 530 based on one or more characteristics of the other electronic device as perceived by the electronic devices individually. For example, based on one or more images captured via the external image sensors 114b-i and 114c-i, the first electronic device 101a analyzes a position of the second electronic device 101b in the physical environment 500 relative to the viewpoint of the first electronic device 101a and, based on one or more images captured via the external image sensors 114b-ii and 114c-ii (e.g., illustrated in FIG. 5F), the second electronic device 101b analyzes a position of the first electronic device 101a in the physical environment 500 relative to the viewpoint of the second electronic device 101b to establish spatial truth within the first spatial group and thus define the shared origin 530.

In FIG. 5A, while the first electronic device 101a is in the multi-user communication session with the second electronic device 101b and the third electronic device 101c, the first electronic device 101a detects an input corresponding to a request to move the virtual object 520 in the three-dimensional environment 550A. For example, as shown in FIG. 5A, while displaying the virtual object 520 in the three-dimensional environment 550A, the first electronic device 101a detects an air pinch and drag gesture performed by hand 503 of the first user 502, optionally while gaze 526 of the first user 502 is directed to the grabber bar 535 associated with the virtual object 520 in the three-dimensional environment 550A. In some examples, as indicated in FIG. 5A, the input detected by the first electronic device 101a includes movement of the hand 503 of the first user 502 (e.g., while maintaining the air pinch gesture) in space relative to the viewpoint of the first electronic device 101a (e.g., in a respective direction and/or with a respective magnitude (of speed, distance, and/or duration)). It should be understood that additional or alternative inputs are possible, such as air tap gestures, gaze and dwell inputs, verbal commands, etc.

As used herein, movement of a shared virtual object within a multi-user communication session triggers spatial refinement in a shared three-dimensional environment of the multi-user communication session. In some examples, spatial refinement corresponds to movement and/or repositioning of avatars and/or shared objects (e.g., triggered by the movement of a shared object) that enables spatial truth to be maintained within a respective spatial group of users, as discussed in more detail below.

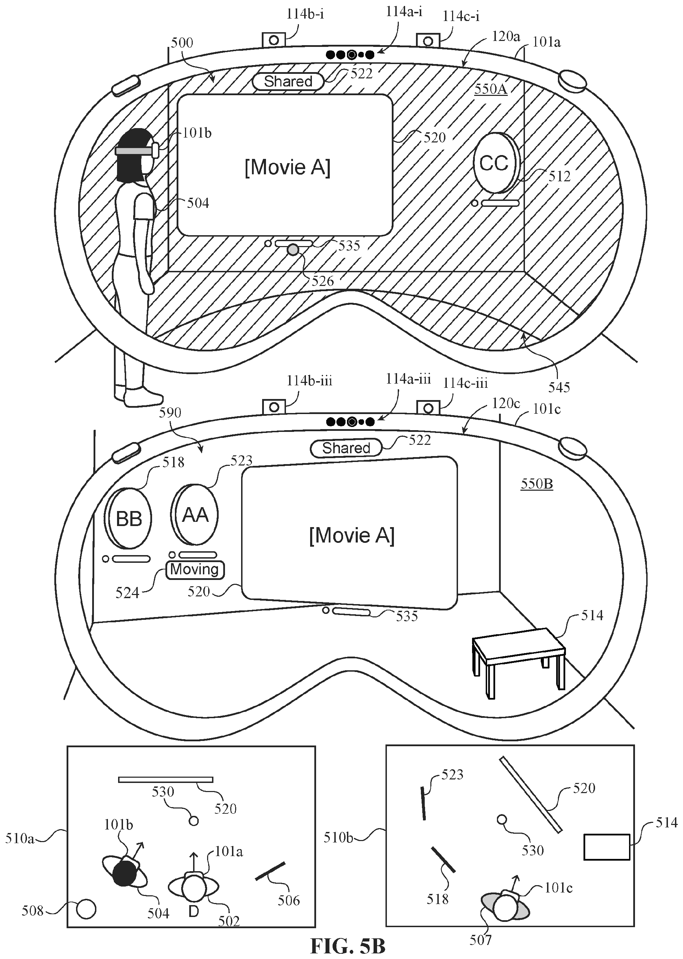

In some examples, in response to detecting the input provided by the hand 503 of the first user 502 corresponding to the request to move the virtual object 520 in the three-dimensional environment 550A, the first electronic device 101a initiates spatial refinement within the multi-user communication session. Particularly, in some examples, as shown from FIG. 5A to FIG. 5B, the first electronic device 101a moves the (e.g., shared) virtual objects within the three-dimensional environment 550A laterally (e.g., horizontally) relative to the viewpoint of the first electronic device 101a, notably the virtual object 520 and the visual representation of the third user 507 of the third electronic device 101c, in accordance with the movement of the hand 503. In some examples, as shown in FIG. 5B, when and/or while spatial refinement is triggered in the multi-user communication session (e.g., while the first user 502 continues to provide the air pinch and drag gesture illustrated in FIG. 5A), the first electronic device 101a replaces display of the avatar 506 in the three-dimensional environment 550A with spatial coin 512. For example, as shown in FIG. 5B, the first electronic device 101a replaces display of the avatar 506 corresponding to the third user 507 with a two-dimensional representation of the third user 507 (e.g., the spatial coin 512), as illustrated in the overhead view 510a. In some examples, as shown in FIG. 5B, the spatial coin 512 includes an indication of a name or other identifier of the third user 507 (e.g., initials "CC") and/or a two-dimensional visual representation (e.g., image, photograph, icon, cartoon, sketch, etc.) of the third user 507. In some examples, the spatial coin 512 provides a visual indication to the first user 502 that the interaction with the virtual object 520 has triggered spatial refinement in the multi-user communication session (e.g., and will thus result in the repositioning of the virtual object 520 and the visual representation of the third user 507 of the third electronic device 101c as described below).

Additionally, in some examples, as shown in FIG. 5B, when and/or while spatial refinement is triggered in the multi-user communication session, the first electronic device 101a displays virtual element 545 (e.g., a virtual ring, circle, platter, disc, or other virtual indication) in the three-dimensional environment 550A. In some examples, as illustrated in FIG. 5B, the virtual element 545 is displayed below the virtual objects that are being moved according to the principles of spatial refinement, notably the virtual object 520 and the spatial coin 512 discussed above, in the three-dimensional environment 550A from the viewpoint of the first electronic device 101a. For example, in FIG. 5B, the first electronic device 101a displays the virtual element 545 on a floor or ground of the physical environment 500 that is visible in the three-dimensional environment 550A from the viewpoint of the first electronic device 101a, visually indicating to the first user 502 that the virtual object 520 and the spatial coin 512 are and/or will be moved in the three-dimensional environment 550A in accordance with the input provided by the first user 502. In some examples, the virtual element 545 remains displayed in the three-dimensional environment 550A while spatial refinement is active in the multi-user communication session (e.g., for the duration that the first user 502 interacts with the virtual object 520 in the three-dimensional environment 550A). Additionally, in some examples, as illustrated in FIG. 5B, the first electronic device 101a reduces a visual prominence of the passthrough of the physical environment 500 that is included in and/or that is visible in the three-dimensional environment 550A. For example, as shown in FIG. 5A, the first electronic device 101a darkens (e.g., reduces the brightness of), blurs, fades, or otherwise partially occludes the portions of the three-dimensional environment 550A surrounding the virtual object 520 and the spatial coin 512 in the three-dimensional environment 550A while spatial refinement is active in the multi-user communication session and while the virtual object 520 is being moved in the three-dimensional environment 550A relative to the viewpoint of the first electronic device 101a.

In some examples, as shown in FIG. 5B, as similarly discussed above, while the first electronic device 101a is detecting the air pinch and drag gesture directed to the virtual object 520 provided by the hand 503 of the first user 502, the third electronic device 101c updates display of the avatars 509/511 corresponding to the first user 502 and the second user 504 in the three-dimensional environment 550B. For example, as shown in FIG. 5B, the third electronic device 101c replaces the avatars 509/511, as indicated in overhead view 510b, with a two-dimensional representation of the first user 502, such as spatial coin 518, and a two-dimensional representation of the second user 504, such as spatial coin 523, respectively, in the three-dimensional environment 550B. In some examples, as shown in FIG. 5B and as similarly discussed above, the spatial coin 518 includes an indication of a name or other identifier of the second user 504 (e.g., initials "BB") and/or a two-dimensional visual representation (e.g., image, photograph, icon, cartoon, sketch, etc.) of the second user 504, and the spatial coin 523 includes an indication of a name or other identifier of the first user 502 (e.g., initials "AA") and/or a two-dimensional visual representation (e.g., image, photograph, icon, cartoon, sketch, etc.) of the first user 502. In some examples, the spatial coins 518/523 provide a visual indication to the third user 507 that one of the local users (e.g., the first user 502 or the second user 504) is interacting with the virtual object 520 (e.g., is moving the virtual object 520 as described above).

Additionally, in some examples, the third electronic device 101c displays indication 524 of the movement of the virtual object 520 in the three-dimensional environment 550B. Particularly, as illustrated in FIG. 5B, while spatial refinement is active in the multi-user communication session due to the movement of the virtual object 520 by the first user 502 at the first electronic device 101a, the third electronic device 101c displays the indication 524 with the visual representation of the user who triggered spatial refinement in the multi-user communication session. For example, as shown in FIG. 5B, the indication 524 is displayed with (e.g., below) the spatial coin 523 corresponding to the first user 502 in the three-dimensional environment 550B, indicating to the third user 507 that the first user 502 is interacting with (e.g., moving) the virtual object 520 and thereby triggering spatial refinement. In some examples, the first electronic device 101a transmits an indication of the input provided by the first user 502 to the third electronic device 101c when the input is detected by the first electronic device 101a, which enables and/or causes the third electronic device 101c to update display of the visual representation of the first user 502 and the visual representation of the second user 504 (e.g., the local users in the multi-user communication session) in the three-dimensional environment 550B (e.g., from the three-dimensional avatars to the two-dimensional spatial coins) and display the indication 524 in the three-dimensional environment 550B. Further, in some examples, as shown in FIG. 5B, because the movement input directed to the virtual object 520 is being provided by the first user 502 of the first electronic device 101a, the third electronic device 101c forgoes displaying the virtual element 545 discussed above in the three-dimensional environment 550B.

In some examples, while the first electronic device 101a, the second electronic device 101b, and the third electronic device 101c are in the multi-user communication session and while the virtual object 520 is shared within the multi-user communication session, interaction with the virtual object 520 by one of the local users (e.g., the first user 502 of the first electronic device 101a and the second user 504 of the second electronic device 101b) in the multi-user communication session causes the local user to become a driver of the multi-user communication session. For example, the interaction with (e.g., movement of) the virtual object 520 by the first user 502 of the first electronic device 101a, which triggers spatial refinement, causes the first user 502 to become the driver of the multi-user communication session, as indicated by the label "D" in the overhead view 510a in FIG. 5B. In some examples, as described in more detail below, assigning and/or changing the driver of the multi-user communication session causes the shared origin 530 of the shared coordinate system, according to which spatial truth is defined, to be updated at the electronic devices 101a/101b/101c in the multi-user communication session.

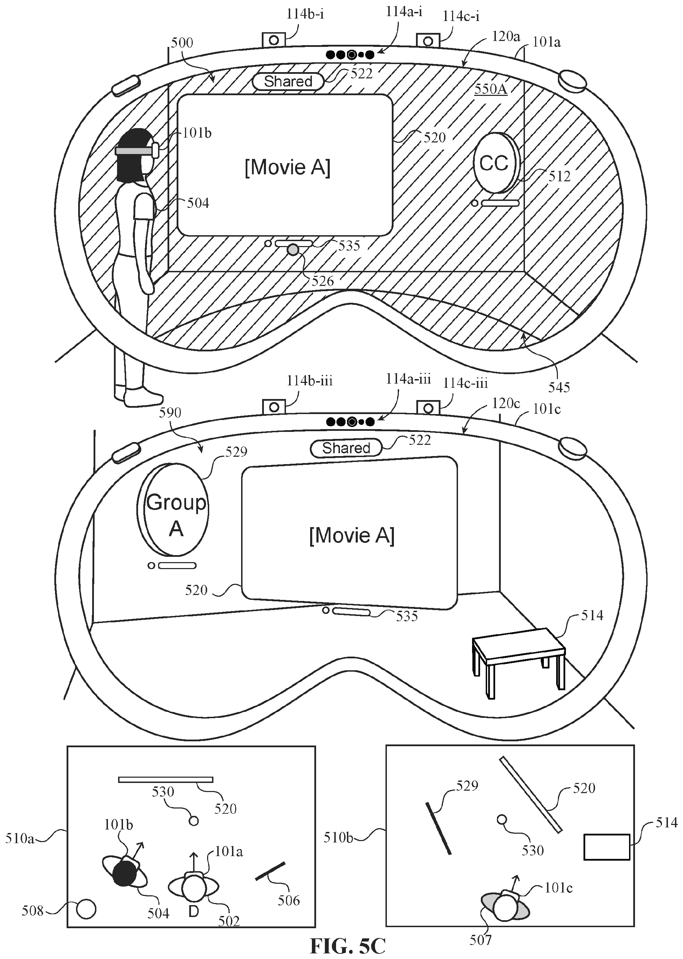

In some examples, as an alternative to the display of the indication 524 in the three-dimensional environment 550B when spatial refinement is triggered when the virtual object 520 is interacted with (e.g., moved) by the first user 502 at the first electronic device 101a, the third electronic device 101c displays group spatial coin 529 in the three-dimensional environment 550B, as shown in FIG. 5C. For example, as an alternative to FIG. 5B, in FIG. 5C, the third electronic device 101c displays the group spatial coin 529 representing the group of local users ("Group A") in the multi-user communication session, including the first user 502 of the first electronic device 101a and the second user 504 of the second electronic device 101b, in the three-dimensional environment 550B. Particularly, as illustrated in FIG. 5C, the third electronic device 101c replaces the avatars 518/523 corresponding to the first user 502 and the second user 504 with the group spatial coin 529 instead of with the spatial coins 518/523 and the indication 524 in the three-dimensional environment 550B, while still providing a visual indication to the third user 507 that one of the local users (e.g., the first user 502 or the second user 504) is interacting with the virtual object 520 (e.g., is moving the virtual object 520 as described above). Combining the visual representations of the first user 502 and the second user 504 into the single group spatial coin 529 also helps reduce clutter and/or compactness of virtual objects and elements that are displayed on the display 120c of the third electronic device 101c, which reduces the number of virtual objects and elements that are moving in the periphery of the third user 507, thereby reducing eye strain, as another advantage. In some examples, as shown in FIG. 5C, the group spatial coin 529 includes an indication of a group name or other group identifier of the local users (e.g., "Group A") and/or a two-dimensional visual representation (e.g., image, photograph, icon, cartoon, sketch, etc.) of the group of local users. Alternatively, in some examples, the group spatial coin 529 includes (e.g., smaller) individual indications of each of the local users who are included in the group of local users, such as the names or other identifiers of the first user 502 and the second user 504, and/or two-dimensional visual representations (e.g., images, photographs, icons, cartoons, sketches, etc.) of each of the local users who are included in the group of local users. Additionally, in some examples, the group spatial coin 529 is displayed at a location in the three-dimensional environment 550B corresponding to the (e.g., previous) location of the visual representation of the user providing the input moving the virtual object 520. For example, in FIG. 5C, the group spatial coin 529 is displayed at the location of (e.g., in place of) the avatar 511 corresponding to the first user 502 in the three-dimensional environment 550B (e.g., because the first user 502 is moving the virtual object 520 at the first electronic device 101a as discussed above).

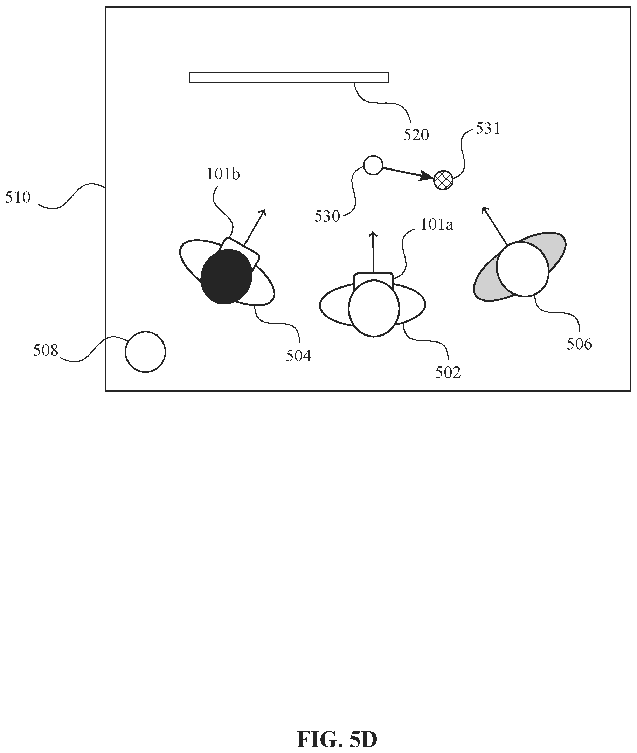

In some examples, as mentioned above, while the first electronic device 101a, the second electronic device 101b, and the third electronic device 101c are in the multi-user communication session and while the virtual object 520 is shared within the multi-user communication session, interaction with the virtual object 520 by one of the local users (e.g., the first user 502 of the first electronic device 101a and the second user 504 of the second electronic device 101b) in the multi-user communication session causes the local user to become the driver of the multi-user communication session. For example, the movement of the virtual object 520 by the first user 502 of the first electronic device 101a discussed above causes the first user 502 to become the driver of the multi-user communication session, as illustrated by the D label in the overhead view 510a in FIGs. 5B and 5C*.* In some examples, when a respective local user in the multi-user communication session becomes the driver of the multi-user communication session, spatial truth between the users in the multi-user communication session is redefined to be relative to and/or based on the respective local user. Particularly, for multi-user communication sessions that include local users (e.g., users who are collocated in a same physical environment), the local users are each associated with a local origin that is identified and/or selected individually and/or uniquely by the respective electronic devices associated with the local users. For example, in the physical environment 500, the first user 502 of the first electronic device 101a is associated with a first local origin and the second user 504 of the second electronic device 101b is associated with a second local origin, that is different from the first local origin. As an example, the local origin that is unique to and/or private to a respective electronic device associated with a local user in the multi-user communication session is used to define a personal and/or private coordinate space/system of the physical environment 500 according to which private content is displayed at the respective electronic device, such as the private application window 330 described above with reference to FIG. 3. As illustrated in overhead view 510 in FIG. 5D, for example, the first user 502 of the first electronic device 101a is associated with first local origin 531 corresponding to a first physical location in the physical environment 500 while in the multi-user communication session.

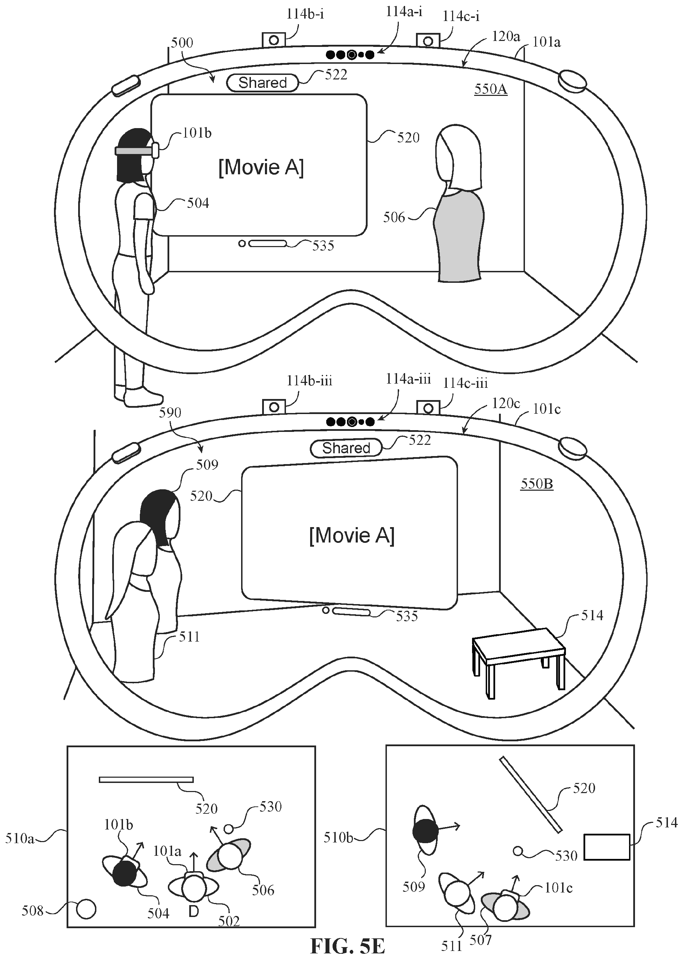

As mentioned above, in some examples, assigning and/or changing the driver of the multi-user communication session causes the shared origin 530 of the shared coordinate system, according to which spatial truth is defined for the users in the first spatial group, to be updated at the electronic devices 101a/101b/101c in the multi-user communication session. Particularly, as illustrated in the overhead view 510 in FIG. 5D, when the first user 502 of the first electronic device 101a becomes the driver of the multi-user communication session, the shared origin 530 is updated to correspond to the first local origin 531 that is associated with the first user 502 of the first electronic device 101a in the multi-user communication session. For example, as indicated in the overhead view 510 in FIG. 5D, the physical location corresponding to the shared origin 530 in the physical environment 500 is updated to correspond to the physical location corresponding to the first local origin 531 defined/selected by the first electronic device 101a in the multi-user communication session. In some examples, the first electronic device 101a transmits data (e.g., including coordinates) corresponding to the first local origin 531 in the physical environment 500 to the second electronic device 101b and the third electronic device 101c that enables the second electronic device 101b and the third electronic device 101c to synchronize the location of the shared origin 530 to the location of the first local origin 531. For example, the third electronic device 101c, which is located separately in the physical environment 590, identifies and/or determines a location in the physical environment 590 that shares the same coordinates with the first local origin 531. Accordingly, in some examples, the shared coordinate system according to which the virtual object 520 and the avatar 506 corresponding to the third user 507 of the third electronic device 101c are displayed for the first user 502 and the second user 504 in the physical environment 500 is redefined to be relative to (e.g., centered on) the location of the first local origin 531 in the physical environment 500, as illustrated in FIG. 5E. For example, as illustrated in the overhead view 510a/510b in FIG. 5E, the location of the shared origin 530 is updated to correspond to the location of the first local origin 531 illustrated in the overhead view 510 in FIG. 5D.

In some examples, as shown in FIG. 5E, in response to detecting the input provided by the hand 503, the first electronic device 101a moves the virtual object 520 in the three-dimensional environment 550A relative to the viewpoint of the first electronic device 101a in accordance with the movement of the hand 503. For example, as shown in FIG. 5E, the first electronic device 101a moves the virtual object 520 leftward in the three-dimensional environment 550A relative to the viewpoint of the first electronic device 101a in accordance with the movement of the hand 503. Additionally, in some examples, in response to and/or after detecting a conclusion (e.g., termination) of the input provided by the hand 503 (e.g., a release of the air pinch gesture provided by the hand 503) detected by the first electronic device 101a, the first electronic device 101a redisplays the avatar 506 in the three-dimensional environment 550A (e.g., redisplays the visual representation of the third user 507 as a three-dimensional avatar (e.g., instead of the spatial coin 512 discussed above)).

Additionally, as defined herein, the above movement of the virtual object 520, which is a shared object in the multi-user communication session, optionally triggers spatial refinement. Particularly, in some examples, as shown from FIG. 5A to FIG. 5E, the first electronic device 101a moves the avatar 506 with the virtual object 520 in the three-dimensional environment 550A relative to the viewpoint of the first electronic device 101a. For example, the first electronic device 101a concurrently moves the avatar 506 and the virtual object 520 leftward in the three-dimensional environment 550A relative to the viewpoint of the first electronic device 101a in accordance with the movement of the hand 503 in FIG. 5A. Similarly, in some examples, to maintain spatial truth within the first spatial group of the first user 502, the second user 504, and the third user 507, as defined herein, the third electronic device 101c moves the avatars 509/511 corresponding to the first user 502 and the second user 504, respectively, in the three-dimensional environment 550B based on the movement input detected at the first electronic device 101a (e.g., without moving the virtual object 520 in the three-dimensional environment 550B). Particularly, because the movement input detected at the first electronic device 101a causes the shared virtual objects (e.g., the avatar 506 and the virtual object 520) to be moved (e.g., leftward) in the three-dimensional environment 550A relative to the viewpoint of the first electronic device 101a, the third electronic device 101c moves the avatars 509/511 rightward (e.g., by a same or similar amount or degree, such as distance) in the three-dimensional environment 550B relative the viewpoint of the third electronic device 101c (e.g., such that a spatial arrangement and distribution of the second user 504, the avatar 506 and the virtual object 520 relative to the viewpoint of the first electronic device 101a in the three-dimensional environment 550A corresponds to (e.g., is the same as) a spatial arrangement and distribution of the avatars 509/511 and the virtual object 520 relative to the viewpoint of the third electronic device 101c in the three-dimensional environment 550B), as shown in FIG. 5E.

In FIG. 5F, the second electronic device 101b detects an input corresponding to a request to share an alternative (e.g., a different) virtual object in the multi-user communication session that includes the first electronic device 101a, the second electronic device 101b, and the third electronic device 101c. For example, as shown in FIG. 5F, while the virtual object 520 is currently shared in the multi-user communication session (e.g., as indicated by the pill 522 displayed with the virtual object 520), the second electronic device 101b detects an input provided by the second user 502 corresponding to a request to share the content of virtual object 525 that is currently displayed in three-dimensional environment 550C presented at the second electronic device 101b. In some examples, as indicated by pill 528 that is displayed with the virtual object 525 in the three-dimensional environment 550C, the virtual object 525 is currently private to the second user 504 of the second electronic device 101b (e.g., the content of the virtual object 525 is only visible to and/or interactive to the second user 504). For example, as shown in FIG. 5F, the virtual object 525 is not displayed in and/or is not visible to the first user 502 in the three-dimensional environment 550A presented at the first electronic device 101a. In some examples, the virtual object 525 is or includes a user interface that is associated with a respective application (e.g., App B) running on the second electronic device 101b. In some examples, as shown in FIG. 5F, the input corresponding to the request to share the content of the virtual object 525 includes interaction with the pill 528 that is displayed with the virtual object 525 in the three-dimensional environment 550C. For example, as shown in FIG. 5F, the second electronic device 101b detects an air pinch gesture performed by hand 505 of the second user 504, optionally while gaze 527 of the second user 504 is directed to the pill 528 in the three-dimensional environment 550C. In some examples, the interaction with the pill 528 initiates a process to share the content of the virtual object 525 with the first user 502 of the first electronic device 101a and/or the third user 507 of the third electronic device 101c, optionally including selecting/designating the first user 502 and/or the third user 507 as recipients of the sharing of the content of the virtual object 525 within the multi-user communication session.

In some examples, in response to detecting the input corresponding to the request to share the content of the virtual object 525 within the multi-user communication session, the second electronic device 101b transmits indications to the first electronic device 101a and/or the third electronic device 101c of the request to share the content of the virtual object 525 with the first electronic device 101a and/or the third electronic device 101c. In some examples, sharing the content of the virtual object 525 includes and/or requires receipt of acceptance, provided by the first electronic device 101a and/or the third electronic device 101c, at the second electronic device 101b of the request to share the content of the virtual object 525 in the multi-user communication session. For example, the first electronic device 101a and/or the third electronic device 101c transmit the acceptance of the request to share the content of the virtual object 525 to the second electronic device 101b in response to detecting input provided by the first user 502 and/or the third user 507 corresponding to the acceptance of the request (e.g., such as via a selection of an accept option that is presented at the first electronic device 101a and/or the third electronic device 101c in their respective three-dimensional environments).

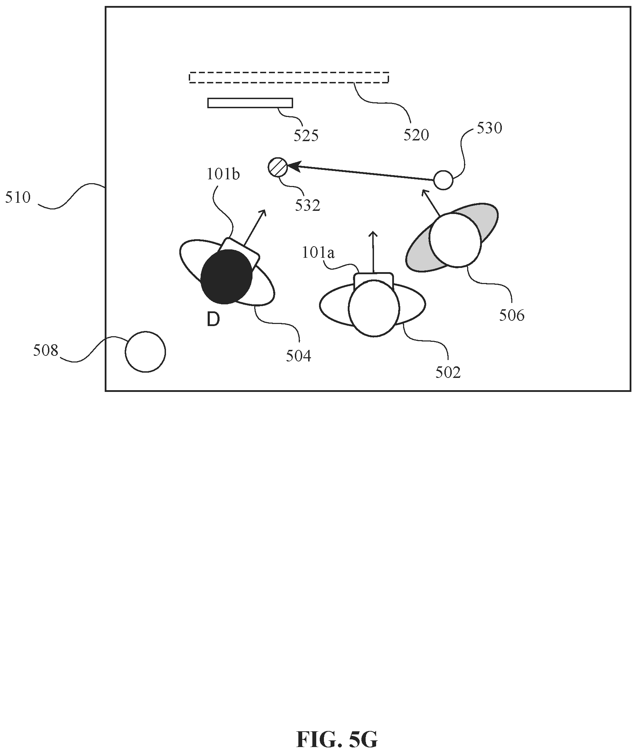

In FIG. 5G, the second electronic device 101b receives an indication that the request to share the content of the virtual object 525 in the multi-user communication session has been accepted by the first electronic device 101a and/or the third electronic device 101c. Accordingly, the second electronic device 101b shares the content of the virtual object 525 with (e.g., transmits image data or other display data corresponding to the content of the virtual object 525 to) the first electronic device 101a and/or the third electronic device 101c, which causes and/or enables the first electronic device 101a and/or the third electronic device 101c to display the virtual object 525 in their respective three-dimensional environments. In some examples, when the content of the virtual object 525 becomes shared in the multi-user communication session, the content of the virtual object 520 ceases to be shared, as indicated in dashed outline in overhead view 510 in FIG. 5G.

In some examples, while the first electronic device 101a, the second electronic device 101b, and the third electronic device 101c are in the multi-user communication session, the sharing of content (e.g., new and/or different content) within the multi-user communication session by one of the local users (e.g., the first user 502 of the first electronic device 101a and the second user 504 of the second electronic device 101b) in the multi-user communication session causes the local user to become the (e.g., new or updated) driver of the multi-user communication session. For example, the sharing of the content of the virtual object 525 by the second user 504 of the second electronic device 101b discussed above causes the second user 504 to become the driver of the multi-user communication session (e.g., and causes the first user 502 to no longer be the driver of the multi-user communication session), as illustrated by the D label in the overhead view 510 in FIG. 5G. In some examples, as similarly discussed above, when a respective local user in the multi-user communication session becomes the driver of the multi-user communication session, spatial truth between the users in the multi-user communication session is redefined to be relative to and/or based on the local origin that is associated with the respective local user. As illustrated in overhead view 510 in FIG. 5G, for example, the second user 504 of the second electronic device 101b is associated with second local origin 532 (e.g., which the virtual object 525 was displayed relative to in the three-dimensional environment 550C in FIG. 5F) corresponding to a second physical location in the physical environment 500 while in the multi-user communication session.

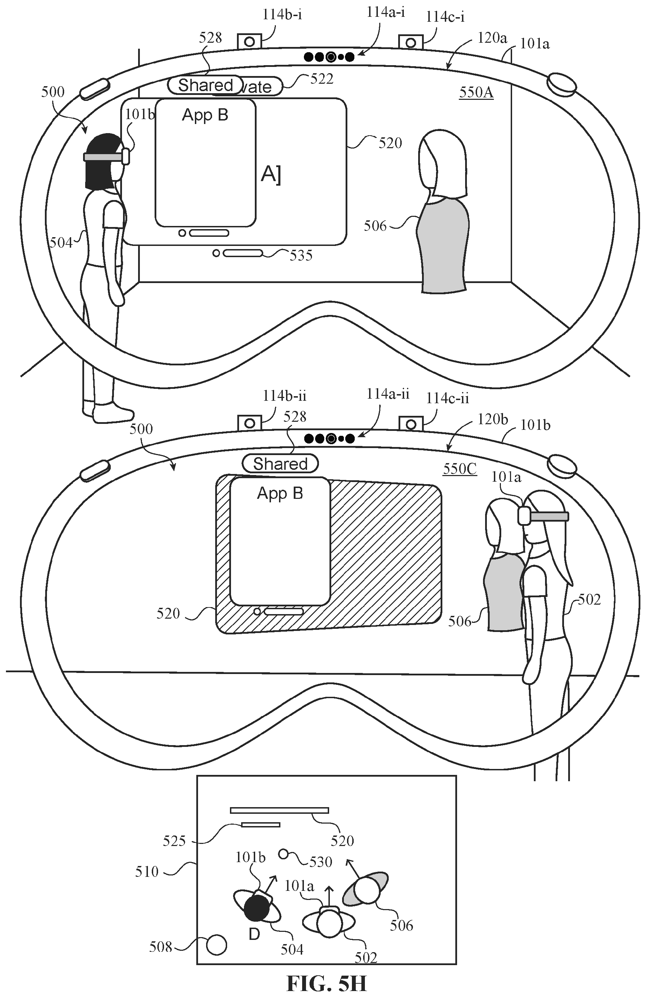

As similarly discussed above, in some examples, assigning and/or changing the driver of the multi-user communication session causes the shared origin 530 of the shared coordinate system, according to which spatial truth is defined for the users in the first spatial group, to be updated at the electronic devices 101a/101b/101c in the multi-user communication session. Particularly, as illustrated in the overhead view 510 in FIG. 5G, when the second user 504 of the second electronic device 101b becomes the driver of the multi-user communication session, the shared origin 530 is updated to correspond to the second local origin 532 that is associated with the second user 504 of the second electronic device 101b in the multi-user communication session. For example, as indicated in the overhead view 510 in FIG. 5G, the physical location corresponding to the shared origin 530 in the physical environment 500 is updated to correspond to the physical location corresponding to the second local origin 532 defined/selected by the second electronic device 101b in the multi-user communication session. In some examples, the second electronic device 101b transmits data (e.g., including coordinates) corresponding to the second local origin 532 in the physical environment 500 to the first electronic device 101a and/or the third electronic device 101c that enables the first electronic device 101a and/or the third electronic device 101c to synchronize the location of the shared origin 530 to the location of the second local origin 532 in the physical environment 500. Accordingly, in some examples, the shared coordinate system according to which the virtual object 525 and the avatar 506 corresponding to the third user 507 of the third electronic device 101c are displayed for the first user 502 and the second user 504 in the physical environment 500 is redefined to be relative to (e.g., centered on) the location of the second local origin 532 in the physical environment 500, as illustrated in FIG. 5H. For example, as illustrated in the overhead view 510 in FIG. 5H, the location of the shared origin 530 is updated to correspond to the location of the second local origin 532 illustrated in the overhead view 510 in FIG. 5G.

In some examples, as shown in FIG. 5H, when the content of the virtual object 525 is shared in the multi-user communication session, the first electronic device 101a displays the virtual object 525 in the three-dimensional environment 550A. Additionally, because the content of the virtual object 525 has been shared in the multi-user communication session, the second electronic device 101b updates the pill 528 to indicate that the virtual object 525 is a shared object in the multi-user communication session (e.g., and is thus now visible by and/or interactive to the other users in the multi-user communication session). In some examples, as alluded to above, the virtual object 525 is displayed by the electronic devices 101a/101b/101c relative to the updated location of the shared origin 530 illustrated in the overhead view 510 in FIG. 5H. Additionally, in some examples, because the sharing of the content of the virtual object 525 causes the content of the virtual object 520 to no longer be shared in the multi-user communication session, the content of the virtual object 520 returns to being private to the first user 502 of the first electronic device 101a, as indicated by the pill 522 ("Private") in the three-dimensional environment 550A. For example, as illustrated in FIG. 5H, the virtual object 520 ceases to be displayed in the three-dimensional environment 550C and/or is no longer visible to and/or interactive to the second user 504 of the second electronic device 101b in the three-dimensional environment 550C (e.g., as indicated by the shading of the virtual object 520 in FIG. 5H). In some examples, when the virtual object 520 returns to being a private object at the first electronic device 101a, the first electronic device 101a displays the virtual object 520 as being relative to the first local origin 531 discussed previously above (e.g., rather than being relative to the updated location of the shared origin 530 in FIG. 5H).

It is understood that additional and/or alternative interactions with shared virtual content by one or more local users in the multi-user communication session cause the local user to become the driver of the multi-user communication session. For example, the operation of resizing a virtual object (e.g., such as the resizing of the virtual object 420 described previously above with reference to FIGs. 4K-4M) is an operation that causes the role of the driver of the multi-user communication session to be assigned to and/or associated with the local user providing the input to resize the virtual object within the multi-user communication session. As another example, an operation that causes the role of the driver to change in the multi-user communication session is a recentering input (e.g., an input provided by a local user corresponding to a request to update or reset a spatial arrangement of the virtual content (e.g., shared virtual objects and visual representations (e.g., avatars) of remote users relative to a viewpoint of the local user)). Additionally, it is understood that, when a respective local user becomes the driver of the multi-user communication session, the electronic devices communicating within the multi-user communication session, including the electronic device associated with the respective local user, do not provide or present a visual indication or other notification that the respective local user has become the driver of the multi-user communication session. Therefore, in some examples, the electronic devices in the multi-user communication session do not provide or present a visual indication or other notification that the location of the shared origin, and thus the shared coordinate space/system, has been updated in their respective three-dimensional environments.

Accordingly, as outlined above, providing systems and methods for facilitating movement of virtual content in a shared three-dimensional environment while in a multi-user communication session advantageously enables users to participate in the multi-user communication session and experience synchronized movement of and interaction with the virtual content, thereby improving user-device interaction. Additionally, providing the role of a driver of the multi-user communication session, which is assigned to the local user in the multi-user communication session who is providing the input for moving the virtual content (e.g., including similar and/or related interactions) in the shared three-dimensional environment, for synchronizing the shared spatial coordinate space/system according to which the virtual content is displayed in the shared three-dimensional environment reduces the frequency of which data is communicated between the electronic devices for maintaining the shared spatial coordinate space/system, which helps conserve computing resources and therefore power, as another benefit.

Attention is now directed towards example interaction with a visual representation of a non-collocated user in a shared three-dimensional environment presented at a plurality of electronic devices that is collocated within a physical environment while participating with a non-collocated electronic device associated with the non-collocated user in a multi-user communication session.

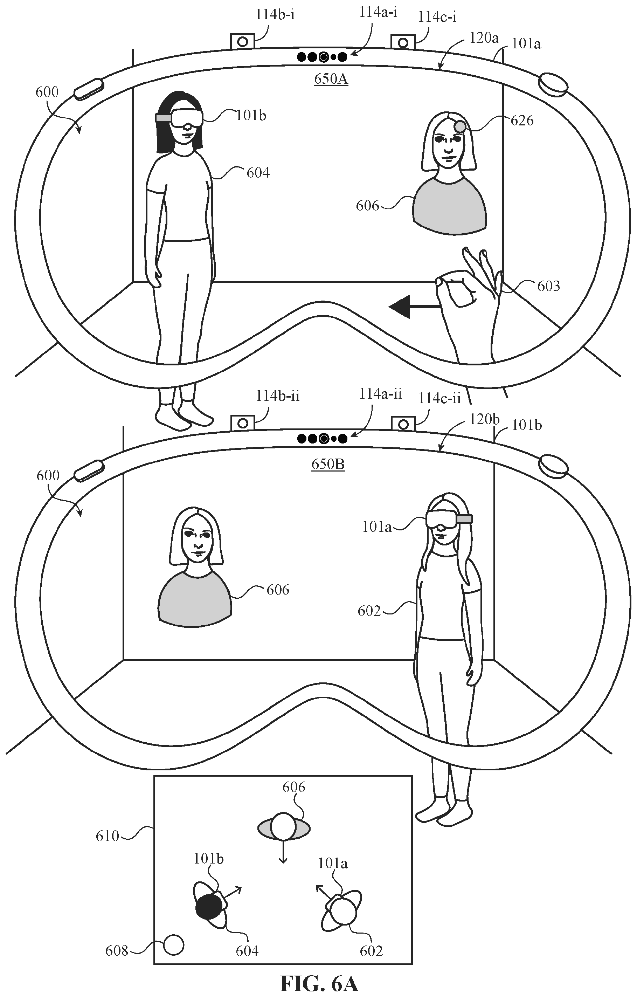

FIGs. 6A-6C illustrate examples of moving a visual representation of a non-collocated user in a three-dimensional environment that is shared between collocated users and the non-collocated user within a multi-user communication session according to some examples of the disclosure. In some examples, while a first electronic device 101a is in the multi-user communication session with a second electronic device 101b and a third electronic device (e.g., corresponding to third electronic device 101c above), three-dimensional environment 650A is presented using the first electronic device 101a (e.g., via display 120a) and three-dimensional environment 550B is presented using the second electronic device 101b (e.g., via display 120b). In some examples, the electronic devices 101a/101b optionally correspond to or are similar to electronic devices 101a/101b discussed above, electronic devices 301A/301B in FIG. 3, and/or electronic devices 201A/201B in FIG. 2C. In some examples, as shown in overhead view 610 in FIG. 6A, the first electronic device 101a is being used by (e.g., worn on a head of) a first user 602 and the second electronic device 101b is being used by (e.g., worn on a head of) a second user 604.

In FIG. 6A, as indicated in the overhead view 610, the first electronic device 101a and the second electronic device 101b are collocated in physical environment 600. For example, the first electronic device 101a and the second electronic device 101b are both located in a same room that includes houseplant 608. The determination that the first electronic device 101a and the second electronic device 101b are collocated in the physical environment 600 has one or more characteristics of the determination that first electronic device 301A is collocated with third electronic device 301C in the physical environment illustrated in FIG. 3.

In some examples, as shown in FIG. 6A, the three-dimensional environments 650A/650B include captured portions of the physical environment 600 in which the electronic devices 101a/101b are located. For example, as shown in FIG. 6A, the three-dimensional environments 650A/650B include representations of the walls, floor, and/or ceiling of the room in which the first electronic device 101a and the second electronic device 101b are located, but from the unique viewpoints of the first electronic device 101a and the second electronic device 101b in the physical environment 600. In some examples, the representations can include portions of the physical environment 600 viewed through a transparent or translucent display of the electronic devices 101a and 101b. In some examples, the three-dimensional environments 650A/650B have one or more characteristics of the three-dimensional environments 550A/550B/550C described above, three-dimensional environments 450A/450B described above with reference to FIGs. 4A-4M, and/or three-dimensional environments 350A/350B described above with reference to FIG. 3.

As described above with reference to FIG. 3, while electronic devices are communicatively linked in a multi-user communication session, users may be represented by visual representations of the users of the electronic devices. In FIG. 6A, because the first electronic device 101a and the second electronic device 101b are collocated in the physical environment 600, the users of the electronic devices 101a and 101b are represented in the multi-user communication session via their physical personas (e.g., bodies) that may be visible in passthrough of the physical environment 600 (e.g., rather than via virtual avatars). For example, as illustrated in FIG. 6A, the second user 604 (e.g., and the second electronic device 101b) is currently visible in the field of view of the first electronic device 101a and the first user 602 (e.g., and the first electronic device 101a) is currently visible in the field of view of the second electronic device 101b, based on the physical locations of the first user 602 and the second user 604 in the physical environment 600.

Additionally, in some examples, the third electronic device (not shown) is non-collocated with the first electronic device 101a and the second electronic device 101b in the physical environment 600. For example, in FIG. 6A, the third electronic device is located in a different (e.g., separate) physical environment from the physical environment 600 (e.g., a separate room, building, location, etc.). In some examples, the determination that the third electronic device is non-collocated with the first electronic device 101a and the second electronic device 101b in the physical environment 600 has one or more characteristics of the determination that second electronic device 301B is non-collocated with the first electronic device 301A and the third electronic device 301C in the physical environment of FIG. 3. Accordingly, in some examples, as shown in FIG. 6A, because a user of the third electronic device (e.g., a third user) is non-collocated with the first user 602 and the second user 604 in the physical environment 600 while in the multi-user communication session, the user of the third electronic device is represented via a virtual representation (e.g., an avatar 606) in the three-dimensional environments 650A/650B. In some examples, the avatar 606 has one or more characteristics of avatar 506 described above.

As similarly described above with reference to FIG. 3, while the first user 602 of the first electronic device 101a, the second user 604 of the second electronic device 101b, and the user of the third electronic device are in the multi-user communication session, the first user 602, the second user 604, and the third user may be in a first spatial group within the multi-user communication session. In some examples, the first spatial group has one or more characteristics of the spatial group discussed above with reference to FIG. 3. As similarly described above, while the first user 602, the second user 604, and the third user are in the first spatial group within the multi-user communication session, the users have a first spatial arrangement in the shared three-dimensional environment (e.g., represented by the locations of and/or distance between the users 602/604 and the avatar 606 in the overhead view 610 in FIG. 6A) determined by the physical locations of the electronic devices 101a/101b/101c in their respective physical environments. Particularly, the first electronic device 101a, the second electronic device 101b, and the third electronic device 101c experience spatial truth within the first spatial group as dictated by the physical locations of and/or orientations of the first user 602, the second user 604, and the third user, respectively.

In FIG. 6A, while displaying the avatar 606 corresponding to the user of the third electronic device (e.g., the remote user within the multi-user communication session), and without displaying (e.g., while not displaying) virtual content that is shared in the multi-user communication session (e.g., such as a shared virtual object, similar to virtual object 520/525 above), the first electronic device 101a detects an input provided by the first user 602 corresponding to a request to move the avatar 606 in the three-dimensional environment 650A. For example, as shown in FIG. 6A, the first electronic device 101a detects hand 603 of the first user 602 perform an air pinch and drag gesture, optionally while gaze 626 of the first user 602 is directed toward the avatar 606 (or other movement element associated with the avatar 606, such as a grabber bar) in the three-dimensional environment 650A. In some examples, as indicated in FIG. 6A, the input provided by the hand 603 of the first user 602 corresponds to a request to move the avatar 606 leftward in the three-dimensional environment 650A relative to the viewpoint of the first electronic device 101a.

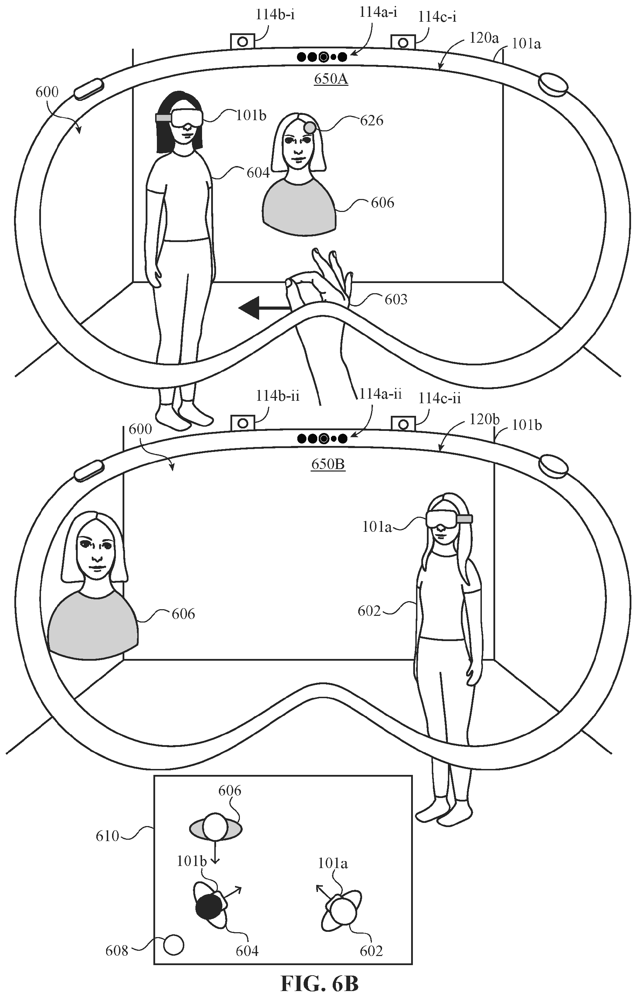

In some examples, in accordance with a determination that the input for moving the avatar 606 is detected by the first electronic device 101a while virtual content (e.g., virtual objects and/or user interfaces) is not shared within the multi-user communication session, the first electronic device 101a (e.g., and the second electronic device 101b) treats the movement of the avatar 606 the same as or similar to movement of singular virtual objects that are shared between local users in a multi-user communication session. For example, as shown in FIG. 6B, in response to detecting the input corresponding to the request to move the avatar 606 in the three-dimensional environment 650A, the first electronic device 101a moves the avatar 606 in the three-dimensional environment 650A in accordance with the input. Particularly, as shown in FIG. 6B, the first electronic device 101a moves the avatar 606 leftward relative to the viewpoint of the first electronic device 101a in the three-dimensional environment 650A in accordance with the movement of the hand 603. Further, as illustrated in FIG. 6B, because the first electronic device 101a and the second electronic device 101b are in the multi-user communication session, the movement of the avatar 606 in the three-dimensional environment 650A by the first electronic device 101a causes the second electronic device 101b to move the avatar 606 in the three-dimensional environment 650B. For example, as shown in FIG. 6B, the second electronic device 101b moves the avatar 606 leftward in the three-dimensional environment 650A relative to the viewpoint of the second electronic device 101b in accordance with the movement of the avatar 606 in the three-dimensional environment 650A at the first electronic device 101a (e.g., by a corresponding amount (e.g., distance)).

In some examples, as shown in FIG. 6B, during the movement of the avatar 606 in the three-dimensional environment 650A (e.g., while continuing to detect the movement of the hand 603 and/or the air pinch gesture), the first electronic device 101a forgoes activating spatial refinement (e.g., described previously herein) in the multi-user communication session. Particularly, as illustrated in FIG. 6B, though the avatar 606 is moved by the second electronic device 101b in the three-dimensional environment 650B in accordance with the movement of the avatar 606 in the three-dimensional environment 650A, the first electronic device 101a forgoes displaying a visual element indicating the bounds and/or extend of the movement of the avatar 606 (e.g., such as the visual element 545 described previously above) and forgoes reducing the visual prominence of the portions of the three-dimensional environment 650A surrounding the avatar 606 and/or the second user 604 (e.g., the passthrough of the physical environment 600). Additionally, as shown in FIG. 6B, the first electronic device 101a forgoes replacing display of the avatar 606 with a two-dimensional representation (e.g., such as a spatial coin, similar to spatial coin 512 discussed above) during the movement of the avatar 606 in the three-dimensional environment 650A. It is understood that, in some examples, if the first electronic device 101a, the second electronic device 101b, and the third electronic device are sharing virtual content (e.g., while the avatar 606 is displayed in the three-dimensional environments 650A/650B) within the multi-user communication session, the movement and/or display of the avatar 606 and the shared virtual content would follow the behaviors and/or operations described above with reference to FIGs. 5A-5H.

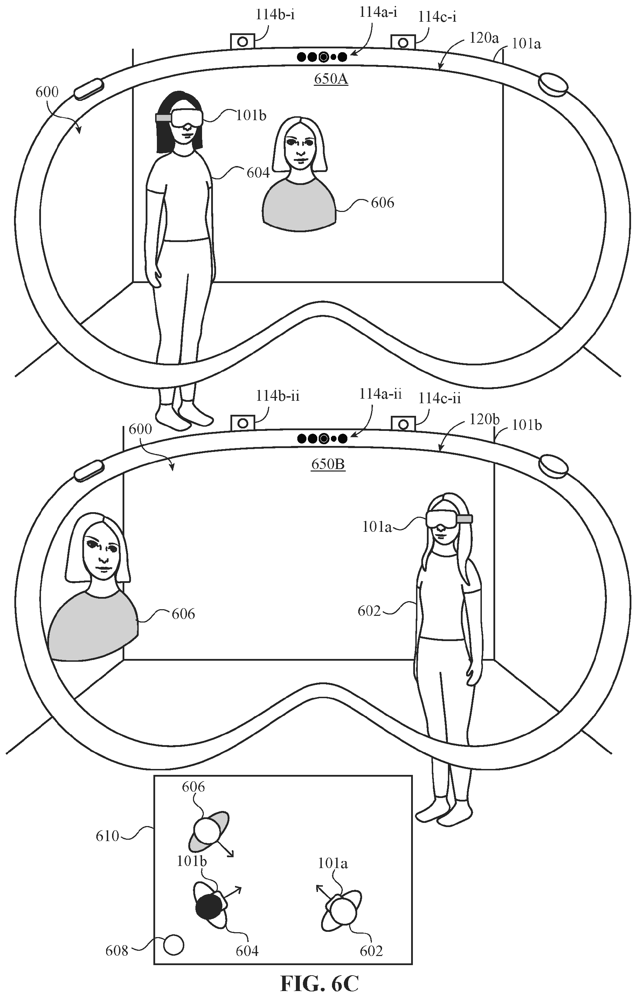

From FIG. 6B to FIG. 6C, the first electronic device 101a detects a conclusion (e.g., termination) of the input provided by the first user 602 corresponding to the request to move the avatar 606 in the three-dimensional environment 650A. For example, as shown in FIG. 6C, the first electronic device 101a detects a release of the air pinch gesture performed by the hand 603 of the first user 602 and/or detects the hand 603 return to a resting state relative to the viewpoint of the first electronic device 101a (e.g., resting to a side of the body of the first user 602). In some examples, as shown in FIG. 6C, in response to detecting the conclusion of the input provided by the first user 602, the first electronic device 101a concludes the movement of the avatar 606 in the three-dimensional environment 650A. Additionally, as illustrated in the overhead view 610 in FIG. 6C, the first electronic device 101a updates an orientation of the avatar 606 in the three-dimensional environment 650A upon completing the movement and/or while moving the avatar 606 in response to detecting the input provided by the first user 602. For example, as shown in FIG. 6C, the avatar 606 is rotated (e.g., about a vertical axis through the avatar 606 in the three-dimensional environment 650A) such that the avatar 606 faces and/or continues to face toward the group of local users (e.g., the first user 602 and the second user 604) in the multi-user communication session. In some examples, the updated orientation of the avatar 606 corresponds to an average orientation between the orientation of the first electronic device 101a and the orientation of the second electronic device 101b. For example, as illustrated in the overhead view 610 in FIG. 6C, the orientation of the avatar 606, as indicated by the arrow extending from the avatar 606, corresponds to an average of the forward directions of the first user 602, as indicated by the arrow extending from the first electronic device 101a, and the second user 604, as indicated by the arrow extending from the second electronic device 101b. Additionally, as similarly discussed above, because the first electronic device 101a and the second electronic device 101b are in the multi-user communication session, the rotation of the avatar 606 (e.g., the updating of the orientation of the avatar 606) in the three-dimensional environment 650A by the first electronic device 101a causes the second electronic device 101b to rotate the avatar 606 in the three-dimensional environment 650B. For example, as shown in FIG. 6C, the second electronic device 101b displays the avatar 606 with an updated orientation in the three-dimensional environment 650A relative to the viewpoint of the second electronic device 101b in accordance with the updated orientation of the avatar 606 in the three-dimensional environment 650A at the first electronic device 101a (e.g., by a corresponding degree of rotation (e.g., angular rotation)).

Accordingly, as outlined above, moving an avatar of a remote user in a shared three-dimensional environment that does not include shared content in response to detecting input corresponding to a request to move the avatar in the shared three-dimensional environment within a multi-user communication session without displaying the visual indications and/or visual feedback associated with activation of spatial refinement in the multi-user communication session (e.g., virtual rings, passthrough occlusion, spatial coins, etc.) helps reduce clutter and/or compactness of virtual elements that are displayed on the display of the electronic device, which reduces the number of virtual objects and elements that are moving in the periphery of the local user, thereby reducing eye strain, as an advantage.

It is understood that the examples shown and described herein are merely exemplary and that additional and/or alternative elements may be provided within the three-dimensional environment for facilitating movement of and/or related interactions directed to virtual objects and visual representations of users within a multi-user communication session. It should be understood that the appearance, shape, form, and size of each of the various user interface elements and objects shown and described herein are exemplary and that alternative appearances, shapes, forms and/or sizes may be provided. For example, the virtual objects representative of application windows (e.g., virtual objects 420, 520, 525) may be provided in alternative shapes than those shown, such as a rectangular shape, circular shape, triangular shape, etc. In some examples, the various selectable affordances (e.g., pills 422/428, grabber bars 435/535, resize element 434) described herein may be selected verbally via user verbal commands (e.g., "select option" or "select virtual object" verbal command). Additionally or alternatively, in some examples, the various options, user interface elements, control elements, etc. described herein may be selected and/or manipulated via user input received via one or more input devices in communication with the electronic device (or electronic devices). For example, selection input may be received via physical input devices, such as a mouse, trackpad, keyboard, etc. in communication with the electronic devices (or electronic devices), or a physical button integrated with the electronic devices (or electronic devices).

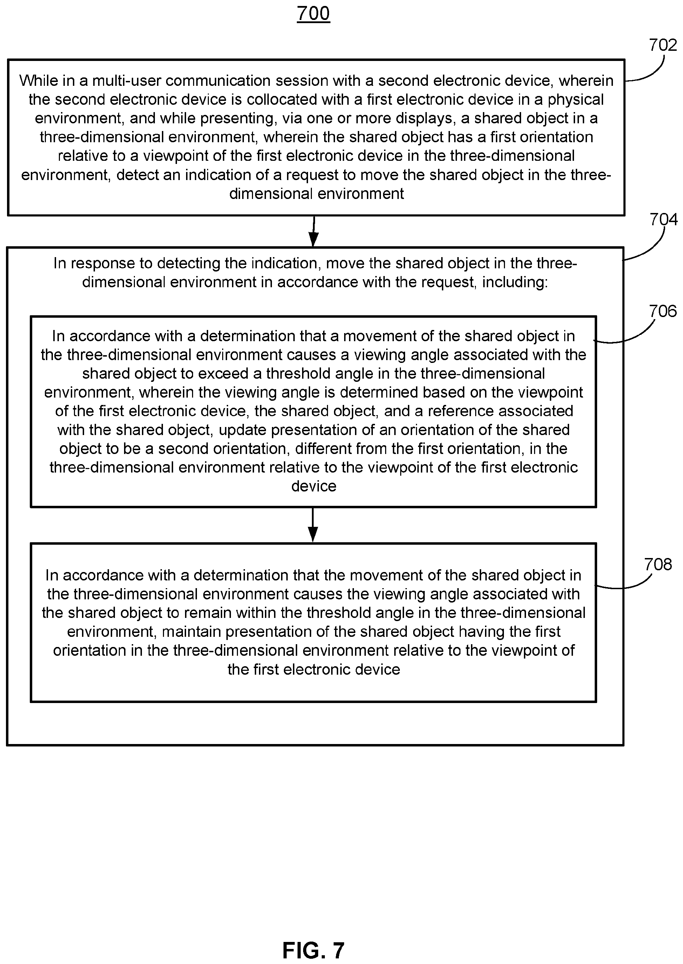

FIG. 7 illustrates a flow diagram illustrating an example process for moving a virtual object in a three-dimensional environment that is shared between collocated users within a multi-user communication session according to some examples of the disclosure. In some examples, process 700 begins at a first electronic device in communication with one or more displays and one or more input devices. In some examples, the first electronic device is collocated with a second electronic device in a physical environment. In some examples, the first electronic device and the second electronic device are optionally a head-mounted display similar or corresponding to electronic device 201 of FIG. 2A and/or electronic devices 201A/201b of FIG. 2C or a mobile electronic device similar or corresponding to electronic device 260 of FIG. 2B. As shown in FIG. 7, in some examples, at 702, while in a multi-user communication session with the second electronic device and while presenting, via the one or more displays, a shared object in a three-dimensional environment, wherein the shared object has a first orientation relative to a coordinate system of the three-dimensional environment, the first electronic device detects an indication of a request to move the shared object in the three-dimensional environment. For example, as illustrated in FIG. 4B, second electronic device 101b detects hand 403 of second user 404 perform an input (e.g., air pinch and drag gesture) corresponding to a request to move virtual object 420 in three-dimensional environment 450B.

In some examples, at 704, in response to detecting the indication, the first electronic device moves the shared object in the three-dimensional environment in accordance with the request. For example, as illustrated in overhead view 410 in FIG. 4E, the second electronic device 101b moves the virtual object 420 in shared three-dimensional environment 450 in accordance with the input provided by the second user 404. In some examples, at 706, in accordance with a determination that a movement of the shared object in the three-dimensional environment causes a viewing angle (e.g., current viewing angle 433 in FIG. 4E) associated with the shared object to exceed a threshold angle (e.g., threshold viewing angle 433a in FIG. 4E) in the three-dimensional environment, wherein the viewing angle is determined based on the viewpoint of the first electronic device, the shared object, and a reference associated with the shared object, the first electronic device updates presentation of an orientation of the shared object to be a second orientation, different from the first orientation, in the three-dimensional environment relative to the coordinate system of the three-dimensional environment. For example, as illustrated in the overhead view 410 in FIG. 4F, the second electronic device 101b rotates the virtual object 420 to update the orientation of the virtual object 420 in the shared three-dimensional environment 450.

In some examples, at 708, in accordance with a determination that the movement of the shared object in the three-dimensional environment causes the viewing angle associated with the shared object to remain within the threshold angle in the three-dimensional environment, the first electronic device maintains presentation of the shared object having the first orientation in the three-dimensional environment relative to the coordinate system of the three-dimensional environment. For example, as illustrated in the overhead view 410 from FIG. 4I to FIG. 4J, the second electronic device 101b maintains the orientation of the virtual object 420 in the shared three-dimensional environment 450.

It is understood that process 700 is an example and that more, fewer, or different operations can be performed in the same or in a different order. Additionally, the operations in process 700 described above are, optionally, implemented by running one or more functional modules in an information processing apparatus such as general-purpose processors (e.g., as described with respect to FIGs. 2A-2C) or application specific chips, and/or by other components of FIGs. 2A-2C.

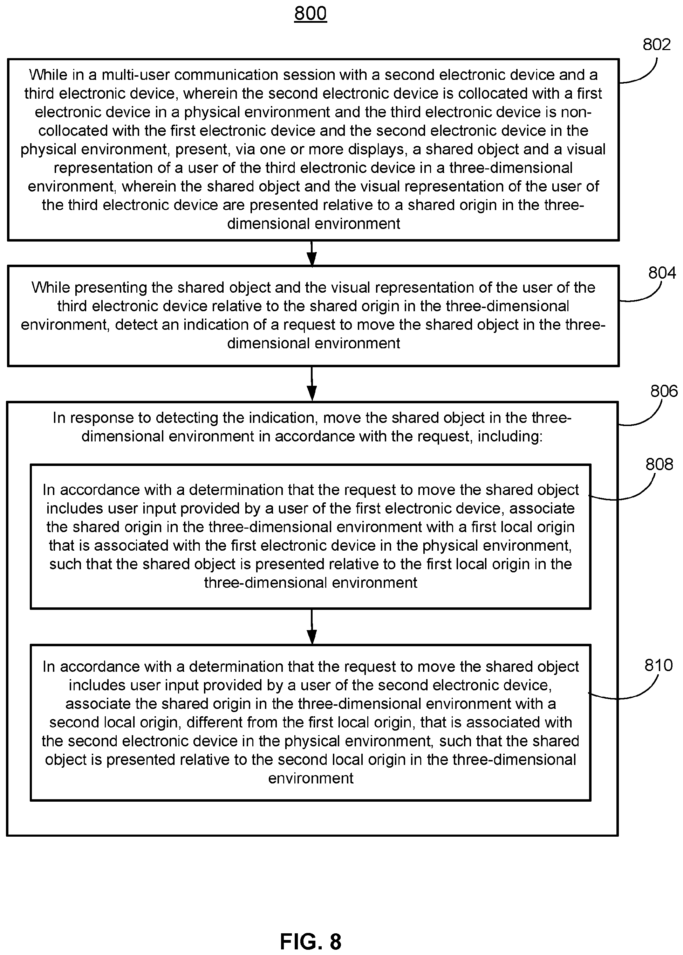

FIG. 8 illustrates a flow diagram illustrating an example process for moving virtual objects in a three-dimensional environment that is shared between collocated and non-collocated users within a multi-user communication session according to some examples of the disclosure. In some examples, process 800 begins at a first electronic device in communication with one or more displays and one or more input devices. In some examples, the first electronic device is collocated with a second electronic device in a physical environment. In some examples, the first electronic device and the second electronic device are optionally a head-mounted display similar or corresponding to electronic device 201 of FIG. 2A and/or electronic devices 201A/201b of FIG. 2C or a mobile electronic device similar or corresponding to electronic device 260 of FIG. 2B. As shown in FIG. 8, in some examples, at 802, while in a multi-user communication session with the second electronic device and a third electronic device, wherein the third electronic device is non-collocated with the first electronic device and the second electronic device in the physical environment, the first electronic device presents, via the one or more displays, a shared object and a visual representation of a user of the third electronic device in a three-dimensional environment, wherein the shared object and the visual representation of the user of the third electronic device are presented relative to a shared origin in the three-dimensional environment. For example, as shown in FIG. 5A, first electronic device 101a is displaying virtual object 520 and avatar 506 in three-dimensional environment 550A, where the virtual object 520 and the avatar 506 are displayed relative to shared origin 530 in overhead view 510.

In some examples, at 804, while presenting the shared object and the visual representation of the user of the third electronic device relative to the shared origin in the three-dimensional environment, the first electronic device detects an indication of a request to move the shared object in the three-dimensional environment. For example, as shown in FIG. 5A, the first electronic device 101a detects an input (e.g., an air pinch and drag gesture) performed by first user 502 corresponding to a request to move the virtual object 520 in the three-dimensional environment 550A.

In some examples, at 806, in response to detecting the indication, the first electronic device moves the shared object in the three-dimensional environment in accordance with the request. For example, as shown in FIG. 5B, the first electronic device 101a moves the virtual object 520 relative to a viewpoint of the first electronic device 101a in accordance with the input provided by the first user 502. In some examples, at 808, in accordance with a determination that the request to move the shared object includes user input provided by a user of the first electronic device (e.g., the input provided by the first user 502 in FIG. 5A), the first electronic device associates the shared origin in the three-dimensional environment with a first local origin that is associated with the first electronic device in the physical environment, such that the shared object is presented relative to the first local origin in the three-dimensional environment. For example, as illustrated in overhead view 510 in FIG. 5D, the shared origin 530 is updated to correspond to first local origin 531 that is associated with the first user 502 in physical environment 500.

In some examples, at 810, in accordance with a determination that the request to move the shared object includes user input provided by a user of the second electronic device (e.g., the input provided by second user 504 in FIG. 5F), the first electronic device associates the shared origin in the three-dimensional environment with a second local origin, different from the first local origin, that is associated with the second electronic device in the physical environment, such that the shared object is presented relative to the second local origin in the three-dimensional environment. For example, as illustrated in the overhead view 510 in FIG. 5G, the shared origin 530 is updated to correspond to second local origin 532 that is associated with the second user 504 in the physical environment 500.

It is understood that process 800 is an example and that more, fewer, or different operations can be performed in the same or in a different order. Additionally, the operations in process 800 described above are, optionally, implemented by running one or more functional modules in an information processing apparatus such as general-purpose processors (e.g., as described with respect to FIGs. 2A-2C) or application specific chips, and/or by other components of FIGs. 2A-2C.

Therefore, according to the above, some examples of the disclosure are directed to a method, comprising at a first electronic device in communication with one or more displays and one or more input devices, wherein the first electronic device is collocated with a second electronic device in a physical environment: while in a multi-user communication session with the second electronic device and while presenting, via the one or more displays, a shared object in a three-dimensional environment, wherein the shared object has a first orientation relative to a coordinate system of the three-dimensional environment, detecting an indication of a request to move the shared object in the three-dimensional environment; and in response to detecting the indication, moving the shared object in the three-dimensional environment in accordance with the request, including, in accordance with a determination that a movement of the shared object in the three-dimensional environment causes a viewing angle associated with the shared object to exceed a threshold angle in the three-dimensional environment, wherein the viewing angle is determined based on the viewpoint of the first electronic device, the shared object, and a reference associated with the shared object, updating presentation of an orientation of the shared object to be a second orientation, different from the first orientation, relative to the coordinate system of the three-dimensional environment, and in accordance with a determination that the movement of the shared object in the three-dimensional environment causes the viewing angle associated with the shared object to remain within the threshold angle in the three-dimensional environment, maintaining presentation of the shared object having the first orientation relative to the coordinate system of the three-dimensional environment.

Additionally or alternatively, in some examples, the shared object corresponds to a virtual window that includes content associated with a respective application running on the first electronic device. Additionally or alternatively, in some examples, the reference associated with the shared object corresponds to a first line defined between a respective portion of the shared object and a center point associated with the first electronic device and the second electronic device in the physical environment. Additionally or alternatively, in some examples, the respective portion of the shared object corresponds to a geometric center of the shared object. Additionally or alternatively, in some examples, the threshold angle is measured between the first line and a second line, the second line being defined between the respective portion of the shared object and the viewpoint of the first electronic device in the three-dimensional environment. Additionally or alternatively, in some examples, the threshold angle is an acute angle. Additionally or alternatively, in some examples, the center point associated with the first electronic device and the second electronic device in the physical environment corresponds to an average location between a first location of the first electronic device and a second location of the second electronic device in the three-dimensional environment. Additionally or alternatively, in some examples, in accordance with a determination that a spatial arrangement of the first location and the second location is a first spatial arrangement, the average location is a first respective location in the three-dimensional environment, and in accordance with a determination that the spatial arrangement is a second spatial arrangement, different from the first spatial arrangement, the average location is a second respective location, different from the first respective location, in the three-dimensional environment. Additionally or alternatively, in some examples, the viewing angle associated with the shared object is measured between a first line that is normal to a front surface of the shared object and a second line, the second line being defined between the respective portion of the shared object and the viewpoint of the first electronic device in the three-dimensional environment.

Additionally or alternatively, in some examples, presenting the shared object with the second orientation relative to the coordinate system of the three-dimensional environment causes the viewing angle associated with the shared object to be within the threshold angle in the three-dimensional environment. Additionally or alternatively, in some examples, moving the shared object in the three-dimensional environment in accordance with the request includes: in accordance with a determination that the request to move the shared object in the three-dimensional environment corresponds to a request to move the shared object a first distance relative to the viewpoint of the first electronic device, moving the shared object the first distance relative to the viewpoint of the first electronic device in accordance with the request; and in accordance with a determination that the request to move the shared object in the three-dimensional environment corresponds to a request to move the shared object a second distance, different from the first distance, relative to the viewpoint of the first electronic device, moving the shared object the second distance relative to the viewpoint of the first electronic device in accordance with the request. Additionally or alternatively, in some examples, the shared object includes respective content, and while the shared object has the first orientation relative to the coordinate system of the three-dimensional environment prior to detecting the indication, the respective content is visible from the viewpoint of the first electronic device in the three-dimensional environment. Additionally or alternatively, in some examples, when presenting the shared object with the second orientation relative to the coordinate system of the three-dimensional environment, the respective content remains visible from the viewpoint of the first electronic device in the three-dimensional environment. Additionally or alternatively, in some examples, the first electronic device and the second electronic device each include a head-mounted display.

Some examples of the disclosure are directed to a method, comprising at a first electronic device in communication with one or more displays and one or more input devices, wherein the first electronic device is collocated with a second electronic device in a physical environment: while in a multi-user communication session with the second electronic device and a third electronic device, wherein the third electronic device is non-collocated with the first electronic device and the second electronic device in the physical environment, presenting, via the one or more displays, a shared object and a visual representation of a user of the third electronic device in a three-dimensional environment, wherein the shared object and the visual representation of the user of the third electronic device are presented relative to a shared origin in the three-dimensional environment; while presenting the shared object and the visual representation of the user of the third electronic device relative to the shared origin in the three-dimensional environment, detecting an indication of a request to move the shared object in the three-dimensional environment; and in response to detecting the indication, moving the shared object in the three-dimensional environment in accordance with the request, including, in accordance with a determination that the request to move the shared object includes user input provided by a user of the first electronic device, associating the shared origin in the three-dimensional environment with a first local origin that is associated with the first electronic device in the physical environment, such that the shared object is presented relative to the first local origin in the three-dimensional environment, and in accordance with a determination that the request to move the shared object includes user input provided by a user of the second electronic device, associating the shared origin in the three-dimensional environment with a second local origin, different from the first local origin, that is associated with the second electronic device in the physical environment, such that the shared object is presented relative to the second local origin in the three-dimensional environment.

Additionally or alternatively, in some examples, the method further comprises, in response to detecting the indication, moving the visual representation of the user of the third electronic device concurrently with the shared object in the three-dimensional environment in accordance with the request, wherein: in accordance with the determination that the request to move the shared object includes user input provided by the user of the first electronic device, the visual representation of the user of the third electronic device is presented relative to the first local origin in the three-dimensional environment; and in accordance with the determination that the request to move the shared object includes user input provided by the user of the second electronic device, the visual representation of the user of the third electronic device is presented relative to the second local origin in the three-dimensional environment. Additionally or alternatively, in some examples, the shared object is presented with a movement user interface element in the three-dimensional environment, and detecting the indication of the request to move the shared object includes detecting user input directed to the movement user interface element in the three-dimensional environment. Additionally or alternatively, in some examples, the one or more input devices include a hardware element that is selectable to update a spatial arrangement of the shared object and the visual representation of the user of the third electronic device in the three-dimensional environment relative to a viewpoint of the first electronic device, and detecting the indication of the request to move the shared object includes detecting user input directed to the hardware element. Additionally or alternatively, in some examples, the method further comprises: while presenting the shared object and the visual representation of the user of the third electronic device relative to the shared origin in the three-dimensional environment, detecting an indication from the second electronic device of a request to share content in the three-dimensional environment; and in response to detecting the indication from the second electronic device, in accordance with a determination that the request is accepted, replacing presentation, via the one or more displays, of the shared object with a second shared object corresponding to the content shared by the second electronic device, and associating the shared origin in the three-dimensional environment with the second local origin that is associated with the second electronic device in the physical environment.

Additionally or alternatively, in some examples, the method further comprises: while presenting the shared object and the visual representation of the user of the third electronic device relative to the shared origin in the three-dimensional environment, detecting, via the one or more input devices, an input corresponding to a request to resize the shared object in the three-dimensional environment; and in response to detecting the input, in accordance with a determination that one or more resizing criteria are satisfied, updating presentation of a size of the shared object in the three-dimensional environment in accordance with the input, and in accordance with a determination that the one or more resizing criteria are not satisfied, maintaining presentation of the size of the shared object in the three-dimensional environment. Additionally or alternatively, in some examples, the one or more resizing criteria include a criterion that is satisfied when the shared object is being shared within the multi-user communication session via a first sharing mode and that is not satisfied when the shared object is being shared via a second sharing mode, different from the first sharing mode. Additionally or alternatively, in some examples, the determination that the shared object is being shared within the multi-user communication session via the first sharing mode is in accordance with a determination that the first electronic device, the second electronic device, and the third electronic device are presenting the shared object individually via a first application. Additionally or alternatively, in some examples, the one or more resizing criteria include a criterion that is satisfied when the user of the third electronic device is participating in the multi-user communication session non-spatially and that is not satisfied when the user of the third electronic device is participating in the multi-user communication session spatially. Additionally or alternatively, in some examples, while the user of the third electronic device is participating in the multi-user communication session spatially, the visual representation of the user of the third electronic device corresponds to a three-dimensional virtual avatar of the user of the third electronic device.

Additionally or alternatively, in some examples, the method further comprises: while presenting the shared object and the visual representation of the user of the third electronic device relative to the shared origin in the three-dimensional environment, detecting an indication of a request to cease display of the shared object in the three-dimensional environment; and in response to detecting the indication, ceasing presentation, via the one or more displays, of the shared object in the three-dimensional environment, and maintaining presentation of the visual representation of the user of the third electronic device relative to the shared origin in the three-dimensional environment. Additionally or alternatively, in some examples, the method further comprises: after ceasing presentation of the shared object in the three-dimensional environment and while presenting the visual representation of the user of the third electronic device relative to the shared origin in the three-dimensional environment, detecting, via the one or more input devices, an input corresponding to a request to move the visual representation of the user of the third electronic device in the three-dimensional environment: and in response to detecting the input, moving the visual representation of the user of the third electronic device in the three-dimensional environment in accordance with the input. Additionally or alternatively, in some examples, the method further comprises: while moving the shared object in the three-dimensional environment in accordance with the request in response to detecting the indication, presenting, via the one or more displays, the visual representation of the user of the third electronic device as a two-dimensional representation of the user of the third electronic device in the three-dimensional environment; and while moving the visual representation of the user of the third electronic device in the three-dimensional environment in accordance with the input, forgoing presenting the visual representation of the user of the third electronic device as the two-dimensional representation in the three-dimensional environment. Additionally or alternatively, in some examples, the method further comprises, while moving the visual representation of the user of the third electronic device in the three-dimensional environment in accordance with the input, updating presentation of the visual representation of the user of the third electronic device to have an orientation that is oriented toward a center point in the three-dimensional environment, wherein the center point in the three-dimensional environment is based on a first location of the first electronic device and a second location of the second electronic device in the physical environment from a viewpoint of the first electronic device.

Additionally or alternatively, in some examples, the multi-user communication session further includes a fourth electronic device that is collocated with the third electronic device in a second physical environment and that is non-collocated with the first electronic device and the second electronic device in the physical environment. In some examples, the method further comprising: while presenting the shared object, the visual representation of the user of the third electronic device, and a visual representation of a user of the fourth electronic device relative to the shared origin in the three-dimensional environment, detecting an indication that the second electronic device is no longer in the multi-user communication session; and in response to detecting the indication, revoking access to the shared object from the second electronic device, and maintaining presentation of the shared object, the visual representation of the user of the third electronic device, and the visual representation of the user of the fourth electronic device relative to the shared origin in the three-dimensional environment. Additionally or alternatively, in some examples, the method further comprises: after the second electronic device is no longer in the multi-user communication session and while presenting the shared object, the visual representation of the user of the third electronic device, and the visual representation of the user of the fourth electronic device relative to the shared origin in the three-dimensional environment, detecting an indication of input detected by the third electronic device corresponding to a request to move the shared object in the three-dimensional environment; and in response to detecting the indication, replacing presentation, via the one or more displays, of the visual representation of the user of the third electronic device and the visual representation of the user of the fourth electronic device with respective two-dimensional representations in the three-dimensional environment. Additionally or alternatively, in some examples, a two-dimensional representation of the user of the third electronic device is presented with a status indicator of the input detected by the third electronic device in the three-dimensional environment. Additionally or alternatively, in some examples, the method further comprises: after the second electronic device is no longer in the multi-user communication session and while presenting the shared object, the visual representation of the user of the third electronic device, and the visual representation of the user of the fourth electronic device relative to the shared origin in the three-dimensional environment, detecting an indication of input detected by the third electronic device corresponding to a request to move the shared object in the three-dimensional environment; and in response to detecting the indication, replacing presentation, via the one or more displays, of the visual representation of the user of the third electronic device and the visual representation of the user of the fourth electronic device with a two-dimensional representation of a group of the third electronic device and the fourth electronic device in the three-dimensional environment. Additionally or alternatively, in some examples, prior to detecting the indication of the input detected by the third electronic device, the visual representation of the user of the third electronic device is displayed at a first location in the three-dimensional environment from a viewpoint of the first electronic device, and in response to detecting the indication, the two-dimensional representation of the group is presented at the first location in the three-dimensional environment from the viewpoint of the first electronic device.

Some examples of the disclosure are directed to an electronic device, comprising: one or more processors; memory; and one or more programs stored in the memory and configured to be executed by the one or more processors, the one or more programs including instructions for performing any of the above methods.

Some examples of the disclosure are directed to a non-transitory computer readable storage medium storing one or more programs, the one or more programs comprising instructions, which when executed by one or more processors of an electronic device, cause the electronic device to perform any of the above methods.

Some examples of the disclosure are directed to an electronic device, comprising one or more processors, memory, and means for performing any of the above methods.

Some examples of the disclosure are directed to an information processing apparatus for use in an electronic device, the information processing apparatus comprising means for performing any of the above methods.

Exemplary methods, devices, electronic devices, first electronic devices, information processing apparatus, and non-transitory computer-readable storage media are set out in the following items.

### Item list 1:

1. A method comprising:
   at a first electronic device in communication with one or more displays and one or more input devices, wherein the first electronic device is collocated with a second electronic device in a physical environment:
   while in a multi-user communication session with the second electronic device and while presenting, via the one or more displays, a shared object in a three-dimensional environment, wherein the shared object has a first orientation relative to a viewpoint of the first electronic device in the three-dimensional environment, detecting an indication of a request to move the shared object in the three-dimensional environment; and
   in response to detecting the indication, moving the shared object in the three-dimensional environment in accordance with the request, including:
      in accordance with a determination that a movement of the shared object in the three-dimensional environment causes a viewing angle associated with the shared object to exceed a threshold angle in the three-dimensional environment, wherein the viewing angle is determined based on the viewpoint of the first electronic device, the shared object, and a reference associated with the shared object, updating presentation of an orientation of the shared object to be a second orientation, different from the first orientation, in the three-dimensional environment relative to the viewpoint of the first electronic device; and
      in accordance with a determination that the movement of the shared object in the three-dimensional environment causes the viewing angle associated with the shared object to remain within the threshold angle in the three-dimensional environment, maintaining presentation of the shared object having the first orientation in the three-dimensional environment relative to the viewpoint of the first electronic device.
2. The method of item 1, wherein the shared object corresponds to a virtual window that includes content associated with a respective application running on the first electronic device.
3. The method of any of items 1-2, wherein the reference associated with the shared object corresponds to a first line defined between a respective portion of the shared object and a center point associated with the first electronic device and the second electronic device in the physical environment.
4. The method of item 3, wherein the respective portion of the shared object corresponds to a geometric center of the shared object.
5. The method of any of items 3-4, wherein the threshold angle is measured between the first line and a second line, the second line being defined between the respective portion of the shared object and the viewpoint of the first electronic device in the three-dimensional environment.
6. The method of any of items 3-5, wherein the threshold angle is an acute angle.
7. The method of any of items 3-6, wherein the center point associated with the first electronic device and the second electronic device in the physical environment corresponds to an average location between a first location of the first electronic device and a second location of the second electronic device relative to the shared object in the three-dimensional environment.
8. The method of item 7, wherein:
   in accordance with a determination that a spatial arrangement of the first location and the second location is a first spatial arrangement relative to the shared object, the average location is a first respective location relative to the shared object in the three-dimensional environment; and
   in accordance with a determination that the spatial arrangement is a second spatial arrangement, different from the first spatial arrangement, relative to the shared object, the average location is a second respective location, different from the first respective location, relative to the shared object in the three-dimensional environment.
9. The method of any of items 3-8, wherein the viewing angle associated with the shared object is measured between a first line that is normal to a front surface of the shared object and a second line, the second line being defined between the respective portion of the shared object and the viewpoint of the first electronic device in the three-dimensional environment.
10. The method of any of items 1-9, wherein, updating presentation of the orientation of the shared object to be the second orientation in the three-dimensional environment relative to the viewpoint of the first electronic device causes the viewing angle associated with the shared object to be within the threshold angle in the three-dimensional environment.
11. The method of any of items 1-10, wherein moving the shared object in the three-dimensional environment in accordance with the request includes:
   in accordance with a determination that the request to move the shared object in the three-dimensional environment corresponds to a request to move the shared object a first distance relative to the viewpoint of the first electronic device, moving the shared object the first distance relative to the viewpoint of the first electronic device in accordance with the request; and
   in accordance with a determination that the request to move the shared object in the three-dimensional environment corresponds to a request to move the shared object a second distance, different from the first distance, relative to the viewpoint of the first electronic device, moving the shared object the second distance relative to the viewpoint of the first electronic device in accordance with the request.
12. The method of any of items 1-11, wherein:
   the shared object includes respective content; and
   while the shared object has the first orientation relative to the viewpoint of the first electronic device prior to detecting the indication, the respective content is visible from the viewpoint of the first electronic device in the three-dimensional environment.
13. The method of item 12, wherein, when presentation of the orientation of the shared object is updated to be the second orientation in the three-dimensional environment relative to the viewpoint of the first electronic device, the respective content remains visible from the viewpoint of the first electronic device in the three-dimensional environment.
14. The method of any of items 1-13, wherein the first electronic device and the second electronic device each include a head-mounted display.
15. A first electronic device comprising:
   one or more processors;
   memory; and
   one or more programs stored in the memory and configured to be executed by the one or more processors, the one or more programs including instructions for performing a method of any of items 1-14.
16. A non-transitory computer readable storage medium storing one or more programs, the one or more programs comprising instructions, which when executed by one or more processors of a first electronic device, cause the first electronic device to perform a method of any of items 1-14.
17. A first electronic device, comprising:
   one or more processors;
   memory; and
   means for performing a method of any of items 1-14.
18. An information processing apparatus for use in a first electronic device, the information processing apparatus comprising:
   means for performing a method of any of items 1-14.
19. A method comprising:
   at a first electronic device in communication with one or more displays and one or more input devices, wherein the first electronic device is collocated with a second electronic device in a physical environment:
   while in a multi-user communication session with the second electronic device and a third electronic device, wherein the third electronic device is non-collocated with the first electronic device and the second electronic device in the physical environment, presenting, via the one or more displays, a shared object and a visual representation of a user of the third electronic device in a three-dimensional environment, wherein the shared object and the visual representation of the user of the third electronic device are presented relative to a shared origin in the three-dimensional environment;
   while presenting the shared object and the visual representation of the user of the third electronic device relative to the shared origin in the three-dimensional environment, detecting an indication of a request to move the shared object in the three-dimensional environment; and
   in response to detecting the indication, moving the shared object in the three-dimensional environment in accordance with the request, including:
      in accordance with a determination that the request to move the shared object includes user input provided by a user of the first electronic device, associating the shared origin in the three-dimensional environment with a first local origin that is associated with the first electronic device in the physical environment, such that the shared object is presented relative to the first local origin in the three-dimensional environment; and
      in accordance with a determination that the request to move the shared object includes user input provided by a user of the second electronic device, associating the shared origin in the three-dimensional environment with a second local origin, different from the first local origin, that is associated with the second electronic device in the physical environment, such that the shared object is presented relative to the second local origin in the three-dimensional environment.
20. The method of item 19, further comprising:
   in response to detecting the indication:
   moving the visual representation of the user of the third electronic device concurrently with the shared object in the three-dimensional environment in accordance with the request, wherein:
   in accordance with the determination that the request to move the shared object includes user input provided by the user of the first electronic device, the visual representation of the user of the third electronic device is presented relative to the first local origin in the three-dimensional environment; and
   in accordance with the determination that the request to move the shared object includes user input provided by the user of the second electronic device, the visual representation of the user of the third electronic device is presented relative to the second local origin in the three-dimensional environment.
21. The method of any of items 19-20, wherein:
   the shared object is presented with a movement user interface element in the three-dimensional environment; and
   detecting the indication of the request to move the shared object includes detecting user input directed to the movement user interface element in the three-dimensional environment.
22. The method of any of items 19-21, wherein:
   the one or more input devices include a hardware element that is selectable to update a spatial arrangement of the shared object and the visual representation of the user of the third electronic device in the three-dimensional environment relative to a viewpoint of the first electronic device; and
   detecting the indication of the request to move the shared object includes detecting user input directed to the hardware element.
23. The method of any of items 19-22, further comprising:
   while presenting the shared object and the visual representation of the user of the third electronic device relative to the shared origin in the three-dimensional environment, detecting an indication from the second electronic device of a request to share content in the three-dimensional environment; and
   in response to detecting the indication from the second electronic device, in accordance with a determination that the request is accepted:
      replacing presentation, via the one or more displays, of the shared object with a second shared object corresponding to the content shared by the second electronic device; and
      associating the shared origin in the three-dimensional environment with the second local origin that is associated with the second electronic device in the physical environment.
24. The method of any of items 19-23, further comprising:
   while presenting the shared object and the visual representation of the user of the third electronic device relative to the shared origin in the three-dimensional environment, detecting, via the one or more input devices, an input corresponding to a request to resize the shared object in the three-dimensional environment; and
   in response to detecting the input:
      in accordance with a determination that one or more resizing criteria are satisfied, updating presentation of a size of the shared object in the three-dimensional environment in accordance with the input; and
      in accordance with a determination that the one or more resizing criteria are not satisfied, maintaining presentation of the size of the shared object in the three-dimensional environment.
25. The method of item 24, wherein the one or more resizing criteria include a criterion that is satisfied when the shared object is being shared within the multi-user communication session via a first sharing mode and that is not satisfied when the shared object is being shared via a second sharing mode, different from the first sharing mode.
26. The method of item 25, wherein the determination that the shared object is being shared within the multi-user communication session via the first sharing mode is in accordance with a determination that the first electronic device, the second electronic device, and the third electronic device are presenting the shared object individually via a first application.
27. The method of any of items 24-26, wherein the one or more resizing criteria include a criterion that is satisfied when the user of the third electronic device is participating in the multi-user communication session non-spatially and that is not satisfied when the user of the third electronic device is participating in the multi-user communication session spatially.
28. The method of item 27, wherein, while the user of the third electronic device is participating in the multi-user communication session spatially, the visual representation of the user of the third electronic device corresponds to a three-dimensional virtual avatar of the user of the third electronic device.
29. The method of any of items 19-28, further comprising:
   while presenting the shared object and the visual representation of the user of the third electronic device relative to the shared origin in the three-dimensional environment, detecting an indication of a request to cease display of the shared object in the three-dimensional environment; and
   in response to detecting the indication:
      ceasing presentation, via the one or more displays, of the shared object in the three-dimensional environment; and
      maintaining presentation of the visual representation of the user of the third electronic device relative to the shared origin in the three-dimensional environment.
30. The method of item 29, further comprising:
   after ceasing presentation of the shared object in the three-dimensional environment and while presenting the visual representation of the user of the third electronic device relative to the shared origin in the three-dimensional environment, detecting, via the one or more input devices, an input corresponding to a request to move the visual representation of the user of the third electronic device in the three-dimensional environment; and
   in response to detecting the input:
      moving the visual representation of the user of the third electronic device in the three-dimensional environment in accordance with the input.
31. The method of item 30, further comprising:
   while moving the shared object in the three-dimensional environment in accordance with the request in response to detecting the indication, presenting, via the one or more displays, the visual representation of the user of the third electronic device as a two-dimensional representation of the user of the third electronic device in the three-dimensional environment; and
   while moving the visual representation of the user of the third electronic device in the three-dimensional environment in accordance with the input, forgoing presenting the visual representation of the user of the third electronic device as the two-dimensional representation in the three-dimensional environment.
32. The method of any of items 30-31, further comprising:
   while moving the visual representation of the user of the third electronic device in the three-dimensional environment in accordance with the input, updating presentation of the visual representation of the user of the third electronic device to have an orientation that is oriented toward a center point in the three-dimensional environment, wherein the center point in the three-dimensional environment is based on a first location of the first electronic device and a second location of the second electronic device in the physical environment from a viewpoint of the first electronic device.
33. The method of any of items 19-32, wherein the multi-user communication session further includes a fourth electronic device that is collocated with the third electronic device in a second physical environment and that is non-collocated with the first electronic device and the second electronic device in the physical environment, the method further comprising:
   while presenting the shared object, the visual representation of the user of the third electronic device, and a visual representation of a user of the fourth electronic device relative to the shared origin in the three-dimensional environment, detecting an indication that the second electronic device is no longer in the multi-user communication session; and
   in response to detecting the indication:
      revoking access to the shared object from the second electronic device; and
      maintaining presentation of the shared object, the visual representation of the user of the third electronic device, and the visual representation of the user of the fourth electronic device relative to the shared origin in the three-dimensional environment.
34. The method of item 33, further comprising:
   after the second electronic device is no longer in the multi-user communication session and while presenting the shared object, the visual representation of the user of the third electronic device, and the visual representation of the user of the fourth electronic device relative to the shared origin in the three-dimensional environment, detecting an indication of input detected by the third electronic device corresponding to a request to move the shared object in the three-dimensional environment; and
   in response to detecting the indication:
      replacing presentation, via the one or more displays, of the visual representation of the user of the third electronic device and the visual representation of the user of the fourth electronic device with respective two-dimensional representations in the three-dimensional environment.
35. The method of item 34, wherein a two-dimensional representation of the user of the third electronic device is presented with a status indicator of the input detected by the third electronic device in the three-dimensional environment.
36. The method of item 33, further comprising:
   after the second electronic device is no longer in the multi-user communication session and while presenting the shared object, the visual representation of the user of the third electronic device, and the visual representation of the user of the fourth electronic device relative to the shared origin in the three-dimensional environment, detecting an indication of input detected by the third electronic device corresponding to a request to move the shared object in the three-dimensional environment; and
   in response to detecting the indication:
      replacing presentation, via the one or more displays, of the visual representation of the user of the third electronic device and the visual representation of the user of the fourth electronic device with a two-dimensional representation of a group of the third electronic device and the fourth electronic device in the three-dimensional environment.
37. The method of item 36, wherein:
   prior to detecting the indication of the input detected by the third electronic device, the visual representation of the user of the third electronic device is displayed at a first location in the three-dimensional environment from a viewpoint of the first electronic device; and
   in response to detecting the indication, the two-dimensional representation of the group is presented at the first location in the three-dimensional environment from the viewpoint of the first electronic device.
38. A first electronic device comprising:
   one or more processors;
   memory; and
   one or more programs stored in the memory and configured to be executed by the one or more processors, the one or more programs including instructions for performing a method of any of items 19-37.
39. A non-transitory computer readable storage medium storing one or more programs, the one or more programs comprising instructions, which when executed by one or more processors of a first electronic device, cause the first electronic device to perform a method of any of items 19-37.
40. A first electronic device, comprising:
   one or more processors;
   memory; and
   means for performing a method of any of items 19-37.
41. An information processing apparatus for use in a first electronic device, the information processing apparatus comprising:
   means for performing a method of any of items 19-37.

### Item list 2:

1. A method comprising:
   at a first electronic device in communication with one or more displays and one or more input devices, wherein the first electronic device is collocated with a second electronic device in a physical environment:
   while in a multi-user communication session with the second electronic device and while presenting, via the one or more displays, a shared object in a three-dimensional environment, wherein the shared object has a first orientation relative to a coordinate system of the three-dimensional environment, detecting an indication of a request to move the shared object in the three-dimensional environment; and
   in response to detecting the indication, moving the shared object in the three-dimensional environment in accordance with the request, including:
      in accordance with a determination that a movement of the shared object in the three-dimensional environment would cause a viewing angle associated with the shared object to exceed a threshold angle in the three-dimensional environment, wherein the viewing angle is determined based on a viewpoint of the first electronic device, a location of the shared object, and a reference associated with the shared object, presenting the shared object with a second orientation, different from the first orientation, relative to the coordinate system of the three-dimensional environment; and
      in accordance with a determination that the movement of the shared object in the three-dimensional environment would cause the viewing angle associated with the shared object to remain within the threshold angle in the three-dimensional environment, maintaining presentation of the shared object having the first orientation relative to the coordinate system of the three-dimensional environment.
2. The method of item 1, wherein the reference associated with the shared object corresponds to a first line defined between a respective portion of the shared object and a center point associated with the first electronic device and the second electronic device in the physical environment.
3. The method of item 2, wherein the respective portion of the shared object corresponds to a geometric center of the shared object.
4. The method of item 2, wherein the threshold angle is measured between the first line and a second line, the second line being defined between the respective portion of the shared object and the viewpoint of the first electronic device in the three-dimensional environment.
5. The method of item 2, wherein the viewing angle associated with the shared object is measured between a first line that is normal to a front surface of the shared object at the respective portion and a second line, the second line being defined between the respective portion of the shared object and the viewpoint of the first electronic device in the three-dimensional environment.
6. The method of item 1, wherein, presenting the shared object with the second orientation relative to the coordinate system of the three-dimensional environment causes the viewing angle associated with the shared object to be within the threshold angle in the three-dimensional environment.
7. The method of item 1, wherein moving the shared object in the three-dimensional environment in accordance with the request includes:
   in accordance with a determination that the request to move the shared object in the three-dimensional environment corresponds to a request to move the shared object a first distance relative to the viewpoint of the first electronic device, moving the shared object the first distance relative to the viewpoint of the first electronic device in accordance with the request; and
   in accordance with a determination that the request to move the shared object in the three-dimensional environment corresponds to a request to move the shared object a second distance, different from the first distance, relative to the viewpoint of the first electronic device, moving the shared object the second distance relative to the viewpoint of the first electronic device in accordance with the request.
8. The method of item 1, wherein:
   the shared object includes respective content;
   while the shared object has the first orientation relative to the coordinate system of the three-dimensional environment prior to detecting the indication, the respective content is visible from the viewpoint of the first electronic device in the three-dimensional environment; and
   when presenting the shared object with the second orientation relative to the coordinate system of the three-dimensional environment, the respective content remains visible from the viewpoint of the first electronic device in the three-dimensional environment.
9. A first electronic device comprising:
   one or more processors;
   memory; and
   one or more programs stored in the memory and configured to be executed by the one or more processors, the one or more programs including instructions for performing a method comprising:
      while in a multi-user communication session with a second electronic device, wherein the first electronic device is collocated with the second electronic device in a physical environment, and while presenting, via one or more displays, a shared object in a three-dimensional environment, wherein the shared object has a first orientation relative to a coordinate system of the three-dimensional environment, detecting an indication of a request to move the shared object in the three-dimensional environment; and
      in response to detecting the indication, moving the shared object in the three-dimensional environment in accordance with the request, including:
         in accordance with a determination that a movement of the shared object in the three-dimensional environment would cause a viewing angle associated with the shared object to exceed a threshold angle in the three-dimensional environment, wherein the viewing angle is determined based on a viewpoint of the first electronic device, a location of the shared object, and a reference associated with the shared object, presenting the shared object with a second orientation, different from the first orientation, relative to the coordinate system of the three-dimensional environment; and
         in accordance with a determination that the movement of the shared object in the three-dimensional environment would cause the viewing angle associated with the shared object to remain within the threshold angle in the three-dimensional environment, maintaining presentation of the shared object having the first orientation relative to the coordinate system of the three-dimensional environment.
10. The first electronic device of item 9, wherein the reference associated with the shared object corresponds to a first line defined between a respective portion of the shared object and a center point associated with the first electronic device and the second electronic device in the physical environment.
11. The first electronic device of item 10, wherein the respective portion of the shared object corresponds to a geometric center of the shared object.
12. The first electronic device of item 10, wherein the threshold angle is measured between the first line and a second line, the second line being defined between the respective portion of the shared object and the viewpoint of the first electronic device in the three-dimensional environment.
13. The first electronic device of item 10, wherein the viewing angle associated with the shared object is measured between a first line that is normal to a front surface of the shared object at the respective portion and a second line, the second line being defined between the respective portion of the shared object and the viewpoint of the first electronic device in the three-dimensional environment.
14. The first electronic device of item 9, wherein, presenting the shared object with the second orientation relative to the coordinate system of the three-dimensional environment causes the viewing angle associated with the shared object to be within the threshold angle in the three-dimensional environment.
15. The first electronic device of item 9, wherein moving the shared object in the three-dimensional environment in accordance with the request includes:
   in accordance with a determination that the request to move the shared object in the three-dimensional environment corresponds to a request to move the shared object a first distance relative to the viewpoint of the first electronic device, moving the shared object the first distance relative to the viewpoint of the first electronic device in accordance with the request; and
   in accordance with a determination that the request to move the shared object in the three-dimensional environment corresponds to a request to move the shared object a second distance, different from the first distance, relative to the viewpoint of the first electronic device, moving the shared object the second distance relative to the viewpoint of the first electronic device in accordance with the request.
16. The first electronic device of item 9, wherein:
   the shared object includes respective content;
   while the shared object has the first orientation relative to the coordinate system of the three-dimensional environment prior to detecting the indication, the respective content is visible from the viewpoint of the first electronic device in the three-dimensional environment; and
   when presenting the shared object with the second orientation relative to the coordinate system of the three-dimensional environment, the respective content remains visible from the viewpoint of the first electronic device in the three-dimensional environment.
17. A non-transitory computer readable storage medium storing one or more programs, the one or more programs comprising instructions, which when executed by one or more processors of a first electronic device, cause the first electronic device to perform a method comprising:
   while in a multi-user communication session with a second electronic device, wherein the first electronic device is collocated with the second electronic device in a physical environment, and while presenting, via one or more displays, a shared object in a three-dimensional environment, wherein the shared object has a first orientation relative to a coordinate system of the three-dimensional environment, detecting an indication of a request to move the shared object in the three-dimensional environment; and
   in response to detecting the indication, moving the shared object in the three-dimensional environment in accordance with the request, including:
      in accordance with a determination that a movement of the shared object in the three-dimensional environment would cause a viewing angle associated with the shared object to exceed a threshold angle in the three-dimensional environment, wherein the viewing angle is determined based on a viewpoint of the first electronic device, a location of the shared object, and a reference associated with the shared object, presenting the shared object with a second orientation, different from the first orientation, relative to the coordinate system of the three-dimensional environment; and
      in accordance with a determination that the movement of the shared object in the three-dimensional environment would cause the viewing angle associated with the shared object to remain within the threshold angle in the three-dimensional environment, maintaining presentation of the shared object having the first orientation relative to the coordinate system of the three-dimensional environment.
18. The non-transitory computer readable storage medium of item 17, wherein the reference associated with the shared object corresponds to a first line defined between a respective portion of the shared object and a center point associated with the first electronic device and the second electronic device in the physical environment.
19. The non-transitory computer readable storage medium of item 18, wherein the respective portion of the shared object corresponds to a geometric center of the shared object.
20. The non-transitory computer readable storage medium of item 18, wherein the threshold angle is measured between the first line and a second line, the second line being defined between the respective portion of the shared object and the viewpoint of the first electronic device in the three-dimensional environment.
21. The non-transitory computer readable storage medium of item 18, wherein the viewing angle associated with the shared object is measured between a first line that is normal to a front surface of the shared object at the respective portion and a second line, the second line being defined between the respective portion of the shared object and the viewpoint of the first electronic device in the three-dimensional environment.
22. The non-transitory computer readable storage medium of item 17, wherein, presenting the shared object with the second orientation relative to the coordinate system of the three-dimensional environment causes the viewing angle associated with the shared object to be within the threshold angle in the three-dimensional environment.
23. The non-transitory computer readable storage medium of item 17, wherein moving the shared object in the three-dimensional environment in accordance with the request includes:
   in accordance with a determination that the request to move the shared object in the three-dimensional environment corresponds to a request to move the shared object a first distance relative to the viewpoint of the first electronic device, moving the shared object the first distance relative to the viewpoint of the first electronic device in accordance with the request; and
   in accordance with a determination that the request to move the shared object in the three-dimensional environment corresponds to a request to move the shared object a second distance, different from the first distance, relative to the viewpoint of the first electronic device, moving the shared object the second distance relative to the viewpoint of the first electronic device in accordance with the request.
24. The non-transitory computer readable storage medium of item 17, wherein:
   the shared object includes respective content;
   while the shared object has the first orientation relative to the coordinate system of the three-dimensional environment prior to detecting the indication, the respective content is visible from the viewpoint of the first electronic device in the three-dimensional environment; and
   when presenting the shared object with the second orientation relative to the coordinate system of the three-dimensional environment, the respective content remains visible from the viewpoint of the first electronic device in the three-dimensional environment.

The foregoing description, for purpose of explanation, has been described with reference to specific examples. However, the illustrative descriptions above are not intended to be exhaustive or to limit the disclosure to the precise forms disclosed. Many modifications and variations are possible in view of the above teachings. The examples were chosen and described in order to best explain the principles of the disclosure and its practical applications, to thereby enable others skilled in the art to best use the disclosure and various described examples with various modifications as are suited to the particular use contemplated.

## Claims

1. A method comprising:
at a first electronic device in communication with one or more displays and one or more input devices, wherein the first electronic device is collocated with a second electronic device in a physical environment:
while in a multi-user communication session with the second electronic device and while presenting, via the one or more displays, a shared object in a three-dimensional environment, wherein the shared object has a first orientation relative to a coordinate system of the three-dimensional environment, detecting an indication of a request to move the shared object in the three-dimensional environment; and
in response to detecting the indication, moving the shared object in the three-dimensional environment in accordance with the request, including:
in accordance with a determination that a movement of the shared object in the three-dimensional environment would cause a viewing angle associated with the shared object to exceed a threshold angle in the three-dimensional environment, wherein the viewing angle is determined based on a viewpoint of the first electronic device, a location of the shared object, and a reference associated with the shared object, presenting the shared object with a second orientation, different from the first orientation, relative to the coordinate system of the three-dimensional environment; and
in accordance with a determination that the movement of the shared object in the three-dimensional environment would cause the viewing angle associated with the shared object to remain within the threshold angle in the three-dimensional environment, maintaining presentation of the shared object having the first orientation relative to the coordinate system of the three-dimensional environment.

2. The method of claim 1, wherein the shared object corresponds to a virtual window that includes content associated with a respective application running on the first electronic device.

3. The method of any of claims 1-2, wherein the reference associated with the shared object corresponds to a first line defined between a respective portion of the shared object and a center point associated with the first electronic device and the second electronic device in the physical environment.

4. The method of claim 3, wherein the respective portion of the shared object corresponds to a geometric center of the shared object.

5. The method of any of claims 3-4, wherein the threshold angle is measured between the first line and a second line, the second line being defined between the respective portion of the shared object and the viewpoint of the first electronic device in the three-dimensional environment.

6. The method of any of claims 3-5, wherein the threshold angle is an acute angle.

7. The method of any of claims 3-6, wherein the center point associated with the first electronic device and the second electronic device in the physical environment corresponds to an average location between a first location of the first electronic device and a second location of the second electronic device in the three-dimensional environment.

8. The method of claim 7, wherein:
in accordance with a determination that a spatial arrangement of the first location and the second location is a first spatial arrangement, the average location is a first respective location in the three-dimensional environment; and
in accordance with a determination that the spatial arrangement is a second spatial arrangement, different from the first spatial arrangement, the average location is a second respective location, different from the first respective location, in the three-dimensional environment.

9. The method of any of claims 3-8, wherein the viewing angle associated with the shared object is measured between a first line that is normal to a front surface of the shared object at the respective portion and a second line, the second line being defined between the respective portion of the shared object and the viewpoint of the first electronic device in the three-dimensional environment.

10. The method of any of claims 1-9, wherein, presenting the shared object with the second orientation relative to the coordinate system of the three-dimensional environment causes the viewing angle associated with the shared object to be within the threshold angle in the three-dimensional environment.

11. The method of any of claims 1-10, wherein moving the shared object in the three-dimensional environment in accordance with the request includes:
in accordance with a determination that the request to move the shared object in the three-dimensional environment corresponds to a request to move the shared object a first distance relative to the viewpoint of the first electronic device, moving the shared object the first distance relative to the viewpoint of the first electronic device in accordance with the request; and
in accordance with a determination that the request to move the shared object in the three-dimensional environment corresponds to a request to move the shared object a second distance, different from the first distance, relative to the viewpoint of the first electronic device, moving the shared object the second distance relative to the viewpoint of the first electronic device in accordance with the request.

12. The method of any of claims 1-11, wherein:
the shared object includes respective content; and
while the shared object has the first orientation relative to the coordinate system of the three-dimensional environment prior to detecting the indication, the respective content is visible from the viewpoint of the first electronic device in the three-dimensional environment.

13. The method of claim 12, wherein, when presenting the shared object with the second orientation relative to the coordinate system of the three-dimensional environment, the respective content remains visible from the viewpoint of the first electronic device in the three-dimensional environment.

14. A first electronic device comprising:
one or more processors;
memory; and
one or more programs stored in the memory and configured to be executed by the one or more processors, the one or more programs including instructions for performing a method of any of claims 1-13.

15. A non-transitory computer readable storage medium storing one or more programs, the one or more programs comprising instructions, which when executed by one or more processors of a first electronic device, cause the first electronic device to perform a method of any of claims 1-13.
